(19) Europäisches Patentamt
European Patent Office
Office européen des brevets

(11) **EP 3 960 773 B1**

(12) **EUROPEAN PATENT SPECIFICATION**

(45) Date of publication and mention of the grant of the patent:
**16.07.2025 Bulletin 2025/29**

(21) Application number: **20795349.8**

(22) Date of filing: **27.04.2020**

(51) International Patent Classification (IPC):
***C08F 6/20*** $^{(2006.01)}$ ***C08F 14/18*** $^{(2006.01)}$
***C08F 259/08*** $^{(2006.01)}$ ***C08L 27/18*** $^{(2006.01)}$
***C08F 2/26*** $^{(2006.01)}$ ***C08F 2/44*** $^{(2006.01)}$
***C08F 116/14*** $^{(2006.01)}$ ***C08F 114/26*** $^{(2006.01)}$

(52) Cooperative Patent Classification (CPC):
(C-Sets available)
**C08F 116/14; C08F 2/44; C08F 6/20; C08F 14/26; C08F 114/26; C08L 27/18** (Cont.)

(86) International application number:
**PCT/JP2020/018042**

(87) International publication number:
**WO 2020/218620 (29.10.2020 Gazette 2020/44)**

(54) **METHOD FOR PRODUCING AQUEOUS FLUOROPOLYMER DISPERSION, DRAINAGE TREATMENT METHOD, AND AQUEOUS FLUOROPOLYMER DISPERSION**

VERFAHREN ZUR HERSTELLUNG EINER WÄSSRIGEN FLUORPOLYMERDISPERSION, ENTWÄSSERUNGSBEHANDLUNGSVERFAHREN UND WÄSSRIGE FLUORPOLYMERDISPERSION

PROCÉDÉ DE PRODUCTION D’UNE DISPERSION AQUEUSE DE FLUOROPOLYMÈRE, PROCÉDÉ DE TRAITEMENT DE DRAINAGE ET DISPERSION AQUEUSE DE FLUOROPOLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2019 JP 2019085978**

(43) Date of publication of application:
**02.03.2022 Bulletin 2022/09**

(73) Proprietor: **Daikin Industries, Ltd.**
**Osaka-shi, Osaka 530-0001 (JP)**

(72) Inventors:
- **YONEDA, Satoru**
  **Osaka-shi, Osaka 530-8323 (JP)**
- **HIGASHI, Masahiro**
  **Osaka-shi, Osaka 530-8323 (JP)**
- **ISHIHARA, Sumi**
  **Osaka-shi, Osaka 530-8323 (JP)**
- **YOSHIDA, Hirotoshi**
  **Osaka-shi, Osaka 530-8323 (JP)**
- **FUJIMOTO, Yohei**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 911 357**
**WO-A1-2018/167190**
**WO-A1-2019/168183**
**WO-A1-98/36017**
**JP-A- 2003 286 379**
**JP-A- 2008 545 873**
**JP-A- H11 181 009**
**JP-A- S55 120 630**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 6/20, C08L 27/18;**
**C08F 14/26, C08F 2/26;**
**C08L 27/18, C08L 29/10**

## Description

### TECHNICAL FIELD

The present disclosure relates to a method for producing a fluoropolymer aqueous dispersion.

### BACKGROUND ART

In the production of fluoropolymers, methods using specific fluorine-containing polymers are known.

For example, Patent Document 1 discloses a method for producing an aqueous dispersion containing rod-shaped fine particles of polytetrafluoroethylene having an average aspect ratio of 2 or more, which includes polymerizing tetrafluoroethylene in the presence of a polymer containing a polymerized unit represented by the formula 1 or a copolymer containing a polymerized unit represented by the formula 1 and a polymerized unit represented by the formula 2, provided that the polymerized unit represented by the formula 1 is 40 mol% or more based on all polymerized units.

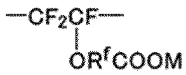 ··· Formula 1

$-CF_2CFX-$ Formula 2

wherein in the formula 1, $R^f$ is a perfluoroperfluoroalkylene group having 1 to 6 carbon atoms, and M is an alkali metal ion or an ammonium ion, and in the formula 2, X is a fluorine atom or a chlorine atom.

Patent Document 2 describes the use of ultrafiltration for concentration to increase the amount of fluoropolymer solids in a dispersion system containing the ammonium salt of perfluorooctanoic acid, which was obtained by emulsion polymerization.

WO2018/167190A1 discloses a method of making fluoropolymer dispersions using certain polymeric derivatives including a plurality of ionisable groups selected from the group consisting of -SO3Xa, -PO3Xa and -COOXa, whereas Xa is H, an ammonium group or a monovalent metal, and to fluoropolymer dispersions therefrom.

EP0911357A1 relates to a method for concentrating an aqueous dispersion of fluorine-containing polymer particles containing a surfactant, which is applicable to a fluorine-containing polymer such as PTFE being easily fibrillated and assures low energy, low cost and short term concentration only by using various kinds of surfactants in a small amount.

### RELATED ART

### PATENT DOCUMENTS

Patent Document 1: Japanese Patent Laid-Open No. 11-181009
Patent Document 2: National Publication of International Patent Application No. 2006-523758

### SUMMARY OF THE INVENTION

### PROBLEM TO BE SOLVED BY THE INVENTION

The present disclosure provides a method for producing a fluoropolymer aqueous dispersion with reduced coloring.

### MEANS FOR SOLVING THE PROBLEM

The present disclosure provides a method for producing a fluoropolymer aqueous dispersion, the method comprising a step A of performing ultrafiltration, microfiltration, or dialysis membrane treatment, or a combination thereof on a pretreatment aqueous dispersion containing a fluoropolymer obtained by polymerization in the presence of a polymer (I) comprising a polymerized unit (I) derived from a monomer represented by the following general formula (I), with the proviso that the fluoropolymer is other than the polymer (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The step A is preferably performed at a temperature of 3°C or higher.

At least the microfiltration is performed in the step A; it is preferable that the microfiltration is carried out using a microfiltration membrane having an average pore size of 0.05 μm or more; it is still more preferable that the microfiltration is carried out using a microfiltration membrane having an average pore size of 0.075 μm or more; it is further preferable that the microfiltration is carried out using a microfiltration membrane having an average pore size of 0.10 μm or more; and it is particularly preferable that the microfiltration is carried out using a microfiltration membrane having an average pore size of 0.15 μm or more.

The microfiltration is preferably carried out at a pressure of 0.01 MPa or more.

The ultrafiltration is preferably carried out at a pressure of 0.01 MPa or more.

It is preferable that the method comprises a step B of adding a hydrocarbon surfactant to the pretreatment aqueous dispersion before the step A. The hydrocarbon surfactant added in the step B is preferably a nonionic surfactant, and is more preferably at least one nonionic surfactant selected from the group consisting of:

a compound represented by the following general formula (i):

$$R^3\text{-O-}A^1\text{-H} \qquad (i)$$

wherein $R^3$ is a linear or branched primary or secondary alkyl group having 8 to 18 carbon atoms, and $A^1$ is a polyoxyalkylene chain; and

a compound represented by the following general formula (ii):

$$R^4\text{-}C_6H_4\text{-O-}A^2\text{-H} \qquad (ii)$$

wherein $R^4$ is a linear or branched primary or secondary alkyl group having 4 to 12 carbon atoms, and $A^2$ is a polyoxyalkylene chain.

The fluoropolymer is preferably a polytetrafluoroethylene, a tetrafluoroethylene/hexafluoropropylene copolymer, or a tetrafluoroethylene/perfluoro(alkyl vinyl ether) copolymer, and is more preferably a polytetrafluoroethylene.

The present disclosure further provides but does not claim a method for producing a fluoropolymer aqueous dispersion, the method comprising a step A' of performing ultrafiltration, microfiltration, or dialysis membrane treatment, or a combination thereof on a pretreatment aqueous dispersion containing a fluoropolymer obtained by polymerization in the presence of a water-soluble polymer in which hydrogen atoms bonded to carbon atoms have been replaced by fluorine atoms at a proportion of 50% or more, with the proviso that the fluoropolymer is other than the water-soluble polymer.

The present disclosure further provides but does not claim a method for producing a fluoropolymer aqueous dispersion, the method comprising a step A'' of performing ultrafiltration, microfiltration, or dialysis membrane treatment, or a combination thereof on a pretreatment aqueous dispersion containing a fluoropolymer obtained by polymerization in the presence of a polymer in which hydrogen atoms bonded to carbon atoms have been replaced by fluorine atoms at a proportion of 50% or more and that includes an ionic group and has an ion exchange ratio of 53 or less, with the proviso that the fluoropolymer is other than the polymer.

The present disclosure also provides but does not claim a method for treating a discharge water, the method comprising: from a discharge water collected by a step A of performing ultrafiltration, microfiltration, or dialysis membrane treatment, or a combination thereof on a pretreatment aqueous dispersion containing a fluoropolymer obtained by polymerizing a fluoromonomer in the presence of a polymer (I) comprising a polymerized unit (I) derived from a monomer represented by the following general formula (I), collecting the polymer (I), with the proviso that the fluoromonomer is other than the monomer represented by the following general formula (I) and the fluoropolymer is other than the polymer (I):

$$CX^1X^3{=}CX^2R(\text{-}CZ^1Z^2\text{-}A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The present disclosure further provides but does not claim a fluoropolymer aqueous dispersion, comprising: a polymer (I) comprising a polymerized unit (I) derived from a monomer represented by the following general formula (I); water; and a fluoropolymer, with the proviso that the fluoropolymer is other than the polymer (I), wherein

the difference ΔL* between the lightness L* of the fluoropolymer aqueous dispersion and the lightness L* of a post-microfiltration fluoropolymer aqueous dispersion obtained by microfiltering the fluoropolymer aqueous dispersion is less than 16:

$$CX^1X^3=CX^2R(-CZ^1Z^2-A^0)_m \quad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

## EFFECTS OF INVENTION

In the production method of the present disclosure, a fluoropolymer aqueous dispersion with reduced coloring can be obtained.

## DESCRIPTION OF EMBODIMENTS

Before describing the production method of the present disclosure in detail, some terms used herein are defined or described below.

The fluororesin as used herein means a partially crystalline fluoropolymer which is a fluoroplastic. The fluororesin has a melting point and has thermoplasticity, and may be either melt-fabricable or non melt-processible.

The melt-fabricable as used herein means that a polymer has an ability to be processed in a molten state using a conventional processing device such as an extruder or an injection molding machine. Thus, a melt-fabricable fluororesin usually has a melt flow rate of 0.01 to 500 g/10 min as measured by the measurement method to be described later.

The fluoroelastomer as used herein is an amorphous fluoropolymer. The term "amorphous" means that a fluoropolymer has a melting peak (ΔH) of 4.5 J/g or lower as determined by differential scanning calorimetry (DSC) (temperature-increasing rate: 10°C/min) or differential thermal analysis (DTA) (temperature-increasing rate: 10°C/min). The fluoroelastomer exhibits elastomeric characteristics when crosslinked. The elastomeric characteristics mean that a polymer has an ability to be stretched and to retain its original length when the force required to stretch the polymer is no longer applied.

The partially fluorinated elastomer as used herein means a fluoropolymer containing a fluoromonomer unit, having a perfluoromonomer unit content of less than 90 mol% based on all polymerized units, having a glass transition temperature of 20°C or lower, and having a melting peak (ΔH) of 4.5 J/g or lower.

The perfluoroelastomer (perfluororubber) as used herein means a fluoropolymer having a perfluoromonomer unit content of 90 mol% or more based on all polymerized units, having a glass transition temperature of 20°C or lower, having a melting peak (ΔH) of **4.5** J/g or lower, and having a fluorine atom concentration in the fluoropolymer of 71% by mass or more. The fluorine atom concentration in the fluoropolymer as used herein is the concentration (% by mass) of the fluorine atoms contained in the fluoropolymer calculated based on the type and content of each monomer constituting the fluoropolymer.

The perfluoromonomer as used herein means a monomer free from a carbon-hydrogen bond in the molecule. The perfluoromonomer may be a monomer containing carbon atoms and fluorine atoms in which some of the fluorine atoms bonded to any of the carbon atoms are replaced by chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all hydrogen atoms are replaced by fluorine atoms. The perfluoromonomer does not encompass a monomer that provides a crosslinking site.

The monomer that provides a crosslinking site is a monomer (cure-site monomer) having a crosslinkable group that provides the fluoropolymer with a crosslinking site for forming a crosslink with the curing agent.

The polytetrafluoroethylene (PTFE) as used herein is preferably a fluoropolymer having a tetrafluoroethylene content of 99 mol% or more based on all polymerized units.

The fluororesin other than polytetrafluoroethylene and the fluoroelastomer as used herein are each preferably a fluoropolymer having a tetrafluoroethylene content of less than 99 mol% based on all polymerized units.

The content of each of the monomers constituting the fluoropolymer can be calculated herein by any appropriate combination of NMR, FT-IR, elemental analysis, X-ray fluorescence analysis in accordance with the types of the monomers.

The term "organic group" as used herein means a group containing one or more carbon atoms or a group obtainable by removing one hydrogen atom from an organic compound.

Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
RaO-,
RaCO-,
$RaSO_2$-,
RaCOO-,
RaNRaCO-,
RaCONRa-,
RaOCO-,
$RaOSO_2$-, and
$RaNRbSO_2$-,
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
each Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoyl amino group, a halogen atom, a sulfamoyl carbamoyl group, a carbamoyl sulfamoyl group, a dialiphatic oxyphosphinyl group, and a diaromatic oxyphosphinyl group.

The aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group. Examples of the aliphatic group include alkyl groups having 1 to 8, preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms, preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an

aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12, preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8, preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group. Examples of the acylamino group include acylamino groups having 2 to 12, preferably 2 to 8 carbon atoms in total, and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group. Examples of the aliphatic oxycarbonyl group include alkoxycarbonyl groups having 2 to 8, preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group Examples of the carbamoyl group include an unsubstituted carbamoyl group and alkylcarbamoyl groups having 2 to 9 carbon atoms in total, preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group. Examples of the aliphatic sulfonyl group include alkylsulfonyl groups having 1 to 6 carbon atoms in total, preferably 1 to 4 carbon atoms in total, such as methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total, preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, aromatic sulfonamide group, and heterocyclic sulfonamide group may be, for example, a methanesulfonamide group, a benzenesulfonamide group, a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8, preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group each may have an aliphatic group, an aliphatic oxy group, a halogen atom, a carbamoyl group, a heterocyclic group ring-fused with the aryl group, and an aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples thereof include alkylthio groups having 1 to 8 carbon atoms in total, more preferably 1 to 6 carbon atoms in total, such as a methylthio group, an ethylthio group, a

carbamoylmethylthio group, and a t-butylthio group.

The carbamoylamino group may have an aliphatic group, an aryl group, a heterocyclic group or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino group having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

The ranges expressed by the endpoints as used herein each include all numerical values within the range (for example, the range of 1 to 10 includes 1.4, 1.9, 2.33, 5.75, 9.98).

The phrase "at least one" as used herein includes all numerical values equal to or greater than 1 (e.g., at least 2, at least 4, at least 6, at least 8, at least 10, at least 25, at least 50, at least 100).

Next, the method for producing of the present disclosure will be specifically described.

The production method of the present disclosure (hereinafter, also referred to as a "first production method of the present disclosure") is defined in claim 1. It comprises a step A of performing ultrafiltration, microfiltration, or dialysis membrane treatment, or a combination thereof on a pretreatment aqueous dispersion containing a fluoropolymer obtained by polymerization in the presence of a polymer (I) comprising a polymerized unit (I) derived from a monomer represented by the following general formula (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more, wherein at least microfiltration is performed in the step A.

There are cases where the aqueous dispersion containing the fluoropolymer obtained by polymerization in the presence of the polymer (I) is colored. The first production method of the present disclosure was completed by finding that the coloring can be significantly reduced by carrying out a specific treatment, i.e., at least any of ultrafiltration, microfiltration, or dialysis membrane treatment, on the pretreatment aqueous dispersion, wherein at least microfiltration is performed.

The fluoropolymer aqueous dispersion obtained by the first production method of the present disclosure can also reduce the coloring of fluoropolymer powder obtained from the aqueous dispersion.

In addition, by carrying out the step A, the amount of hydrogen fluoride generated when the resulting fluoropolymer aqueous dispersion is heated can be significantly reduced.

In the first production method of the present disclosure, by carrying out the step A on the pretreatment aqueous dispersion, a liquid that does not permeate an ultrafiltration membrane, microfiltration membrane, or dialysis membrane can be collected as the fluoropolymer aqueous dispersion containing the fluoropolymer. Meanwhile, a liquid that permeates an ultrafiltration membrane, microfiltration membrane, or dialysis membrane can be collected as a discharge water.

In the first production method of the present disclosure, by carrying out the step A on the pretreatment aqueous dispersion, the polymer (I) can be removed from the pretreatment aqueous dispersion.

Furthermore, the dimer and trimer of the polymer (I) can be removed from the pretreatment aqueous dispersion. Examples of the dimer and trimer may be the dimer and trimer of the monomer (hereinafter, may be referred to as a monomer (I)) represented by the general formula (I). The dimer and trimer may be formed from, among monomers (I) represented by the general formula (I), one type of monomer (I), or may be formed from two or more types of monomers (I) with different structures.

Although the ultrafiltration or microfiltration is not limited and may be either cross-flow type or dead-end type, the cross-flow type is preferable from the viewpoint of reducing membrane clogging.

The ultrafiltration can be carried out using an ultrafiltration membrane. The ultrafiltration can be carried out using, for example, an ultrafiltration device having an ultrafiltration membrane, and the centrifugal ultrafiltration method, batch ultrafiltration method, circulating ultrafiltration method, and the like can be adopted.

The cut-off molecular weight of the ultrafiltration membrane is usually about $0.1 \times 10^4$ to $30 \times 10^4$ Da. The ultrafiltration membrane preferably has a cut-off molecular weight of $1.0 \times 10^4$ Da or more, since it can suppress membrane clogging and efficiently reduce coloring and the amount of hydrogen fluoride generated. The cut-off molecular weight is more preferably $1.5 \times 10^4$ Da or more, still more preferably $3.0 \times 10^4$ Da or more, further preferably $5.0 \times 10^4$ Da or more, still further preferably $8.0 \times 10^4$ Da or more, particularly preferably $10.0 \times 10^4$ Da or more, and most preferably $15.0 \times 10^4$ Da or more.

Also, the cut-off molecular weight is preferably $30.0 \times 10^4$ Da or less, and more preferably $25.0 \times 10^4$ Da or less, from the viewpoint of reducing coloring and reducing the amount of hydrogen fluoride generated.

The cut-off molecular weight of the ultrafiltration membrane can be determined by, for example, passing a polystyrene with a known weight average molecular weight through the membrane and using a molecular weight that can be blocked by 90% as the cut-off molecular weight. Quantification of the polystyrene can be carried out using gel permeation chromatography.

It is preferable that the ultrafiltration membrane has an effective membrane area of 0.01 to 50 $m^2$. The effective membrane area is more preferably 0.012 $m^2$ or more and still more preferably 0.015 $m^2$ or more, and is more preferably 45 $m^2$ or less and still more preferably 40 $m^2$ or less.

Although the shape of the ultrafiltration membrane is not limited to those conventionally known, for example, it may be hollow fiber type, flat membrane type, spiral type, tubular type. The hollow fiber type is preferable from the viewpoint of inhibiting clogging.

The inner diameter of the hollow fiber type ultrafiltration membrane is not limited, and may be, for example, 0.1 to 2 mm. It is preferably 0.8 to 1.4 mm.

The length of the hollow fiber type ultrafiltration membrane is not limited, and may be, for example, 0.05 to 3 m. It is preferably 0.05 to 2 m.

Although the material of the ultrafiltration membrane is not limited, examples thereof include organic materials such as cellulose, cellulose ester, polysulfone, sulfonated polysulfone, polyethersulfone, sulfonated polyethersulfone, chlorinated polyethylene, polypropylene, polyolefin, polyvinyl alcohol, polymethyl methacrylate, polyacrylnitrile, polyvinylidene fluoride, and polytetrafluoroethylene; metals such as stainless steel; and inorganic materials such as ceramics.

The material of the ultrafiltration membrane is preferably an organic material, and it is more preferably chlorinated polyethylene, polypropylene, polyvinylidene fluoride, polytetrafluoroethylene, polyacrylnitrile, polysulfone, or polyethersulfone, and still more preferably polyacrylnitrile or polyvinylidene fluoride.

Specific examples of the ultrafiltration membrane include the G-5 type, G-10 type, G-20 type, G-50 type, PW type, and HWS UF type from DESAL; HFM-180, HFM-183, HFM-251, HFM-300, HFM-116, HFM-183, HFM-300, HFK-131, HFK-328, MPT-U20, MPS-U20P, and MPS-U20S from KOCH; SPE1, SPE3, SPE5, SPE10, SPE30, SPV5, SPV50, and SOW30 from Synder; the Microza (R) UF series manufactured by Asahi Kasei Corporation; and NTR 7410 manufactured by Nitto Denko Corporation.

It is preferable that the ultrafiltration is carried out at a pressure (water pressure) of 0.01 MPa or more from the viewpoint of reducing coloring and reducing the amount of hydrogen fluoride generated. It is more preferably 0.03 MPa or more, and still more preferably 0.05 MPa or more. Also, from the viewpoint of pressure resistance, the pressure is preferably 0.5 MPa or less, more preferably 0.25 MPa or less, and still more preferably 0.2 MPa or less.

The microfiltration can be carried out using a microfiltration membrane. The microfiltration membrane usually has an average pore size of 0.05 to 1.0 μm.

It is preferable that the microfiltration membrane has an average pore size of 0.075 μm or more, since it can efficiently reduce coloring. It is more preferably 0.10 μm or more, and still more preferably 0.15 μm or more. Also, the average pore size is preferably 1.0 μm or less. It is more preferably 0.50 μm or less, and still more preferably 0.25 μm or less.

The average pore size of the microfiltration membrane can be measured in conformity with ASTM F316-03 (bubble point method).

It is preferable that the microfiltration membrane has an effective membrane area of 0.01 to 50 $m^2$. The effective membrane area is more preferably 0.012 $m^2$ or more and still more preferably 0.015 $m^2$ or more, and is more preferably 45 $m^2$ or less and still more preferably 40 $m^2$ or less.

Although the shape of the microfiltration membrane is not limited to those conventionally known, for example, it may be hollow fiber type, flat membrane type, spiral type, tubular type. The hollow fiber type is preferable from the viewpoint of inhibiting clogging.

The inner diameter of the hollow fiber type microfiltration membrane is not limited, and may be, for example, 0.1 to 2 mm. It is preferably 0.8 to 1.4 mm.

The length of the hollow fiber type microfiltration membrane is not limited, and may be, for example, 0.05 to 3 m. It is preferably 0.05 to 2 m.

Examples of the material of the microfiltration membrane include cellulosic materials, aromatic polyamide, polyvinyl alcohol, polysulfone, polyethersulfone, polyvinylidene fluoride, polyethylene, polyacrylonitrile, polypropylene, polycarbonate, polytetrafluoroethylene, ceramics, and metals. Among these, aromatic polyamide, polyvinyl alcohol, polysulfone, polyvinylidene fluoride, polyethylene, polyacrylonitrile, polypropylene, polycarbonate, or polytetrafluoroethylene is preferable, and polyacrylonitrile or polyvinylidene fluoride is particularly preferable.

Specific examples of the microfiltration membrane include Cefilt manufactured by NGK Insulators, Ltd.; the Microza U series and Microza P series manufactured by Asahi Kasei Corporation; Poreflon SPMW, Poreflon OPMW, and Poreflon PM manufactured by Sumitomo Electric Industries, Ltd.; Trefil manufactured by Toray Industries, Inc.; NADIR

MP005 and NADIR MV020 manufactured by Microdyn-Nadir GmbH; and X-flow manufactured by Norit N.V.

It is preferable that the microfiltration is carried out at a pressure (water pressure) of 0.01 MPa or more from the viewpoint of reducing coloring and reducing the amount of hydrogen fluoride generated. It is more preferably 0.03 MPa or more, and still more preferably 0.05 MPa or more. Also, from the viewpoint of pressure resistance, the pressure is preferably 0.5 MPa or less, more preferably 0.25 MPa or less, and still more preferably 0.2 MPa or less.

The dialysis membrane treatment is carried out using a dialysis membrane. The cut-off molecular weight of the dialysis membrane is usually $0.05 \times 10^4$ to $100 \times 10^4$ Da.

The dialysis membrane preferably has a cut-off molecular weight of $1.0 \times 10^4$ Da or more, since it can suppress membrane clogging and efficiently reduce coloring and the amount of hydrogen fluoride generated. The cut-off molecular weight is more preferably $1.5 \times 10^4$ Da or more, still more preferably $3.0 \times 10^4$ Da or more, further preferably $5.0 \times 10^4$ Da or more, still further preferably $8.0 \times 10^4$ Da or more, particularly preferably $10.0 \times 10^4$ Da or more, and most preferably $15.0 \times 10^4$ Da or more.

Also, the cut-off molecular weight is preferably $30.0 \times 10^4$ Da or less, and more preferably $20.0 \times 10^4$ Da or less, from the viewpoint of reducing coloring.

The cut-off molecular weight of the dialysis membrane can be measured by, for example, the same method as for the ultrafiltration membrane.

Although the material of the dialysis membrane is not limited, examples thereof include polyethylene, cellulose, polyacrylonitrile, polymethyl methacrylate, ethylene vinyl alcohol copolymers, polysulfone, polyamide, and polyester polymer alloys.

Specific examples of the dialysis membrane include Spectra/Por (R) Float-A-Lyzer, Tube-A-Lyzer, Dialysis tubing, 6Dialysis tubing, and 7Dialysis tubing manufactured by Spectrum Laboratories Inc.

It is preferable that the step A (the ultrafiltration, microfiltration, or dialysis membrane treatment) is carried out at a temperature of 3°C or higher. It is more preferably 5°C or higher, still more preferably 7°C or higher, and particularly preferably 10°C or higher. By setting the temperature in the above range, it is possible to achieve a reduction in coloring and a reduction in the amount of hydrogen fluoride generated. The temperature is preferably 80°C or lower, more preferably 78°C or lower, still more preferably 75°C or lower, and particularly preferably 70°C or lower.

Although the time for the ultrafiltration, microfiltration, or dialysis membrane treatment is not limited, it is preferably 30 minutes or longer, and more preferably 60 minutes or longer. Also, it is preferably 7,200 minutes or shorter, and more preferably 4,320 minutes or shorter.

Although the throughput in the ultrafiltration, microfiltration, or dialysis membrane treatment is not limited, it is preferably 0.001 L/min or more, and more preferably 0.01 L/min or more. Also, it is preferably 100 L/min or less, and more preferably 50 L/min or less.

The ultrafiltration, microfiltration, or dialysis membrane treatment may each be performed once, or may be repeatedly carried out multiple times. For example, it may be once or more, may be twice or more, or may be three times or more. Also, it may be ten times or less.

Alternatively, the ultrafiltration, microfiltration, and dialysis membrane treatment may be performed in combination. For example, ultrafiltration and microfiltration may be combined, ultrafiltration and dialysis membrane treatment may be combined, microfiltration and dialysis membrane treatment may be combined, or ultrafiltration, microfiltration, and dialysis membrane treatment may be combined. At least microfiltration is performed in the step A.

Among the ultrafiltration, microfiltration, and dialysis membrane treatment, ultrafiltration or microfiltration is preferable, and microfiltration is more preferable and is performed in step A.

It is particularly preferable that the step A is performed using a microfiltration membrane having an average pore size of 0.1 μm or more, at a pressure of 0.01 MPa or more, and at a temperature of 3 to 80°C.

In the method for producing the fluoropolymer aqueous dispersion of the present disclosure, a step of adding water to the pretreatment aqueous dispersion or a step of adding a pH adjuster to adjust the pH of the pretreatment aqueous dispersion may be carried out while carrying out the ultrafiltration, microfiltration, or dialysis membrane treatment.

The step A may include a step of adding water to the pretreatment aqueous dispersion, and the water may be added in stages or may be added continuously. It may also include a step of adding a pH adjuster to the pretreatment aqueous dispersion.

The end point of the ultrafiltration, microfiltration, or dialysis membrane treatment may be determined as appropriate and is not limited. For example, the end point may be determined based on the color of the resulting fluoropolymer aqueous dispersion.

The pretreatment aqueous dispersion contains the fluoropolymer obtained by polymerization in the presence of the polymer (I). The pretreatment aqueous dispersion may be an aqueous dispersion as polymerized, may be one obtained by diluting or concentrating the aqueous dispersion as polymerized, or may be one that has undergone dispersion stabilization treatment.

In the pretreatment aqueous dispersion, the fluoropolymer is preferably 70% by mass or less, more preferably 40% by mass or less, and still more preferably 25% by mass or less, from the viewpoint of reducing coloring and reducing

the amount of hydrogen fluoride generated. Also, from the viewpoint of treatment time, it is preferably 0.1% by mass or more, more preferably 1.0% by mass or more, and still more preferably 2.0% by mass or more.

From the viewpoint of further reducing coloring and further reducing the amount of hydrogen fluoride generated, the pretreatment aqueous dispersion preferably has a pH of 1 to 10, and more preferably 2 to 9. The pH can be adjusted using a pH adjuster. The pH adjuster may be an acid or an alkali, and examples thereof include phosphates, sodium hydroxide, potassium hydroxide, and aqueous ammonia.

The pretreatment aqueous dispersion may be irradiated with ultraviolet light. The irradiated ultraviolet light preferably has a wavelength of 10 to 400 nm, and more preferably has a wavelength of 100 to 280 nm.

It is also preferable that the first production method of the present disclosure comprises a step of irradiating the pretreatment aqueous dispersion with ultraviolet light before the step A.

The pretreatment aqueous dispersion may be treated with an oxygen source. That is, it is also preferable that the first production method of the present disclosure comprises a step of adding an oxygen source to the pretreatment aqueous dispersion before the step A. From the viewpoint of reducing coloring and reducing the amount of hydrogen fluoride generated, the amount of the oxygen source added is preferably 2% by mass or more, more preferably 5% by mass or more, and still more preferably 10% by mass or more based on the pretreatment aqueous dispersion. Also, it is preferably 30% by mass or less, and more preferably 20% by mass or less, from the viewpoint of safety.

Examples of the oxygen source include air, oxygen rich gas, ozone-containing gas, hydrogen peroxide, hypochlorous acid, and nitrites.

The pretreatment aqueous dispersion contains the fluoropolymer and an aqueous medium. It may also contain the polymer (I) used in the polymerization, or a hydrocarbon surfactant may be added after the polymerization.

The aqueous medium means a liquid containing water. The aqueous medium may be any medium containing water, and it may be one containing water and, for example, any of fluorine-free organic solvents such as alcohols, ethers, and ketones, and/or fluorine-containing organic solvents having a boiling point of 40°C or lower.

The pretreatment aqueous dispersion may have a lightness L* of 95 or less. Also, it may be 91 or less, or may be 86 or less.

The lightness L* is measured using an X-rite colorimeter.

The polymer (I) comprises a polymerized unit (I) derived from a monomer represented by the following general formula (I). It is preferable that the polymer (I) comprises two or more polymerized units (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

$X^2$ is preferably F, Cl, H, or $CF_3$. In addition, $Z^1$ and $Z^2$ are each preferably F or $CF_3$.

Examples of the anionic group include functional groups that give anionic groups such as acid groups like -COOH and acid bases like $-COONH_4$, in addition to anionic groups such as sulfate group and carboxylate group. Of these, it is preferably a sulfate group, a carboxylate group, a phosphate group, a phosphonate group, a sulfonate group, or an anionic group that is $-C(CF_3)_2OM$, wherein M is -H, a metal atom, $-NR^7_4$, imidazolium optionally having a substituent, pyridinium optionally having a substituent, or phosphonium optionally having a substituent, and $R^7$ is H or an organic group.

The polymer (I) may only comprise a polymerized unit (I) derived from one type of monomer represented by the general formula (I), or may comprise polymerized units (I) derived from two or more types of monomers represented by the general formula (I).

R is a linking group. The term "linking group" as used herein refers to a (m+1)-valent linking group, and when m is 1, it is a divalent linking group. The linking group may be a single bond and preferably contains at least one carbon atom, and the number of carbon atoms may be 2 or more, 4 or more, 8 or more, 10 or more, or 20 or more. The upper limit thereof is not limited, and may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas, and carbamates. The linking group may be free from carbon atoms and may be a catenary heteroatom such as oxygen, sulfur, or nitrogen.

m is an integer of 1 or more, preferably 1 or 2, and more preferably 1. When m is an integer of 2 or more, $Z^1$, $Z^2$, and $A^0$ may be the same or different.

Next, a preferred constitution in the case where m is 1 in the general formula (I) will be described.

R is preferably a catenary heteroatom such as oxygen, sulfur, or nitrogen, or a divalent organic group.

When R is a divalent organic group, the hydrogen atom bonded to the carbon atom may be replaced by a halogen

other than fluorine, such as chlorine, and may or may not contain a double bond. Further, R may be linear or branched, and may be cyclic or acyclic. R may also contain a functional group (e.g., ester, ether, ketone, amine, halide).

R may also be a fluorine-free divalent organic group or a partially fluorinated or perfluorinated divalent organic group.

R may be, for example, a hydrocarbon group in which a fluorine atom is not bonded to a carbon atom, a hydrocarbon group in which some of the hydrogen atoms bonded to a carbon atom are replaced by fluorine atoms, or a hydrocarbon group in which all of the hydrogen atoms bonded to the carbon atoms are replaced by fluorine atoms, and these groups optionally contain an oxygen atom, optionally contain a double bond, and optionally contain a functional group.

R is preferably a hydrocarbon group having 1 to 100 carbon atoms that optionally contains an ether bond, wherein some or all of the hydrogen atoms bonded to the carbon atoms in the hydrocarbon group may be replaced by fluorine.

R is preferably at least one selected from $-(CH_2)_a-$, $-(CF_2)a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, $-[CF_2CF(CF_3)O]_a-$, $-[CF(CF_3)CF_2O]_a-$, $-(CF_2)_a-O-[CF(CF_3)CF_2O]_a-$, $-(CF_2)_a-O-[CF(CF_3)CF_2O]_a-(CF_2)_b-$, and combinations thereof.

In the formula, a, b, c, and d are each independently at least 1 or more. a, b, c and d may be each independently 2 or more, 3 or more, 4 or more, 10 or more, or 20 or more. The upper limits of a, b, c, and d are 100, for example.

R is preferably a divalent group represented by the following general formula (r1):

$$-CF_2-O-(CX^6_2)_e-\{O-CF(CF_3)\}_f-(O)_g- \qquad (r1)$$

wherein $X^6$ is each independently H, F, or $CF_3$; e is an integer of 0 to 3; f is an integer of 0 to 3; and g is 0 or 1, and is preferably a divalent group represented by the following general formula (r2):

$$-CF_2-O-(CX^7_2)_e-(O)_g- \qquad (r2)$$

wherein $X^7$ is each independently H, F, or $CF_3$; e is an integer of 0 to 3; and g is 0 or 1.

Specific examples suitable for R include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CF_2-O-CF_2-$, and $-CF_2-O-CF(CF_3)CH_2-$. Of these, R is preferably a perfluoroalkylene group optionally containing an oxygen atom, and specifically, it is preferably $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, or $-CF_2-O-CF(CF_3)CF_2-O-$.

$-R-CZ^1Z^2-$ in the general formula (I) is preferably one represented by the following formula (s1):

$$-CF_2-O-(CX^6_2)_e-\{O-CF(CF_3)\}_f-(O)_g-CZ^1Z^2- \qquad (s1)$$

wherein $X^6$ is each independently H, F, or $CF_3$; e is an integer of 0 to 3; f is an integer of 0 to 3; g is 0 or 1; and $Z^1$ and $Z^2$ are each independently H, F, an alkyl group, or a fluorine-containing alkyl group. In the formula (s1), it is more preferable that $Z^1$ and $Z^2$ are each F or $CF_3$, and it is still more preferable that one thereof is F and the other is $CF_3$.

In addition, $-R-CZ^1Z^2-$ in the general formula (I) is preferably one represented by the following formula (s2):

$$-CF_2-O-(CX^7_2)_e-(O)_g-CZ^1Z^2- \qquad (s2)$$

wherein $X^7$ is each independently H, F, or $CF_3$; e is an integer of 0 to 3; g is 0 or 1; and $Z^1$ and $Z^2$ are each independently H, F, an alkyl group, or a fluorine-containing alkyl group. In the formula (s2), it is more preferable that $Z^1$ and $Z^2$ are each F or $CF_3$, and it is still more preferable that one thereof is F and the other is $CF_3$.

$-R-CZ^1Z^2-$ in the general formula (I) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, or $-CF_2-O-CF(CF_3)CF_2-O-C(CF_3)_2-$, and it is more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, or $-CF_2-O-CF(CF_3)CF_2-O-CF(CF_3)-$.

It is also preferable that the polymer (I) is highly fluorinated. For example, it is preferable that 80% or more, 90% or more, 95% or more, or 100% of the C-H bonds in the polymer (I) are replaced by C-F bonds, except for the anionic group ($A^0$) such as the phosphate group moiety (for example, $CH_2OP(O)(OM)_2$) and the sulfate group moiety (for example, $CH_2OS(O)_2OM$).

It is also preferable that the polymer (I) has C-F bonds and no C-H bonds, except for the anionic group ($A^0$). In

other words, in the general formula (I), $X^1$, $X^2$, and $X^3$ are all F, and R is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The polymer (I) may be partially fluorinated. In other words, it is also preferable that the polymer (I) has at least one hydrogen atom bonded to a carbon atom and at least one fluorine atom bonded to a carbon atom, except for the anionic group ($A^0$).

The anionic group ($A^0$) may be $-SO_3M$, $-OSO_3M$, -COOM, $-SO_2NR'CH_2COOM$, $-CH_2OP(O)(OM)_2$, $[-CH_2O]_2P(O)(OM)$, - $CH_2CH_2OP(O)(OM)_2$, $[-CH_2CH_2O]_2P(O)(OM)$, $-CH_2CH_2OSO_3M$, - $P(O)(OM)_2$, $-SO_2NR'CH_2CH_2OP(O)(OM)_2$, $[-SO_2NR'CH_2CH_2O]_2P(O)(OM)$, $-CH_2OSO_3M$, $-SO_2NR'CH_2CH_2OSO_3M$, or - $C(CF_3)_2OM$. Of these, it is preferably $-SO_3M$, $-OSO_3M$, - COOM, or $-P(O)(OM)_2$; it is more preferably -COOM, $-SO_3M$, $-OSO_3M$, or $-C(CF_3)_2OM$; it is still more preferably $-SO_3M$, -COOM, or $-P(O)(OM)_2$; it is particularly preferably $-SO_3M$ or -COOM; and it is most preferably -COOM.

M is H, a metal atom, $NR^7_4$, imidazolium optionally having a substituent, pyridinium optionally having a substituent, or phosphonium optionally having a substituent, wherein $R^7$ is H or an organic group.

Examples of the metal atom include alkali metals (Group 1) and alkaline earth metals (Group 2), and preferred is Na, K, or Li.

M is preferably -H, a metal atom, or $-NR^7_4$, more preferably -H, an alkali metal (Group 1), an alkaline earth metal (Group 2), or $-NR^7_4$, still more preferably -H, -Na, -K, -Li, or $-NH_4$, further preferably -Na, -K, or - $NH_4$, particularly preferably -Na or $-NH_4$, and most preferably $-NH_4$.

In the polymer (I), each polymerized unit (I) may have a different anionic group or may have the same anionic group.

It is also preferable that the polymer (I) is a polymer comprising a polymerized unit (Ia) derived from a monomer represented by the following formula (Ia):

$$CF_2=CF-O-Rf^0-A^0 \qquad (Ia)$$

wherein $A^0$ is an anionic group; and $Rf^0$ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

It is also preferable that the polymer (I) is a polymer comprising a polymerized unit (Ib) derived from a monomer represented by the following formula (Ib):

$$CH_2=CH-O-Rf^0-A^0 \qquad (Ib)$$

wherein $A^0$ is an anionic group; and $Rf^0$ is a perfluorinated divalent linking group as defined in the formula Ia.

In the general formula (I), it is preferable that $A^0$ is a sulfate group. $A^0$ is, for example, $-CH_2OSO_3M$, - $CH_2CH_2OSO_3M$, or $-SO_2NR'CH_2CH_2OSO_3M$, wherein R' is H or an alkyl group having 1 to 4 carbon atoms; and M is as described above.

Examples of the monomer represented by the general formula (I) when $A^0$ is a sulfate group include $CF_2=CF(OCF_2CF_2CH_2OSO_3M)$, $CH_2=CH((CF_2)_4CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, $CF_2=CF(OCF_2CF_2CF_2CF_2SO_2N(CH_3)CH_2CH_2OSO_3M)$, and $CH_2=CH(CF_2CF_2CF_2CH_2OSO_3M)$. In the formula, M is as described above.

In the general formula (I), it is also preferable that $A^0$ is a sulfonate group. $A^0$ is, for example, $-SO_3M$, wherein M is as described above.

Examples of the monomer represented by the general formula (I) when $A^0$ is a sulfonate group include $CF_2=CF(OCF_2CF_2SO_3M)$, $CF_2=CF(O(CF_2)_3SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, $CH_2=CH(CF_2CF_2SO_3M)$, and $CH_2=CH((CF_2)_3SO_3M)$. In the formula, M is as described above.

In the general formula (I), it is also preferable that $A^0$ is a carboxylate group. $A^0$ is, for example, COOM or $SO_2NR'CH_2COOM$, wherein R' is H or an alkyl group having 1 to 4 carbon atoms; and M is as described above. Examples of the monomer represented by the general formula (I) when $A^0$ is a carboxylate group include $CF_2=CF(OCF_2CF_2COOM)$, $CF_2=CF(O(CF_2)_3COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$ (n is greater than 1), $CH_2=CH(CF_2CF_2COOM)$, $CH_2=CH((CF_2)_4COOM)$, $CH_2=CH(CF_2CF_2COOM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$,

$CH_2=CH(CF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, $CH_2=CH(CF_2CF_2SO_2NR'CH_2COOM)$, and $CH_2=CH((CF_2)_3SO_2NR'CH_2COOM)$. In the formula, R' is H or a $C_{1-4}$ alkyl group, and M is as described above.

In the formula (I), it is also preferable that $A^0$ is a phosphate group. $A^0$ is, for example, $-CH_2OP(O)(OM)_2$, $[-CH_2O]_2P(O)(OM)$, $-CH_2CH_2OP(O)(OM)_2$, $[-CH_2CH_2O]_2P(O)(OM)$, $[-SO_2NR'CH_2CH_2O]_2P(O)(OM)$, or $-SO_2NR'CH_2CH_2OP(O)(OM)_2$, wherein R' is an alkyl group having 1 to 4 carbon atoms and M is as described above.

Examples of the monomer represented by the general formula (I) when $A^0$ is a phosphate group include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)$ $CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2)$, $CH_2=CH(((CF_2)_4CH_2OP(O)(OM)_2)$, $CH_2=CH(CF_2CF_2CH_2OP(O)(OM)_2)$, and $CH_2=CH((CF_2)_3CH_2OP(O)(OM)_2)$. In the formula, M is as described above.

In the formula (I), it is also preferable that $A^0$ is a phosphonate group. Examples of the monomer represented by the general formula (I) when $A^0$ is a phosphonate group include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(CF_2CF_2P(O)(OM)_2)$, $CH_2=CH((CF_2)_4P(O)(OM)_2)$, $CH_2=CH(CF_2CF_2P(O)(OM)_2)$, and $CH_2=CH((CF_2)_3P(O)(OM)_2)$, wherein M is as described above.

It is preferable that the polymer (I) is a polymer (1) comprising a polymerized unit (1) derived from a monomer represented by the following general formula (1):

$$CX_2=CY(-CZ_2-O-Rf-A) \qquad (1)$$

wherein X is the same or different and is -H or -F; Y is -H, -F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, $-SO_3M$, $-OSO_3M$, or $-C(CF_3)_2OM$, where M is -H, a metal atom, $-NR^7_4$, imidazolium optionally having a substituent, pyridinium optionally having a substituent, or phosphonium optionally having a substituent, where $R^7$ is H or an organic group, with the proviso that at least one of X, Y, and Z contains a fluorine atom.

When the polymer (1) comprises the polymerized unit (1), it is possible to stably and efficiently produce a fluoropolymer aqueous dispersion containing a fluoropolymer such as polytetrafluoroethylene. Also, it is possible to obtain a fluoropolymer aqueous dispersion containing a high-molecular-weight fluoropolymer such as polytetrafluoroethylene with a high yield. The fluorine-containing alkylene group having 2 to 100 carbon atoms and having an ether bond is an alkylene group which does not include a structure in which an oxygen atom is an end and contains an ether bond between carbon atoms.

In the general formula (1), X is -H or -F. Each X may be both -F, or at least one thereof may be -H. For example, one thereof may be -F and the other may be -H, or both may be -H.

In the general formula (1), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or $-CF_3$, and more preferably -F.

In the general formula (1), Z is the same or different and is -H, -F, an alkyl group, or a fluoroalkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Z is preferably -H, -F, or $-CF_3$, and more preferably -F.

In the general formula (1), at least one of X, Y, and Z contains a fluorine atom. For example, X, Y, and Z may be -H, -F, and -F, respectively.

In the general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and still more preferably 10 or

less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The fluorine-containing alkylene group having an ether bond preferably has 60 or less carbon atoms, more preferably 30 or less carbon atoms, and still more preferably 12 or less carbon atoms. It is also preferable that the fluorine-containing alkylene group having an ether bond is a divalent group represented by the following general formula:

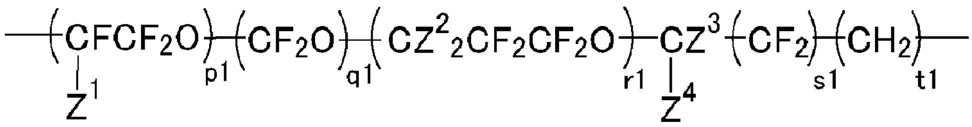

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (where n is an integer of 1 to 10), $-CF(CF_3)CF_2-O-CF(CF_3)CH_2-$, $-(CF(CF_3)CF_2-O)_n-CF(CF_3)CH_2-$ (where n is an integer of 1 to 10), $-CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2$.

The fluorine-containing alkylene group having an ether bond is preferably a perfluoroalkylene group.

In the general formula (1), A is -COOM, $-SO_3M$, $-OSO_3M$, or $-C(CF_3)_2OM$, wherein M is -H, a metal atom, $-NR^7_4$, imidazolium optionally having a substituent, pyridinium optionally having a substituent, or phosphonium optionally having a substituent, where $R^7$ is H or an organic group.

$R^7$ is preferably H or a $C_{1-10}$ organic group, more preferably H or a $C_{1-4}$ organic group, and still more preferably H or a $C_{1-4}$ alkyl group.

Examples of the metal atom include alkali metals (Group 1) and alkaline earth metals (Group 2), and preferred is Na, K, or Li.

M is preferably -H, a metal atom, or $-NR^7_4$, more preferably -H, an alkali metal (Group 1), an alkaline earth metal (Group 2), or $-NR^7_4$, still more preferably -H, -Na, -K, -Li, or $-NH_4$, further preferably -Na, -K, or $-NH_4$, particularly preferably -Na or $-NH_4$, and most preferably $-NH_4$.

A is preferably -COOM or $-SO_3M$, and more preferably -COOM.

Examples of a suitable monomer represented by the general formula (1) include a fluoroallyl ether compound represented by the following formula (1a):

$$CX_2=CFCF_2-O-(CF(CF_3)CF_2O)_{n5}-CF(CF_3)-A \qquad (1a)$$

wherein each X is the same and represents F or H; n5 represents 0 or an integer of 1 to 10; and A is as defined above.

In the formula (1a), n5 is preferably 0 or an integer of 1 to 5, more preferably 0, 1, or 2, and still more preferably 0 or 1 from the viewpoint of obtaining particles having a small primary particle size.

The polymer (1) may be a homopolymer of the fluoroallyl ether compound represented by the general formula (1a) or a copolymer thereof with another monomer.

The polymerized unit (1) is preferably a polymerized unit (1A) derived from a monomer represented by the following general formula (1A):

$$CH_2=CF(-CF_2-O-Rf-A) \qquad (1A)$$

wherein Rf and A are as described above.

The polymer (1) may be a homopolymer of the monomer represented by the general formula (1A) or a copolymer thereof with another monomer.

Specific examples of the monomer represented by the formula (1A) include a monomer represented by the following formula:

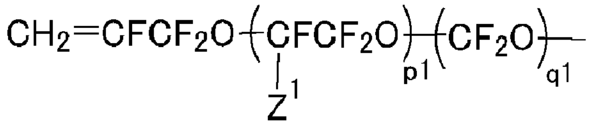

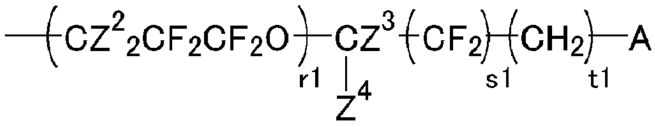 ,

wherein $Z^1$ is F or $CF_3$; $Z^2$ and $Z^3$ are each H or F; $Z^4$ is H, F, or $CF_3$; p1 + q1 + r1 is an integer of 0 to 10; s1 is 0 or 1; t1 is an integer of 0 to 5, with the proviso that when $Z^3$ and $Z^4$ are both H, p1 + q1 + r1 + s1 is not 0; and A is as defined above. More specifically, preferred examples thereof include:

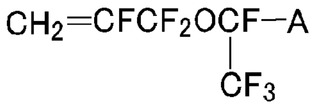 , 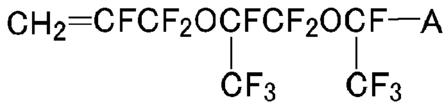 ,

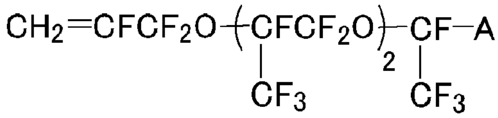 , 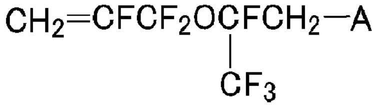 ,

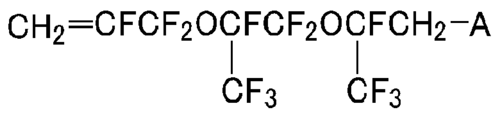 , 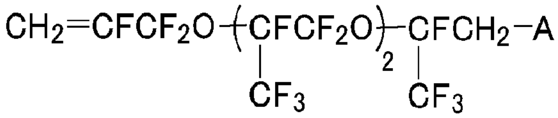 ,

$CH_2$=$CFCF_2OCH_2CF_2$-A, $CH_2$=$CFCF_2O(CH_2CF_2CF_2O)CH_2CF_2$-A,

$CH_2$=$CFCF_2OCH_2CF_2CH_2$-A,

$CH_2$=$CFCF_2O(CH_2CF_2CF_2O)CH_2CF_2CH_2$-A,

$CH_2$=$CFCF_2OCF_2CF_2$-A, $CH_2$=$CFCF_2O(CF_2CF_2CF_2O)CF_2CF_2$-A,

$CH_2$=$CFCF_2OCF_2CF_2CH_2$-A,

$CH_2$=$CFCF_2O(CF_2CF_2CF_2O)CF_2CF_2CH_2$-A,

$CH_2$=$CFCF_2OCF_2$-A, $CH_2$=$CFCF_2O(CF_2CF_2O)CF_2$-A,

$CH_2$=$CFCF_2OCF_2CH_2$-A,

$CH_2$=$CFCF_2O(CF_2CF_2O)CF_2CH_2$-A,

Of these, preferred are:

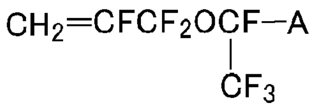 , 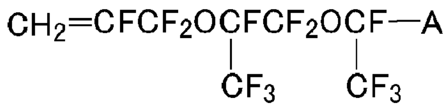 ,

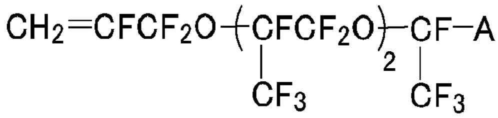 , 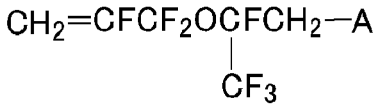 ,

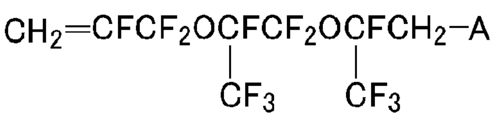 , 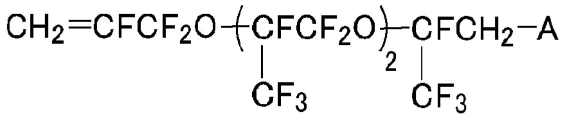 ,

In the monomer represented by the general formula (1A), A in the formula (1A) is preferably -COOM. Specifically, the monomer represented by the general formula (1A) is preferably at least one selected from the group consisting of $CH_2=CFCF_2OCF(CF_3)COOM$ and $CH_2=CFCF_2OCF(CF_3)CF_2OCF(CF_3)COOM$ (wherein M is as defined above), and more preferably $CH_2=CFCF_2OCF(CF_3)COOM$.

Examples of the monomer represented by the general formula (1) further include a monomer represented by the following formula:

$CF_2=CFCF_2\text{-}O\text{-}Rf\text{-}A$

wherein Rf and A are as described above.

More specific examples thereof include:

$CF_2=CFCF_2OCF_2CF_2CF_2\text{-}A$,

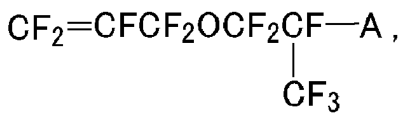

$CF_2=CFCF_2OCF_2CF_2CF_2CH_2\text{-}A$,

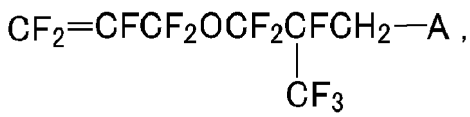

It is also preferable that the polymer (I) is a polymer (2) comprising a polymerized unit (2) derived from a monomer represented by the following general formula (2):

$CX_2=CY(\text{-}O\text{-}Rf\text{-}A)$ (2)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

The polymer (2) may be a homopolymer of the monomer represented by the general formula (2) or may be a copolymer thereof with another monomer.

In the general formula (2), X is -H or -F. X may be both -F, or at least one thereof may be -H. For example, one thereof may be -F and the other may be -H, or both may be -H.

In the general formula (2), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or $-CF_3$, and more preferably -F.

In the general formula (2), at least one of X and Y preferably contains a fluorine atom. For example, X, Y, and Z may be -H, -F, and -F, respectively.

In the general formula (2), Rf is a fluorine-containing alkylene group having 1 to 40 carbon atoms or a fluorine-containing alkylene group having 2 to 100 carbon atoms and having an ether bond. The fluorine-containing alkylene group having 2 to 100 carbon atoms and having an ether bond is an alkylene group which does not include a structure in which an oxygen atom is an end and contains an ether bond between carbon atoms.

The fluorine-containing alkylene group for Rf preferably has 2 or more carbon atoms. The fluorine-containing alkylene group for Rf also preferably has 30 or less carbon atoms, more preferably 20 or less carbon atoms, and still more

preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The monomer represented by the general formula (2) is preferably at least one selected from the group consisting of monomers represented by the following general formulas (2a), (2b), (2c), (2d), and (2e):

$CF_2=CF-O-(CF_2)_{n1}-A$ (2a)

wherein n1 represents an integer of 1 to 10, and A is as described above;

$CF_2=CF-O-(CF_2C(CF_3)F)_{n2}-A$ (2b)

wherein n2 represents an integer of 1 to 5, and A is as defined above;

$CF_2=CF-O-(CFX^1)_{n3}-A$ (2c)

wherein $X^1$ represents F or $CF_3$, n3 represents an integer of 1 to 10, and A is as defined above;

$CF_2=CF-O-(CF_2CFX^1O)_{n4}-(CF_2)_{n6}-A$ (2d)

wherein n4 represents an integer of 1 to 10, n6 represents an integer of 1 to 3, and A and $X^1$ are as defined above; and

$CF_2=CF-O-(CF_2CF_2CFX^1O)_{n5}-CF_2CF_2CF_2-A$ (2e)

wherein n5 represents an integer of 0 to 10, and A and $X^1$ are as defined above.

In the formula (2a), n1 is preferably an integer of 5 or less, and more preferably an integer of 2 or less.

Examples of the monomer represented by the formula (2a) include $CF_2=CF-O-CF_2COOM$, $CF_2=CF(OCF_2CF_2COOM)$, and $CF_2=CF(O(CF_2)_3COOM)$, wherein M is as defined above.

In the formula (2b), n2 is preferably an integer of 3 or less from the viewpoint of stability of the resulting aqueous dispersion.

In the formula (2c), n3 is preferably an integer of 5 or less from the viewpoint of water-solubility, A is preferably -COOM, and M is preferably H or $NH_4$.

In the formula (2d), $X^1$ is preferably $-CF_3$ from the viewpoint of stability of the aqueous dispersion, n4 is preferably an integer of 5 or less from the viewpoint of water-solubility, A is preferably -COOM, and M is preferably H or $NH_4$.

Examples of the monomer represented by the formula (2d) include $CF_2=CFOCF_2CF(CF_3)OCF_2CF_2COOM$,

$CF_2=CFOCF_2CF(CF_3)OCF_2COOM$, and
$CF_2=CFOCF_2CF(CF_3)OCF_2CF_2CF_2COOM$, wherein M represents H, $NH_4$, or an alkali metal.

In the general formula (2e), n5 is preferably an integer of 5 or less from the viewpoint of water-solubility, A is preferably -COOM, and M is preferably H or $NH_4$.

An example of the monomer represented by the general formula (2e) is $CF_2=CFOCF_2CF_2CF_2COOM$, wherein M represents H, $NH_4$, or an alkali metal.

It is also preferable that the polymer (I) is a polymer (3) comprising a polymerized unit (3) derived from a monomer represented by the following general formula (3):

General Formula (3): $CX_2=CY(-Rf-A)$ (3)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

The polymer (3) may be a homopolymer of the monomer represented by the general formula (3) or may be a copolymer thereof with another monomer.

The fluorine-containing alkylene group having 2 to 100 carbon atoms and having an ether bond is an alkylene group which does not include a structure in which an oxygen atom is an end and contains an ether bond between carbon atoms.

In the general formula (3), Rf is preferably a fluorine-containing alkylene group having 1 to 40 carbon atoms. In the

general formula (3), at least one of X and Y preferably contains a fluorine atom.

The monomer represented by the general formula (3) is preferably at least one selected from the group consisting of:

a monomer represented by the following general formula (3a):

$$CF_2=CF-(CF_2)_{n1}-A \qquad (3a)$$

wherein n1 represents an integer of 1 to 10, and A is as defined above; and

a monomer represented by the following general formula (3b):

$$CF_2=CF-(CF_2C(CF_3)F)_{n2}-A \qquad (3b)$$

wherein n2 represents an integer of 1 to 5, and A is as defined above.

In the general formula (3a) and the general formula (3b), A is preferably $-SO_3M$ or COOM, and M is preferably H, a metal atom, $NR^7{}_4$, imidazolium optionally having a substituent, pyridinium optionally having a substituent, or phosphonium optionally having a substituent. $R^7$ represents H or an organic group.

In the formula (3a), n1 is preferably an integer of 5 or less, and more preferably an integer of 2 or less. A is preferably -COOM, and M is preferably H or $NH_4$.

Examples of the monomer represented by the formula (3a) include $CF_2=CFCF_2COOM$, wherein M is as defined above.

In the formula (3b), n2 is preferably an integer of 3 or less from the viewpoint of stability of the resulting aqueous dispersion, A is preferably -COOM, and M is preferably H or $NH_4$.

Next, a preferred constitution in the case where m is an integer of 2 or more in the general formula (I) will be described.

It is also preferable that the monomer (I) is at least one selected from the group consisting of monomers represented by the general formula (4a) and the general formula (4b).

It is also preferable that the polymer (I) is a polymer (4) comprising a polymerized unit (4) derived from at least one monomer selected from the group consisting of monomers represented by the general formula (4a) and the general formula (4b):

$$CF_2=CF-CF_2-O-Q^{F1}-CF(-Q^{F2}-CZ^1Z^2-A)_2 \qquad (4a)$$

wherein $Z^1$, $Z^2$, and A are as defined above, $Q^{F1}$ and $Q^{F2}$ are the same or different and are each a single bond, a fluorine-containing alkylene group optionally containing an ether bond between carbon atoms, or a fluorine-containing oxyalkylene group optionally containing an ether bond between carbon atoms; and

$$CF_2=CF-O-Q^{F1}-CF(-Q^{F2}-CZ^1Z^2-A)_2 \qquad (4b)$$

wherein $Z^1$, $Z^2$, A, $Q^{F1}$, and $Q^{F2}$ are as defined above.

Examples of the monomers represented by the general formula (4a) and the general formula (4b) include:

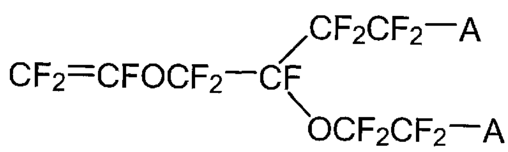

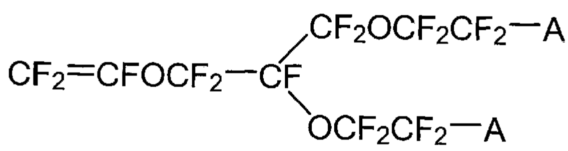

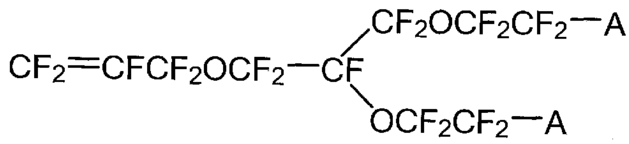

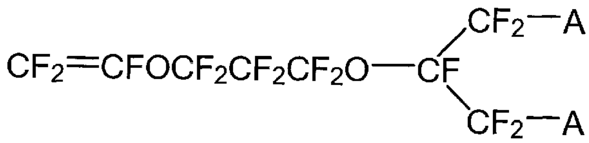

The polymer (I) is preferably at least one selected from the group consisting of the polymer (1), the polymer (2), and the polymer (3), and is more preferably the polymer (1).

The polymer (I) may be a homopolymer containing only the polymerized unit (I), or may be a copolymer of the polymerized unit (I) and a polymerized unit derived from another monomer copolymerizable with the monomer represented by the general formula (I). From the viewpoint of solubility in the polymerization medium, preferred is a homopolymer containing only the polymerized unit (I). The polymerized unit (I) may be the same or different in each occurrence, and the polymer (I) may comprise polymerized units (I) derived from two or more different monomers represented by the general formula (I).

The other monomer is preferably a fluorine-containing ethylenic monomer having 2 or 3 carbon atoms, and examples thereof include $CF_2=CF_2$, $CF_2=CFCl$, $CH_2=CF_2$, $CFH=CH_2$, $CFH=CF_2$, $CF_2=CFCF_3$, $CH_2=CFCF_3$, $CH_2=CHCF_3$, $CHF=CHCF_3$ (E isomer), and $CHF=CHCF_3$ (Z isomer).

Of these, preferred is at least one selected from the group consisting of tetrafluoroethylene ($CF_2=CF_2$), chlorotrifluoroethylene ($CF_2=CFCl$), and vinylidene fluoride ($CH_2=CF_2$) from the viewpoint of achieving good copolymerizability, and more preferred is tetrafluoroethylene. Accordingly, it is preferable that the polymerized unit derived from the other monomer is a polymerized unit derived from tetrafluoroethylene. The polymerized unit derived from the other monomer may be the same or different in each occurrence, and the polymer (I) may comprise polymerized units derived from two or more different other monomers.

Examples of the other monomer further include a monomer represented by the following formula (n1-2):

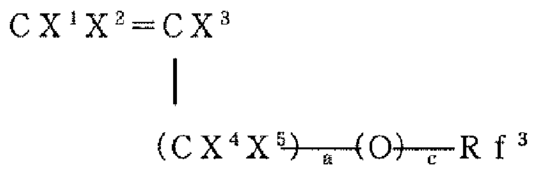

(n1-2)

wherein $X^1$ and $X^2$ are the same or different and are each H or F; $X^3$ is H, F, Cl, $CH_3$, or $CF_3$; $X^4$ and $X^5$ are the same or different and are each H or F; and a and c are the same or different and are each 0 or 1; $Rf^3$ is a fluorine-containing alkyl group having 1 to 40 carbon atoms or a fluorine-containing alkyl group having 2 to 100 carbon atoms and having an ether bond.

Specifically, preferred examples thereof include $CH_2=CFCF_2-O-Rf^3$, $CF_2=CF-O-Rf^3$, $CF_2=CFCF_2-O-Rf^3$, $CF_2=CF-Rf^3$, $CH_2=CH-Rf^3$, and $CH_2=CH-O-Rf^3$ (wherein $Rf^3$ is as described in the above formula (n1-2)).

Another example of the other monomer is a fluorine-containing acrylate monomer represented by the formula (n2-1):

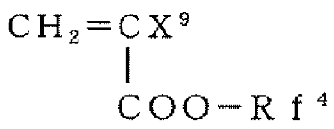

(n2-1)

wherein $X^9$ is H, F, or $CH_3$; and $Rf^4$ is a fluorine-containing alkyl group having 1 to 40 carbon atoms or a fluorine-containing alkyl group having 2 to 100 carbon atoms and having an ether bond. Examples of $Rf^4$ group include:

$$-(CH_2)_{d1}-(CF_2)_{e1}-Z^8$$

wherein $Z^8$ is H, F, or Cl; d1 is an integer of 1 to 4; and e1 is an integer of 1 to 10,

$-CH(CF_3)_2$.

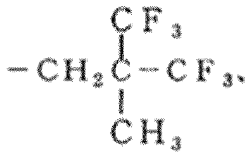

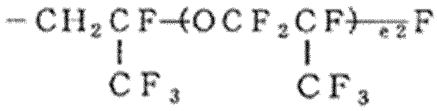

wherein e2 is an integer of 1 to 5,

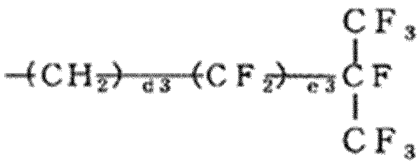

wherein d3 is an integer of 1 to 4, and e3 is an integer of 1 to 10.

Another example of the other monomer is a fluorine-containing vinyl ether represented by the formula (n2-2):

$CE_2=CHO-Rf^5$ (n2-2)

wherein $Rf^5$ is a fluorine-containing alkyl group having 1 to 40 carbon atoms or a fluorine-containing alkyl group having 2 to 100 carbon atoms and having an ether bond.

Specific preferred examples of the monomer of the formula (n2-2) include:

$$CH_2=CHOCH_2-(CF_2)_{e4}-Z^9$$

wherein $Z^9$ is H or F; and e4 is an integer of 1 to 10,

$$CH_2=CHOCH_2CH_2-(CF_2)_{e5}-F$$

wherein e5 is an integer of 1 to 10,

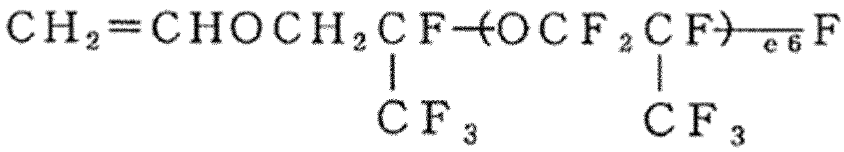

wherein e6 is an integer of 1 to 10.

More specific examples thereof include:

$CH_2=CHOCH_2CF_2CF_2H$,

$$CH_2=CHOCH_2-(CF_2CF_2)_2-H,$$

$CH_2=CHOCH_2-(CF_2CF_2)_3H$、

$CH_2=CHOCH_2CF_2CF_3$,

$CH_2=CHOCH_2CF_3$,

$CH_2=CHOCH_2CH_2-(CF_2CF_2)_4F$、

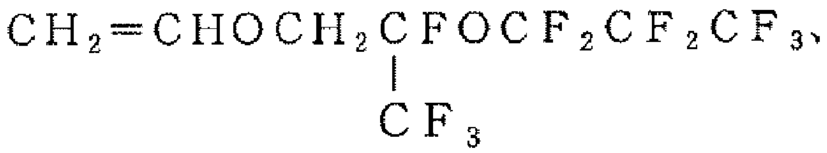

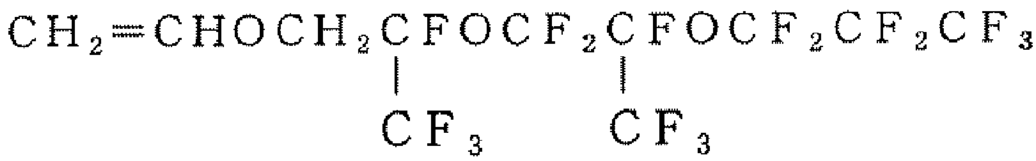

Additional examples of the other monomer include a fluorine-containing allyl ether represented by the formula (n2-3):

$CH_2=CHCH_2O-Rf^6$ (n2-3)

wherein $Rf^6$ is a fluorine-containing alkyl group having 1 to 40 carbon atoms or a fluorine-containing alkyl group having 2 to 100 carbon atoms and having an ether bond, and
a fluorine-containing vinyl monomer represented by the formula (n2-4):

$CH_2=CH-Rf^7$ (n2-4)

wherein $Rf^7$ is a fluorine-containing alkyl group having 1 to 40 carbon atoms or a fluorine-containing alkyl group having 2 to 100 carbon atoms and having an ether bond.

Specific examples of the monomers represented by the formulas (n2-3) and (n2-4) include:

$CH_2=CHCH_2OCH_2CF_2CF_2H$,

$CH_2=CHCH_2OCH_2-(CF_2CF_2)_2H$、

$CH_2=CHCH_2OCH_2-(CF_2CF_2)_3H$、

$CH_2=CHCH_2OCH_2CF_2CF_3$,

$CH_2=CHCH_2OCH_2CF_3$,

$$CH_2=CHCH_2OCH_2CH_2\text{-}(CF_2CF_2)_4\text{-}F$$、

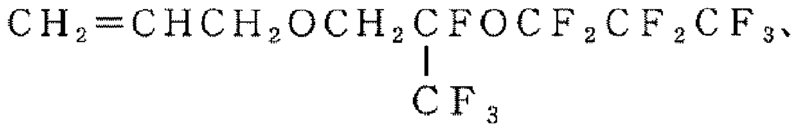

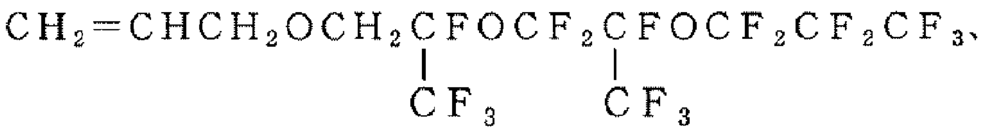

$$CH_2=CH\text{-}(CF_2CF_2)_2\text{-}F$$、

$$CH_2=CH\text{-}(CF_2CF_2)_4\text{-}F$$

The polymer (I) normally has an end group. The end group is an end group produced during polymerization, and a representative end group is independently selected from hydrogen, iodine, bromine, linear or branched alkyl groups, and linear or branched fluoroalkyl groups, and may optionally contain at least one catenary heteroatom. It is preferable that the alkyl group or fluoroalkyl group has 1 to 20 carbon atoms.

These end groups are generally produced from the initiator or chain transfer agent used to form the polymer (I), or produced during the chain transfer reaction.

The content of the polymerized unit (I) in the polymer (I) is preferably 1.0 mol% or more, more preferably 3.0 mol% or more, still more preferably 5.0 mol% or more, further preferably 10 mol% or more, still further preferably 20 mol% or more, and particularly preferably 30 mol% or more, based on all polymerized units. The content thereof is more preferably 40 mol% or more, still more preferably 60 mol% or more, further preferably 80 mol% or more, particularly preferably 90 mol% or more, and still further preferably substantially 100 mol%. It is most preferable that the polymer (I) contains only the polymerized unit (I).

In the polymer (I), the content of the polymerized unit derived from the other monomer copolymerizable with the monomer represented by the general formula (I) is preferably 99.0 mol% or less, more preferably 97.0 mol% or less, still more preferably 95.0 mol% or less, further preferably 90 mol% or less, still further preferably 80 mol% or less, and particularly preferably 70 mol% or less, based on all polymerized units. The content thereof is more preferably 60 mol% or less, still more preferably 40 mol% or less, further preferably 20 mol% or less, particularly preferably 10 mol% or less, and still further preferably substantially 0 mol%. It is even further preferable that the polymerized unit derived from the other monomer is not contained.

The number average molecular weight of the polymer (I) is preferably $0.1 \times 10^4$ or more, more preferably $0.2 \times 10^4$ or more, still more preferably $0.3 \times 10^4$ or more, further preferably $0.4 \times 10^4$ or more, still further preferably $0.5 \times 10^4$ or more, particularly preferably $1.0 \times 10^4$ or more, even further preferably $3.0 \times 10^4$ or more, and most preferably $3.1 \times 10^4$ or more. The number average molecular weight thereof is also preferably $75.0 \times 10^4$ or less, more preferably $50.0 \times 10^4$ or less, still more preferably $40.0 \times 10^4$ or less, still further preferably $30.0 \times 10^4$ or less, and particularly preferably $20.0 \times 10^4$ or less. The number average molecular weight and the weight average molecular weight described later are values calculated by gel permeation chromatography (GPC) using monodisperse polystyrene as a standard. Also, in the case where measurement by GPC is not possible, the number average molecular weight of the polymer (I) can be determined by the correlation between the number average molecular weight calculated from the number of end groups obtained by NMR, FT-IR, or the like and the melt flow rate. The melt flow rate can be measured in accordance with JIS K 7210.

The weight average molecular weight of the polymer (I) is preferably $0.2 \times 10^4$ or more, more preferably $0.4 \times 10^4$ or more, still more preferably $0.6 \times 10^4$ or more, further preferably $0.8 \times 10^4$ or more, particularly preferably $1.0 \times 10^4$ or more, more particularly preferably $5.0 \times 10^4$ or more, still more particularly preferably $10.0 \times 10^4$ or more, still further preferably $15.0 \times 10^4$ or more, even further preferably $20.0 \times 10^4$ or more, and most preferably $25.0 \times 10^4$ or more. The weight average molecular weight thereof is also preferably $150.0 \times 10^4$ or less, more preferably $100.0 \times 10^4$ or less, still more preferably $60.0 \times 10^4$ or less, particularly preferably $50.0 \times 10^4$ or less, and still further preferably $40.0 \times 10^4$ or less.

It is preferable that the polymer (I) has an ion exchange rate (IXR) of 53 or less. The IXR is defined as the number of carbon atoms in the polymer main chain relative to the ionic groups. Precursor groups that become ionic by hydrolysis (for example, $-SO_2F$) are not considered to be ionic groups, for the purpose of determining the IXR.

The IXR is preferably 0.5 or more, more preferably 1 or more, still more preferably 3 or more, further preferably 4

or more, still further preferably 5 or more, and particularly preferably 8 or more. The IXR is also more preferably 43 or less, still more preferably 33 or less, and particularly preferably 23 or less.

The ion exchange capacity of the polymer (I) is, in the preferred order, 0.80 meg/g or more, 1.50 meg/g or more, 1.75 meg/g or more, 2.00 meg/g or more, 2.50 meg/g or more, 2.60 meg/g or more, 3.00 meg/g or more, or 3.50 meg/g or more. The ion exchange capacity is the content of ionic groups (anionic groups) in the polymer (I) and can be determined by calculation from the compositional features of the polymer (I).

In the polymer (I), the ionic groups are typically distributed along the polymer main chain. The polymer (I) comprises the polymer main chain together with repeating side chains bonded to this main chain, and these side chains preferably have ionic groups.

The polymer (I) preferably comprises ionic groups having a pKa of less than 10, more preferably less than 7. The ionic groups of the polymer (I) are preferably selected from the group consisting of sulfonate, carboxylate, phosphonate, and phosphate.

The term "sulfonate, carboxylate, phosphonate, and phosphate" is intended to refer to the respective salts or the respective acids that can form the salts. When a salt is used, that salt is preferably an alkali metal salt or an ammonium salt. The preferred ionic group is a sulfonate group.

It is preferable that the polymer (I) has water-solubility. The term "water-solubility" refers to the property of being easily dissolved or dispersed in an aqueous medium. When the polymer (I) has water-solubility, the particle size thereof cannot be measured by, for example, dynamic light scattering (DLS). On the other hand, when the polymer (I) has water-insolubility, the particle size thereof can be measured by, for example, dynamic light scattering (DLS).

The polymer (I) may be produced by a conventionally known method, provided that any of the above monomers are used.

In the pretreatment aqueous dispersion, it is preferable that the content of the polymer (I) is 0.0001 to 15% by mass based on the aqueous dispersion. When the content of the polymer (I) is less than 0.0001% by mass, the dispersion stability may deteriorate, and when the content thereof is more than 15% by mass, dispersion effects commensurate with the amount thereof may not be obtained, which is impractical.

The content of the polymer (I) can be determined by, for example, solid-state $^{19}$F-MAS NMR measurement.

Examples of a method for measuring the content of the polymer (I) include methods for measuring the content of the polymer disclosed in International Publication No. WO2014/099453, International Publication No. WO2010/075497, International Publication No. WO2010/075496, International Publication No. WO2011/008381, International Publication No. WO2009/055521, International Publication No. WO1987/007619, Japanese Patent Laid-Open No. 61-293476, International Publication No. WO2010/075494, International Publication No. WO2010/075359, International Publication No. WO2012/082454, International Publication No. WO2006/119224, International Publication No. WO2013/085864, International Publication No. WO2012/082707, International Publication No. WO2012/082703, International Publication No. WO2012/082454, International Publication No. WO2012/082451, International Publication No. WO2006/135825, International Publication No. WO2004/067588, International Publication No. WO2009/068528, Japanese Patent Laid-Open No. 2004-075978, Japanese Patent Laid-Open No. 2001-226436, International Publication No. WO1992/017635, International Publication No. WO2014/069165, Japanese Patent Laid-Open No. 11-181009

Specific examples of the device used therefor include AVANCE III HD400 manufactured by Bruker and AVANCE300 manufactured by Bruker.

The rotation speed is set according to the resonance frequency of the device, and is set such that the spinning side band does not overlap the peaks used for the content calculation of the fluoropolymer or the polymer (I).

For example, when the polymer (I) is a copolymer of TFE and a monomer represented by $CH_2=CF(CF_2OCFCF_3COONH_4)$ and the content of the copolymer of TFE and the monomer represented by $CH_2=CF(CF_2OCFCF_3COONH_4)$ in the pretreatment aqueous dispersion is determined, the rotation speed may be set to 30 kHz when using AVANCE300 manufactured by Bruker Japan KK.

For example, when the polymer (I) is a copolymer of TFE and a monomer represented by $CH_2=CF(CF_2OCFCF_3COONH_4)$, the content of the copolymer of TFE and the monomer represented by $CH_2=CF(CF_2OCFCF_3COONH_4)$ in the pretreatment aqueous dispersion can be determined from the spectrum obtained by solid-state $^{19}$F-MAS NMR measurement (rotation speed 30 kHz) using the following formula.

$$Y = (400B/(5xA + 3xB)) \times 100$$

Y: content of copolymer of TFE and monomer represented by $CH_2=CF(CF_2OCFCF_3COONH_4)$ (mol%)

A: integration value of signal at -120 ppm

B: sum of integration values of $CF_2$ and $CF_3$ signals at -83 ppm

The chemical shift value used was that when the peak top of the signal derived from the main chain of PTFE was

-120 ppm.

x: ratio (mol%) of polymerized unit derived from the monomer represented by $CH_2=CF(CF_2OCFCF_3COONH_4)$ in the copolymer of TFE and the monomer represented by $CH_2=CF\ (CF_2OCFCF_3COONH_4)$ .

The pretreatment aqueous dispersion is obtained by polymerization in the presence of the polymer (I). More specifically, it is obtained by polymerizing a fluoromonomer in an aqueous medium in the presence of the polymer (I), with the proviso that the fluoromonomer is other than the monomer represented by the general formula (I). The first production method of the present disclosure may comprise a step C of polymerizing a fluoromonomer in an aqueous medium in the presence of the polymer (I) to provide an aqueous dispersion containing a fluoropolymer (pretreatment aqueous dispersion) before the step A.

The fluoromonomer preferably has at least one double bond. The fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VDF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula (100): $CHX^{101}=CX^{102}Rf^{101}$ (wherein one of $X^{101}$ and $X^{102}$ is H and the other is F, and $Rf^{101}$ is a linear or branched fluoroalkyl group having 1 to 12 carbon atoms), a fluorinated vinyl heterocyclic compound, and a monomer that provides a crosslinking site.

The fluoroalkyl vinyl ether is preferably, for example, at least one selected from the group consisting of:

a fluoromonomer represented by the general formula (110) :

$$CF_2=CF-ORf^{111}$$

wherein $Rf^{111}$ represents a perfluoroorganic group;
a fluoromonomer represented by the general formula (120) :

$$CF_2=CF-OCH_2-Rf^{121}$$

wherein $Rf^{121}$ represents a perfluoroalkyl group having 1 to 5 carbon atoms;
a fluoromonomer represented by the general formula (130) :

$$CF_2=CFOCF_2ORf^{131}$$

wherein $Rf^{131}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by the general formula (140) :

$$CF_2=CFO(CF_2CF(Y^{141})O)_m(CF_2)_nF$$

wherein $Y^{141}$ represents a fluorine atom or a trifluoromethyl group; m is an integer of 1 to 4; and n is an integer of 1 to 4; and
a fluoromonomer represented by the general formula (150) :

$$CF_2=CF-O-(CF_2CFY^{151}-O)_n-(CFY^{152})_m-A^{151}$$

wherein $Y^{151}$ represents a fluorine atom, a chlorine atom, a $-SO_2F$ group, or a perfluoroalkyl group; the perfluoroalkyl group optionally contains ether oxygen and a $-SO_2F$ group; n represents an integer of 0 to 3; n $Y^{151}$s are the same as or different from each other; $Y^{152}$ represents a fluorine atom, a chlorine atom, or a $-SO_2F$ group; m represents an integer of 1 to 5; m $Y^{152}$s are the same as or different from each other; $A^{151}$ represents $-SO_2X^{151}$, $-COZ^{151}$, or $-POZ^{152}Z^{153}$; $X^{151}$ represents F, Cl, Br, I, $-OR^{151}$, or $-NR^{152}R^{153}$; $Z^{151}$, $Z^{152}$, and $Z^{153}$ are the same as or different from each other, and each represent $-NR^{154}R^{155}$ or $-QR^{156}$; $R^{151}$, $R^{152}$, $R^{153}$, $R^{154}$, $R^{155}$, and $R^{156}$ are the same as or different from each other, and each represent H, ammonium, an alkali metal, or an alkyl group, aryl group, or sulfonyl-containing group optionally containing a fluorine atom.

The "perfluoroorganic group" as used herein means an organic group in which all hydrogen atoms bonded to the carbon atoms are replaced by fluorine atoms. The perfluoroorganic group optionally has ether oxygen.

An example of the fluoromonomer represented by the general formula (110) is a fluoromonomer in which $Rf^{111}$ is a perfluoroalkyl group having 1 to 10 carbon atoms. The perfluoroalkyl group preferably has 1 to 5 carbon atoms.

Examples of the perfluoroorganic group in the general formula (110) include a perfluoromethyl group, a perfluoroethyl group, a perfluoropropyl group, a perfluorobutyl group, a perfluoropentyl group, and a perfluorohexyl group.
Examples of the fluoromonomer represented by the general formula (110) also include those represented by the general formula (110) in which $Rf^{111}$ is a perfluoro(alkoxyalkyl) group having 4 to 9 carbon atoms; those in which $Rf^{111}$ is a group represented by the following formula:

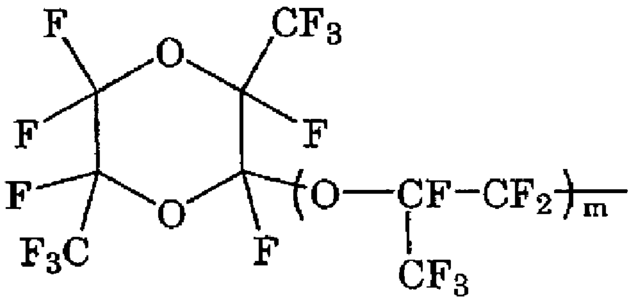

wherein m represents 0 or an integer of 1 to 4; and those in which $Rf^{111}$ is a group represented by the following formula:

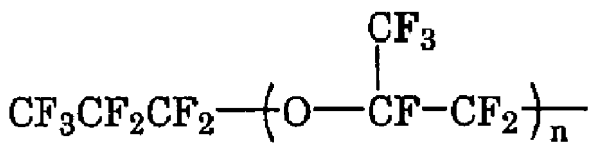

wherein n represents an integer of 1 to 4.
Of these, the fluoromonomer represented by the general formula (110) is preferably

a fluoromonomer represented by the general formula (160):

$CF_2=CF-ORf^{161}$

wherein $Rf^{161}$ represents a perfluoroalkyl group having 1 to 10 carbon atoms. $Rf^{161}$ is preferably a perfluoroalkyl group having 1 to 5 carbon atoms.

The fluoroalkyl vinyl ether is preferably at least one selected from the group consisting of fluoromonomers represented by the general formulas (160), (130), and (140).
The fluoromonomer represented by the general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).
The fluoromonomer represented by the general formula (130) is preferably at least one selected from the group consisting of $CF_2=CFOCF_2OCF_3$, $CF_2=CFOCF_2OCF_2CF_3$, and $CF_2=CFOCF_2OCF_2CF_2OCF_3$.
The fluoromonomer represented by the general formula (140) is preferably at least one selected from the group consisting of $CF_2=CFOCF_2CF(CF_3)O(CF_2)_3F$, $CF_2=CFO(CF_2CF(CF_3)O)_2(CF_2)_3F$, and $CF_2=CFO(CF_2CF(CF_3)O)_2(CF_2)_2F$.
The fluoromonomer represented by the general formula (150) is preferably at least one selected from the group consisting of $CF_2=CFOCF_2CF_2SO_2F$, $CF_2=CFOCF_2CF(CF_3)OCF_2CF_2SO_2F$, $CF_2=CFOCF_2CF(CF_2CF_2SO_2F)OCF_2CF_2SO_2F$, and $CF_2=CFOCF_2CF(SO_2F)_2$.
The fluoromonomer represented by the general formula (100) is preferably a fluoromonomer in which $Rf^{101}$ is a linear fluoroalkyl group, and more preferably a fluoromonomer in which $Rf^{101}$ is a linear perfluoroalkyl group. $Rf^{101}$ preferably has 1 to 6 carbon atoms. Examples of the fluoromonomer represented by the general formula (100) include $CH_2=CFCF_3$, $CH_2=CFCF_2CF_3$, $CH_2=CFCF_2CF_2CF_3$, $CH_2=CFCF_2CF_2CF_2H$, $CH_2=CFCF_2CF_2CF_2CF_3$, $CHF=CHCF_3$ (E isomer), and $CHF=CHCF_3$ (Z isomer), of which preferred is 2,3,3,3-tetrafluoropropylene represented by $CH_2=CFCF_3$.
The fluoroalkyl ethylene is preferably a fluoroalkyl ethylene represented by the general formula (170):

$CH_2=CH-(CF_2)_n-X^{171}$

(wherein $X^{171}$ is H or F; and n is an integer of 3 to 10), and more preferably at least one selected from the group consisting of $CH_2=CH-C_4F_9$ and $CH_2=CH-C_6F_{13}$.

An example of the fluoroalkyl allyl ether is a fluoromonomer represented by the general formula (180):

$$CF_2=CF-CF_2-ORf^{111}$$

wherein $Rf^{111}$ represents a perfluoro organic group.

$Rf^{111}$ in the general formula (180) is the same as $Rf^{111}$ in the general formula (110). $Rf^{111}$ is preferably a perfluoroalkyl group having 1 to 10 carbon atoms or a perfluoroalkoxyalkyl group having 1 to 10 carbon atoms. The fluoroalkyl allyl ether represented by the general formula (180) is preferably at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably at least one selected from the group consisting of $CF_2=CF-CF_2-O-C_2F_5$, $CF_2=CF-CF_2-O-C_3F_7$, and $CF_2=CF-CF_2-O-C_4F_9$, and still more preferably $CF_2=CF-CF_2-O-CF_2CF_2CF_3$.

An example of the fluorinated vinyl heterocyclic compound is a fluorinated vinyl heterocyclic compound represented by the general formula (230):

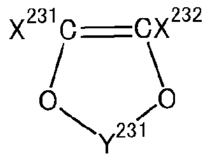

wherein $X^{231}$ and $X^{232}$ are each independently F, Cl, a methoxy group, or a fluorinated methoxy group; and $Y^{231}$ is represented by the formula $Y^{232}$ or the formula $Y^{233}$:

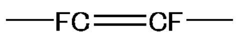

($Y^{232}$)

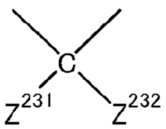

($Y^{233}$)

wherein $Z^{231}$ and $Z^{232}$ are each independently F or a fluorinated alkyl group having 1 to 3 carbon atoms.

The monomer that provides a crosslinking site is preferably at least one selected from the group consisting of:

a fluoromonomer represented by the general formula (180) :

$$CX^{181}{}_2=CX^{182}-R_f{}^{181}CHR^{181}X^{183}$$

wherein $X^{181}$ and $X^{182}$ are each independently a hydrogen atom, a fluorine atom, or $CH_3$; $R_f{}^{181}$ is a fluoroalkylene group, a perfluoroalkylene group, a fluoro(poly)oxyalkylene group, or a perfluoro(poly)oxyalkylene group; $R^{181}$ is a hydrogen atom or $CH_3$; and $X^{183}$ is an iodine atom or a bromine atom;

a fluoromonomer represented by the general formula (190) :

$$CX^{191}{}_2=CX^{192}-R_f{}^{191}X^{193}$$

wherein $X^{191}$ and $X^{192}$ are each independently a hydrogen atom, a fluorine atom, or $CH_3$; $R_f{}^{191}$ is a fluoroalkylene group, a perfluoroalkylene group, a fluoropolyoxyalkylene group, or a perfluoropolyoxyalkylene group; and $X^{193}$ is an iodine atom or a bromine atom;

a fluoromonomer represented by the general formula (200):

$$CF_2=CFO(CF_2CF(CF_3)O)_m(CF_2)_n-X^{201}$$

wherein m is an integer of 0 to 5; n is an integer of 1 to 3; and $X^{201}$ is a cyano group, a carboxyl group, an alkoxycarbonyl group, an iodine atom, a bromine atom, or $-CH_2I$; and

a fluoromonomer represented by the general formula (210):

$$CH_2=CFCF_2O(CF(CF_3)CF_2O)_m(CF(CF_3))_n-X^{211}$$

wherein m is an integer of 0 to 5; n is an integer of 1 to 3; and $X^{211}$ is a cyano group, a carboxyl group, an alkoxycarbonyl group, an iodine atom, a bromine atom, or-$CH_2OH$; and
a monomer represented by the general formula (220):

$$CR^{221}R^{222}=CR^{223}-Z^{221}-CR^{224}=CR^{225}R^{226}$$

wherein $R^{221}$, $R^{222}$, $R^{223}$, $R^{224}$, $R^{225}$, and $R^{226}$ are the same as or different from each other, and are each a hydrogen atom or an alkyl group having 1 to 5 carbon atoms; $Z^{221}$ is a linear or branched alkylene group having 1 to 18 carbon atoms and optionally having an oxygen atom, a cycloalkylene group having 3 to 18 carbon atoms, an at least partially fluorinated alkylene or oxyalkylene group having 1 to 10 carbon atoms, or a (per)fluoropolyoxyalkylene group which is represented by:

$$-(Q)_p-CF_2O-(CF_2CF_2O)_m(CF_2O)_n-CF_2-(Q)_p-$$

(wherein Q is an alkylene group or an oxyalkylene group; p is 0 or 1; and m/n is 0.2 to 5) and has a molecular weight of 500 to 10,000.

$X^{183}$ and $X^{193}$ are each preferably an iodine atom. $R_f^{181}$ and $R_f^{191}$ are each preferably a perfluoroalkylene group having 1 to 5 carbon atoms. $R^{181}$ is preferably a hydrogen atom. $X^{201}$ is preferably a cyano group, an alkoxycarbonyl group, an iodine atom, a bromine atom, or -$CH_2I$. $X^{211}$ is preferably a cyano group, an alkoxycarbonyl group, an iodine atom, a bromine atom, or -$CH_2OH$.

The monomer that provides a crosslinking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$, and $CF_2=CFO(CF_2)_5CN$, and is more preferably at least one selected from the group consisting of $CF_2=CFOCF_2CF(CF_3)OCF_2CF_2CN$ and $CF_2=CFOCF_2CF_2CH_2I$.

In the step C, the fluoromonomer may be polymerized with a fluorine-free monomer. An example of the fluorine-free monomer is a hydrocarbon monomer reactive with the fluoromonomer. Examples of the hydrocarbon monomer include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, monochlorovinyl acetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; and alkyl allyl esters such as ethyl allyl ester, propyl allyl ester, butyl allyl ester, isobutyl allyl ester, and cyclohexyl allyl ester.

The fluorine-free monomer may also be a functional group-containing hydrocarbon monomer (other than monomers that provide a crosslinking site). Examples of the functional group-containing hydrocarbon monomer include hydroxy alkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having carboxyl groups such as itaconic acid, succinic acid, succinic anhydride, fumaric acid, fumaric anhydride, crotonic acid, maleic acid, maleic anhydride, and perfluorobutenoic acid; fluorine-free monomers having a glycidyl group such as glycidyl vinyl ether and glycidyl allyl ether; fluorine-free monomers having an amino group such as aminoalkyl vinyl ether and aminoalkyl allyl ether; and fluorine-free monomers having an amide group such as (meth)acrylamide and methylol acrylamide.

In the step C, a pretreatment aqueous dispersion containing desired fluoropolymer particles can be obtained by polymerizing one or two or more of the above fluoromonomers.

In the step C, the total amount of the polymer (I) added is preferably 0.0001 to 10% by mass based on 100% by mass of the aqueous medium. The lower limit thereof is more preferably 0.001% by mass, while the upper limit thereof is more preferably 1% by mass. Less than 0.0001% by mass of the polymer (I) may cause insufficient dispersibility. More than 10% by mass of the polymer (I) may fail to give the effects corresponding to its amount; on the contrary, such an amount of the polymer (I) may cause a reduction in the polymerization rate or even stop the reaction. The amount of the compound added is appropriately determined in accordance with factors such as the types of the monomers used and the molecular weight of the target fluoropolymer.

It is also preferable that the step C further includes a step of continuously adding the polymer (I).

Adding the polymer (I) continuously means, for example, adding the polymer (I) not all at once, but adding over time and without interruption or adding in portions. The polymer (I) may be added in the form of an aqueous solution by

preparing an aqueous solution containing the polymer (I) and water.

In the step C, the step of continuously adding the polymer (I) is preferably a step of starting to add the polymer (I) to the aqueous medium when the solid content of the fluoropolymer formed in the aqueous medium is 0.5% by mass or less and of continuously adding the polymer (I) thereafter. The polymer (I) is more preferably started to be added when the solid content is 0.3% by mass or less, still more preferably started to be added when the solid content is 0.2% by mass or less, further preferably started to be added when the solid content is 0.1% by mass or less, and particularly preferably started to be added when the polymerization is initiated. The solid content is the concentration of the fluoropolymer based on the total amount of the aqueous medium and the fluoropolymer.

In the step C, the amount of the polymer (I) added is preferably 0.0001 to 10% by mass based on 100% by mass of the aqueous medium. The lower limit thereof is preferably 0.001% by mass, more preferably 0.01% by mass, and still more preferably 0.1% by mass. The upper limit thereof is preferably 10% by mass, more preferably 1.0% by mass, and still more preferably 0.50% by mass.

Also, in the step of continuously adding the polymer (I), the polymer (I) is preferably added in an amount of 0.0001 to 10% by mass, based on 100% by mass of the aqueous medium. The lower limit thereof is preferably 0.001% by mass, more preferably 0.01% by mass, and still more preferably 0.1% by mass. The upper limit thereof is preferably 10% by mass, more preferably 1.0% by mass, and still more preferably 0.50% by mass.

Less than 0.0001% by mass of the polymer (I) may cause insufficient dispersibility. More than 10% by mass of the polymer (I) may fail to give the effects corresponding to its amount; on the contrary, such an amount of the polymer (I) may cause a reduction in the polymerization rate or even stop the reaction. The amount of the compound added is appropriately determined in accordance with factors such as the types of the monomers used and the molecular weight of the target fluoropolymer.

In the step C, the presence of at least one of the polymers (I) can efficiently produce a fluoropolymer. Also, two or more of the compounds encompassed in the polymer (I) may be used at the same time as the surfactant, and a compound having a surfactant function other than the polymer (I) may also be used in combination insofar as the compound is volatile or is allowed to remain in a molded body formed from the fluoropolymer or the like.

In the step C, a nucleating agent may be used. The nucleating agent is preferably used in an amount appropriately selected in accordance with the type of the nucleating agent. For example, the amount thereof is preferably 1,000 ppm by mass or less, more preferably 500 ppm by mass or less, still more preferably 100 ppm by mass or less, particularly preferably 50 ppm by mass or less, and still further preferably 10 ppm by mass or less, based on the aqueous medium.

Furthermore, it is preferable that the step C includes a step of adding a nucleating agent to the aqueous medium before the initiation of polymerization or when the concentration of the fluoropolymer such as polytetrafluoroethylene particles formed in the aqueous medium is 5.0% by mass or less. Adding the nucleating agent at the initial stage of the polymerization allows for obtaining an aqueous dispersion having a small average primary particle size and excellent stability.

The amount of the nucleating agent added before the initiation of polymerization or when the concentration of the fluoropolymer such as PTFE particles formed in the aqueous medium is 5.0% by mass or less is preferably 0.001% by mass or more, more preferably 0.01% by mass or more, still more preferably 0.05% by mass or more, and further preferably 0.1% by mass or more, based on the resulting fluoropolymer such as polytetrafluoroethylene. The upper limit thereof may be, but is not limited to, 2,000% by mass.

The use of the above nucleating agent allows for obtaining a fluoropolymer having a smaller primary particle size than that in the case of polymerization in the absence of the above nucleating agent.

Examples of the nucleating agent include dicarboxylic acids, perfluoropolyether (PFPE) acids or salts thereof, and hydrocarbon-containing surfactants. The nucleating agent is preferably free from an aromatic ring, and is preferably an aliphatic compound.

Although the nucleating agent is preferably added before addition of the polymerization initiator or simultaneously with addition of the polymerization initiator, it is also possible to adjust the particle size distribution by adding the nucleating agent during the polymerization.

The amount of the dicarboxylic acid is preferably 1,000 ppm by mass or less, more preferably 500 ppm by mass or less, and still more preferably 100 ppm by mass or less, based on the aqueous medium.

The perfluoropolyether (PFPE) acids or salts thereof may have any chain structure in which the oxygen atoms in the main chain of the molecule are separated by saturated carbon fluoride groups having 1 to 3 carbon atoms. Two or more carbon fluoride groups may be present in the molecule. Representative structures thereof have the repeating units represented by the following formulas:

$$(\text{-CFCF}_3\text{-CF}_2\text{-O-})_n \qquad \text{(VII)}$$

$$(\text{-CF}_2\text{-CF}_2\text{-CF}_2\text{-O-})_n \qquad \text{(VIII)}$$

$$(-CF_2-CF_2-O-)_n-(-CF_2-O-)_m \qquad (IX)$$

$$(-CF_2-CFCF_3-O-)_n-(-CF_2-O-)_m \qquad (X)$$

These structures are described in Kasai, J. Appl. Polymer Sci., 57, 797(1995). As disclosed in this document, the PFPE acid or a salt thereof may have a carboxylic acid group or a salt thereof at one end or both ends. The PFPE acid or a salt thereof may also have a sulfonic acid, a phosphonic acid group, or a salt thereof at one end or both ends. The PFPE acid or a salt thereof may have different groups at each end. Regarding monofunctional PFPE, the other end of the molecule is usually perfluorinated, but may contain a hydrogen or chlorine atom. The PFPE acid or a salt thereof has at least two ether oxygen atoms, preferably at least four ether oxygen atoms, and still more preferably at least six ether oxygen atoms. Preferably, at least one carbon fluoride group separating ether oxygen atoms, more preferably at least two of such carbon fluoride groups, have 2 or 3 carbon atoms. Still more preferably, at least 50% of the carbon fluoride groups separating ether oxygen atoms has 2 or 3 carbon atoms. Also preferably, the PFPE acid or a salt thereof has at least 15 carbon atoms in total, and for example, a preferable minimum value of n or n + m in the repeating unit structure is preferably at least 5. Two or more of the PFPE acids and salts thereof having an acid group at one end or both ends may be used in the first production method of the present disclosure. The PFPE acid or a salt thereof preferably has a number average molecular weight of less than 6,000 g/mol.

The hydrocarbon-containing surfactant is preferably added in an amount of 50 ppm by mass or less, more preferably 40 ppm by mass or less, still more preferably 30 ppm by mass or less, and further preferably 20 ppm by mass or less, based on the aqueous medium. The amounts in ppm of the oleophilic nucleation sites present in the aqueous medium will be less than the amounts in ppm disclosed herein as being added to the aqueous medium. Thus, the amounts of oleophilic nucleation sites will each be less than the 50 ppm by mass, 40 ppm by mass, 30 ppm by mass, and 20 ppm by mass as described above. Since it is considered that oleophilic nucleation sites exist as molecules, only a small amount of the hydrocarbon-containing surfactant can generate a large amount of oleophilic nucleation sites. Thus, addition of as little as 1 ppm by mass of the hydrocarbon-containing surfactant to the aqueous medium can provide beneficial effect. The lower limit value thereof is preferably 0.01 ppm by mass, and more preferably 0.1 ppm by mass.

The hydrocarbon-containing surfactant encompasses nonionic surfactants and cationic surfactants, including siloxane surfactants such as those disclosed in U.S. Patent No. 7,897,682 (Brothers et al.) and U.S. Patent No. 7,977,438 (Brothers et al.).

The hydrocarbon-containing surfactant is preferably a nonionic surfactant (for example, a nonionic hydrocarbon surfactant). In other words, the nucleating agent is preferably a nonionic surfactant. The nonionic surfactant is preferably free from an aromatic moiety.

Examples of the nonionic surfactant include a compound represented by the following general formula (i) :

$$R^3-O-A^1-H \qquad (i)$$

wherein $R^3$ is a linear or branched primary or secondary alkyl group having 8 to 18 carbon atoms, and $A^1$ is a polyoxyalkylene chain.

$R^3$ preferably has 10 to 16, more preferably 12 to 16 carbon atoms. When $R^3$ has 18 or less carbon atoms, the aqueous dispersion tends to have good dispersion stability. Further, when $R^3$ has more than 18 carbon atoms, it is difficult to handle due to its high flowing temperature. When $R^3$ has less than 8 carbon atoms, the surface tension of the aqueous dispersion becomes high, so that the permeability and wettability are likely to decrease.

The polyoxyalkylene chain may be composed of oxyethylene and oxypropylene. The polyoxyalkylene chain is composed of an average repeating number of 5 to 20 oxyethylene groups and an average repeating number of 0 to 2 oxypropylene groups, and is a hydrophilic group. The number of oxyethylene units may have either a broad or narrow monomodal distribution as typically supplied, or a broader or bimodal distribution which may be obtained by blending. When the average number of repeating oxypropylene groups is more than 0, the oxyethylene groups and oxypropylene groups in the polyoxyalkylene chain may be arranged in blocks or randomly.

From the viewpoint of viscosity and stability of the aqueous dispersion, a polyoxyalkylene chain composed of an average repeating number of 7 to 12 oxyethylene groups and an average repeating number of 0 to 2 oxypropylene groups is preferred. In particular, when $A^1$ has 0.5 to 1.5 oxypropylene groups on average, low foaming properties are good, which is preferable.

More preferably, $R^3$ is (R') (R")HC-, where R' and R" are the same or different linear, branched, or cyclic alkyl groups, and the total amount of carbon atoms is at least 5, preferably 7 to 17. Preferably, at least one of R' and R" is a branched or cyclic hydrocarbon group.

Specific examples of the compound (polyoxyethylene alkyl ether) represented by the general formula (i) include $C_{13}H_{27}-O-(C_2H_4O)_{10}-H$, $C_{13}H_{27}-O-(C_2H_4O)_8-H$, $C_{12}H_{25}-O-(C_2H_4O)_{10}-H$, $C_{10}H_{21}CH(CH_3)CH_2-O-(C_2H_4O)_9-H$, $C_{13}H_{27}-O-(C_2H_4O)_9-(CH(CH_3)CH_2O)-H$, $C_{16}H_{33}-O-(C_2H_4O)_{10}-H$, and $HC(C_5H_{11})(C_7H_{15})-O-(C_2H_4O)_9-H$. Examples of

commercially available products of the compound (polyoxyethylene alkyl ether) represented by the general formula (i) include Genapol X080 (product name, manufactured by Clariant), the NOIGEN TDS series (manufactured by DKS Co., Ltd.) exemplified by NOIGEN TDS-80 (trade name), the LEOCOL TD series (manufactured by Lion Corp.) exemplified by LEOCOL TD-90 (trade name), the LIONOL (R) TD series (manufactured by Lion Corp.), the T-Det A series (manufactured by Harcros Chemicals Inc.) exemplified by T-Det A 138 (trade name), and the Tergitol (R) 15S series (manufactured by Dow Chemical Co., Ltd.).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all product names, manufactured by Dow Chemical Co., Ltd.).

The hydrophobic group of the nonionic surfactant may be any of an alkylphenol group, a linear alkyl group, and a branched alkyl group.

Examples of the polyoxyethylene alkylphenyl ether-based nonionic compound include, for example, a compound represented by the following general formula (ii):

$$R^4\text{-}C_6H_4\text{-O-}A^2\text{-H} \qquad \text{(ii)}$$

wherein $R^4$ is a linear or branched primary or secondary alkyl group having 4 to 12 carbon atoms, and $A^2$ is a polyoxyalkylene chain. Specific examples of the polyoxyethylene alkylphenyl ether-based nonionic compound include Triton (R) X-100 (trade name, manufactured by Dow Chemical Co., Ltd.).

Examples of the nonionic surfactant also include polyol compounds. Specific examples thereof include those described in International Publication No. WO2011/014715.

Typical examples of the polyol compound include compounds having one or more sugar units as a polyol unit. The sugar units may have been modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as the polyol compound include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars have been modified in that one or more of the hydrogen atoms of a hydroxy group (and/or hydroxyalkyl group) bonded to the carbon ring atoms has been substituted by the long chain residues such that an ether or ester bond is created between the long chain residue and the sugar moiety.

The sugar-based polyol may contain a single sugar unit or a plurality of sugar units. The single sugar unit or the plurality of sugar units may be modified with long chain moieties as described above. Specific examples of sugar-based polyol compounds include glycosides, sugar esters, sorbitan esters, and mixtures and combinations thereof.

A preferred type of polyol compounds are alkyl or modified alkyl glucosides. These type of surfactants contains at least one glucose moiety. Examples of alkyl or modified alkyl glucosides include compounds represented by:

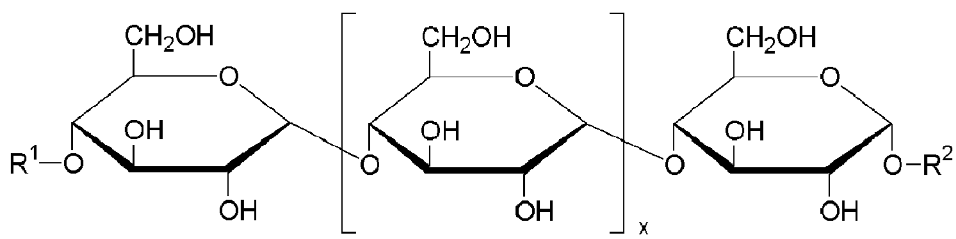

wherein x represents 0, 1, 2, 3, 4, or 5 and $R^1$ and $R^2$ each independently represent H or a long chain unit containing at least 6 carbon atoms, with the proviso that at least one of $R^1$ and $R^2$ is not H. Typical examples of $R^1$ and $R^2$ include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof.

It is understood that the above formula represents specific examples of alkyl poly glucosides showing glucose in its pyranose form but other sugars or the same sugars but in different enantiomeric or diastereomeric forms may also be used.

Alkyl glucosides are available, for example, by acid-catalyzed reactions of glucose, starch, or n-butyl glucoside with aliphatic alcohols which typically yields a mixture of various alkyl glucosides (Alkyl polygylcoside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic (R) R series, tridecyl alcohol alkoxylates supplied from BASF as Iconol (R) TDA series, and hydrocarbon-containing siloxane surfactants, preferably hydrocarbon surfactants. In the sense that the hydrocarbyl groups are fully substituted with hydrogen atoms where they can be substituted by halogen such as fluorine, these siloxane surfactants can also be regarded as hydrocarbon surfactants, i.e. the monovalent substituents on the hydrocarbyl groups are hydrogen.

In the step C, a compound having a functional group capable of reacting by radical polymerization and a hydrophilic group may be used together with the polymer (I). As the compound having a functional group capable of reacting by radical polymerization and a hydrophilic group, the same compound as a modifying monomer (A), which will be described later, can be used.

Also, in the step C, in addition to the polymer (I) and other compounds having a surfactant function used as necessary, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. The stabilizing aids may be used alone or in combination of two or more. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. It is desirable that the stabilizing aid is sufficiently hydrophobic so that the stabilizing aid is completely separated and removed from the pretreatment aqueous dispersion containing the fluoropolymer, such as PTFE dispersion, after polymerization for the fluoropolymer, such as PTFE, and does not serve as a contaminating component.

In the step C, the polymerization is performed by charging a polymerization reactor with an aqueous medium, the polymer (I), monomers, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomers, the polymerization initiator, a chain transfer agent, and the polymer (I) may additionally be added depending on the purpose. The polymer (I) may be added after the polymerization reaction is initiated.

The step C is usually performed at a polymerization temperature of 5 to 120°C and a polymerization pressure of 0.05 to 10 MPaG. The polymerization temperature and the polymerization pressure are determined as appropriate in accordance with the types of the monomers used, the molecular weight of the target fluoropolymer, and the reaction rate.

The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The concentration of the polymerization initiator is appropriately determined depending on the types of the monomers, the molecular weight of the target fluoropolymer, and the reaction rate.

The polymerization initiator to be used may be an oil-soluble radical polymerization initiator or a water-soluble radical polymerization initiator.

The oil-soluble radical polymerization initiator may be a known oil-soluble peroxide, and representative examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluorohexanoyl) peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples thereof include ammonium salts, potassium salts, and sodium salts of persulfuric acid, perboric acid, perchloric acid, perphosphoric acid, and percarbonic acid, organic peroxides such as disuccinic acid peroxide and diglutaric acid peroxide, t-butyl permaleate, and t-butyl hydroperoxide. A reducing agent such as a sulfite or a sulfurous acid salt may be contained together, and the amount thereof may be 0.1 to 20 times the amount of the peroxide.

For example, in a case where the polymerization is performed at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator may preferably contain a copper salt or an iron salt. An example of the copper salt is copper(II) sulfate and an example of the iron salt is iron(II) sulfate.

Examples of the redox initiator include potassium permanganate/oxalic acid, ammonium persulfate/bisulfite/iron sulfate, manganese triacetate/oxalic acid, ammonium cerium nitrate/oxalic acid, and bromate/bisulfite, and potassium permanganate/oxalic acid is preferred. In the case of using a redox initiator, either an oxidizing agent or a reducing agent may be charged into a polymerization tank in advance, followed by adding the other continuously or intermittently thereto to initiate the polymerization. For example, in the case of using potassium permanganate/oxalic acid, preferably, oxalic acid is charged into a polymerization tank and potassium permanganate is continuously added thereto.

The polymerization initiator may be added in any amount, and the initiator in an amount that does not significantly decrease the polymerization rate (e.g., concentration of several ppm in water) or more may be added at once in the initial stage of polymerization, or may be added successively or continuously. The upper limit thereof falls within a range where the reaction temperature is allowed to increase while the polymerization reaction heat is removed through the device surfaces. The upper limit thereof is more preferably within a range where the polymerization reaction heat can be removed through the device surfaces.

The aqueous medium is a reaction medium in which the polymerization is performed, and means a liquid containing water. The aqueous medium may be any medium containing water, and it may be one containing water and, for example, any of fluorine-free organic solvents such as alcohols, ethers, and ketones, and/or fluorine-containing organic solvents having a boiling point of 40°C or lower.

In the step C, known chain transfer agents, radical scavengers, and decomposers may be added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the general formula:

$$R^aI_xBr_y$$

wherein x and y are each an integer of 0 to 2 and satisfy $1 \leq x + y \leq 2$; and $R^a$ is a saturated or unsaturated fluorohydrocarbon or chlorofluorohydrocarbon group having 1 to 16 carbon atoms, or a hydrocarbon group having 1 to 3 carbon atoms, each of which optionally contains an oxygen atom. By using a bromine compound or an iodine compound, iodine or bromine is introduced into the polymer, and serves as a crosslinking point.

Examples of the bromine compound or iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Of these, 1,4-diiodoperfluorobutane, 1,6-diiodoperfluorohexane, and 2-iodoperfluoropropane are preferably

used from the viewpoints of polymerization reactivity, crosslinkability, availability.

The amount of the chain transfer agent used is usually 1 to 50,000 ppm by mass, preferably 1 to 20,000 ppm by mass, based on the total amount of the fluoromonomer fed.

The chain transfer agent may be added to the reaction vessel at once before initiation of the polymerization, may be added at once after initiation of the polymerization, may be added in multiple portions during the polymerization, or may be added continuously during the polymerization.

As the radical scavenger, used is a compound that has no reinitiation ability after addition or chain transfer to free groups in the polymerization system. Specifically, a compound having the function of readily causing a chain transfer reaction with a primary radical or propagating radical and then generating a stable radical that does not react with a monomer or of readily causing an addition reaction with a primary radical or propagating radical to generate a stable radical is used.

In general, those called chain transfer agents are characterized by their activity in terms of chain transfer constant and reinitiation efficiency, and among chain transfer agents, those with almost 0% reinitiation efficiency are called radical scavengers.

The radical scavenger can also be described as, for example, a compound whose chain transfer constant to the fluoromonomer at the polymerization temperature is greater than the polymerization rate constant and whose reinitiation efficiency is substantially 0%. The expression "reinitiation efficiency is substantially 0%" means that the generated radicals make the radical scavenger a stable radical.

Preferably, the radical scavenger is a compound in which the chain transfer constant (Cs) (= chain transfer rate constant (kc)/polymerization rate constant (kp)) to the fluoromonomer at the polymerization temperature is greater than 0.1. The compound more preferably has a chain transfer constant (Cs) of 0.5 or more, still more preferably 1.0 or more, further preferably 5.0 or more, and particularly preferably 10 or more.

The radical scavenger in the present disclosure is preferably at least one selected from the group consisting of, for example, aromatic hydroxy compounds, aromatic amines, N,N-diethylhydroxylamine, quinone compounds, terpenes, thiocyanic acid salts, and cupric chloride ($CuCl_2$).

Examples of the aromatic hydroxy compound include unsubstituted phenols, polyhydric phenols, salicylic acid, m- or p-salicylic acid, gallic acid, and naphthol.

Examples of the unsubstituted phenol include o-, m-, or p-nitrophenol, o-, m-, or p-aminophenol, and p-nitrosophenol. Examples of the polyhydric phenol include catechol, resorcin, hydroquinone, pyrogallol, phloroglucin, and naphthoresorcinol.

Examples of the aromatic amines include o-, m-, or p-phenylenediamine and benzidine.

Examples of the quinone compound include o-, m- or p-benzoquinone, 1,4-naphthoquinone, and alizarin.

Examples of the thiocyanate include ammonium thiocyanate ($NH_4SCN$), potassium thiocyanate (KSCN), and sodium thiocyanate (NaSCN).

As the radical scavenger, aromatic hydroxy compounds are preferred among others, non-substituted phenols or polyvalent phenols are more preferred, and hydroquinone is still more preferred.

From the viewpoint of reducing the standard specific gravity, the amount of the radical scavenger added is preferably an amount equivalent to 3 to 500% (molar basis) of the polymerization initiator concentration. The lower limit is more preferably 5% (molar basis), still more preferably 8% (molar basis), still more preferably 10% (molar basis), further preferably 13% (molar basis) or 15% (molar basis), still further preferably 20% (molar basis), particularly preferably 25% (molar basis), particularly preferably 30% (molar basis), and particularly preferably 35% (molar basis). The upper limit is more preferably 400% (molar basis), still more preferably 300% (molar basis), further preferably 200% (molar basis), and still further preferably 100% (molar basis).

The decomposer of the polymerization initiator may be any compound that can decompose the polymerization initiator used. For example, at least one selected from the group consisting of sulfites, bisulfites, bromates, diimines, diimine salts, oxalic acid, oxalates, copper salts, and iron salts is preferred. Examples of the sulfites include sodium sulfite and ammonium sulfite. An example of the copper salt is copper(II) sulfate and an example of the iron salt is iron(II) sulfate.

The decomposer of the polymerization initiator is added in an amount in the range of 3 to 300% by mass based on the amount of oxidizing agent combined as the polymerization initiator (redox initiator). The amount is preferably 3 to 150% by mass, and still more preferably 15 to 100% by mass.

From the viewpoint of reducing the standard specific gravity, the decomposer of the polymerization initiator is preferably added in an amount equivalent to 3 to 500% (molar basis) of the polymerization initiator concentration. The lower limit is more preferably 5% (molar basis), still more preferably 8% (molar basis), still more preferably 10% (molar basis), still more preferably 13% (molar basis), and further preferably 15% (molar basis). The upper limit is more preferably 400% (molar basis), still more preferably 300% (molar basis), further preferably 200% (molar basis), and still further preferably 100% (molar basis).

During polymerization of the fluoromonomer, the radical scavenger or decomposer of the polymerization initiator is preferably added when the concentration of the fluoropolymer formed in the aqueous medium (concentration based on

the total of aqueous medium and fluoropolymer) is 5% by mass or more. It is more preferably added when the concentration of the fluoropolymer is 8% by mass or more, and still more preferably added when the concentration is 10% by mass or more.

The radical scavenger or decomposer of the polymerization initiator is also preferably added when the concentration of the fluoropolymer formed in the aqueous medium is 40% by mass or less. It is more preferably added when the concentration of the fluoropolymer is 35% by mass or less, and still more preferably added when the concentration is 30% by mass or less.

During polymerization of the fluoromonomer, the radical scavenger or decomposer of the polymerization initiator may be added continuously. During polymerization of the fluoromonomer, the radical scavenger or decomposer of the polymerization initiator can be added not at once, but over time, and without interruption or added in portions.

In the step C, the polymerization initiator used may be an organic peroxide such as a persulfate (e.g., ammonium persulfate), disuccinic acid peroxide, or diglutaric acid peroxide alone or in the form of a mixture thereof. An organic peroxide may also be used together with a reducing agent, such as sodium sulfite, to form a redox system. During the polymerization, a radical scavenger such as hydroquinone or catechol may be added, or a decomposer of the peroxide such as ammonium sulfite may be added, to adjust the radical concentration in the system.

The step C may include a step of polymerizing the fluoromonomer in an aqueous medium in the presence of the polymer (I) to produce an aqueous dispersion of fluoropolymer particles, and a step of seed-polymerizing the fluoromonomer to the fluoropolymer particles in the aqueous dispersion of the fluoropolymer particles.

In the step C, the fluoromonomer is preferably polymerized substantially in the absence of a fluorine-containing surfactant.

Conventionally, fluorine-containing surfactants have been used for the polymerization for fluoropolymers in an aqueous medium, but the first production method of the present disclosure allows for obtaining a fluoropolymer aqueous dispersion with reduced coloring even when the pretreatment aqueous dispersion containing the fluoropolymer is obtained without using the fluorine-containing surfactants.

The expression "substantially in the absence of a fluorine-containing surfactant" as used herein means that the amount of the fluorine-containing surfactant in the aqueous medium is 10 ppm by mass or less, preferably 1 ppm by mass or less, more preferably 100 ppb by mass or less, still more preferably 10 ppb by mass or less, and further preferably 1 ppb by mass or less.

Examples of the fluorine-containing surfactant include anionic fluorine-containing surfactants. The anionic fluorine-containing surfactant may be, for example, a fluorine atom-containing surfactant having 20 or less carbon atoms in total in the portion excluding the anionic group.

The fluorine-containing surfactant may also be a surfactant containing fluorine having a molecular weight of 800 or less in the anionic moiety.

The "anionic moiety" means the portion of the fluorine-containing surfactant excluding the cation. For example, in the case of $F(CF_2)_{n1}COOM$ represented by the formula (I) described later, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

Log POW is determined as follows. Specifically, HPLC is performed on standard substances (heptanoic acid, octanoic acid, nonanoic acid, and decanoic acid) each having a known octanol/water partition coefficient using TOSOH ODS-120Tcolumn ($\phi$4.6 mm $\times$ 250 mm, Tosoh Corp.) as a column and acetonitrile/0.6% by mass $HClO_4$ aqueous solution =1/1 (vol/vol %) as an eluent at a flow rate of 1.0 ml/min, a sample amount of 300 $\mu$L, and a column temperature of 40°C; with a detection light of UV 210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those disclosed in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO2005/042593, International Publication No. WO2008/060461, International Publication No. WO2007/046377, International Publication No. WO2007/119526, International Publication No. WO2007/046482, International Publication No. WO2007/046345, U.S. Patent Application Publication No. 2014/0228531, International Publication No. WO2013/189824, and International Publication No. WO2013/189826.

Examples of the anionic fluorine-containing surfactant include a compound represented by the following general

formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H are replaced by F; the alkylene group optionally containing one or more ether bonds in which some of H are replaced by Cl; and $Y^0$ is an anionic group.

The anionic group $Y^0$ may be -COOM, $-SO_2M$, or $-SO_3M$, and may be -COOM or $-SO_3M$.

M is H, a metal atom, $NR^7_4$, imidazolium optionally having a substituent, pyridinium optionally having a substituent, or phosphonium optionally having a substituent, wherein $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

$Rf^{n0}$ may be one in which 50% or more of H has been replaced by fluorine.

Examples of the compound represented by the general formula ($N^0$) include:

a compound represented by the following general formula ($N^1$):

$$X^{n0}\text{-}(CF_2)_{m1}\text{-}Y^0 \qquad (N^1)$$

wherein $X^{n0}$ is H, Cl, and F; m1 is an integer of 3 to 15; and $Y^0$ is as defined above;

a compound represented by the following general formula ($N^2$):

$$Rf^{n1}\text{-}O\text{-}(CF(CF_3)CF_2O)_{m2}CFX^{n1}\text{-}Y^0 \qquad (N^2)$$

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;

a compound represented by the following general formula ($N^3$):

$$Rf^{n2}(CH_2)_{m3}\text{-}(Rf^{n3})_q\text{-}Y^0 \qquad (N^3)$$

wherein $Rf^{n2}$ is a partially or fully fluorinated alkyl group having 1 to 13 carbon atoms and optionally containing an ether bond; m3 is an integer of 1 to 3; $Rf^{n3}$ is a linear or branched perfluoroalkylene group having 1 to 3 carbon atoms; q is 0 or 1; and $Y^0$ is as defined above;

a compound represented by the following general formula ($N^4$):

$$Rf^{n4}\text{-}O\text{-}(CY^{n1}Y^{n2})_pCF_2\text{-}Y^0 \qquad (N^4)$$

wherein $Rf^{n4}$ is a linear or branched partially or fully fluorinated alkyl group having 1 to 12 carbon atoms and optionally containing an ether bond; and $Y^{n1}$ and $Y^{n2}$ are the same or different and are each H or F; p is 0 or 1; and $Y^0$ is as defined above; and

a compound represented by the general formula ($N^5$):

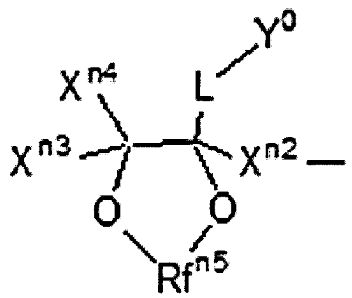

($N^5$)

wherein $X^{n2}$, $X^{n3}$, and $X^{n4}$ may be the same or different and are each H, F, or a linear or branched partially or fully fluorinated alkyl group having 1 to 6 carbon atoms and optionally containing an ether bond; $Rf^{n5}$ is a linear or branched partially or fully fluorinated alkylene group having 1 to 3 carbon atoms and optionally containing an ether bond; L is a

linking group; and $Y^0$ is as defined above, with the proviso that the total carbon number of $X^{n2}$, $X^{n3}$, $X^{n4}$, and $Rf^{n5}$ is 18 or less.

More specific examples of the compound represented by the above general formula ($N^0$) include a perfluorocarboxylic acid (I) represented by the following general formula (I), an ω-H perfluorocarboxylic acid (II) represented by the following general formula (II), a perfluoropolyethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

$$F(CF_2)_{n1}COOM \qquad (I)$$

wherein n1 is an integer of 3 to 14; and M is H, a metal atom, $NR^7_4$, imidazolium optionally having a substituent, pyridinium optionally having a substituent, or phosphonium optionally having a substituent, wherein $R^7$ is H or an organic group.

The ω-H perfluorocarboxylic acid (II) is represented by the following general formula (II):

$$H(CF_2)_{n2}COOM \qquad (II)$$

wherein n2 is an integer of 4 to 15; and M is as defined above.

The perfluoropolyethercarboxylic acid (III) is represented by the following general formula (III):

$$Rf^1\text{-O-}(CF(CF_3)CF_2O)_{n3}CF(CF_3)COOM \qquad (III)$$

wherein $Rf^1$ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

$$Rf^2(CH_2)_{n4}Rf^3COOM \qquad (IV)$$

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$$Rf^4\text{-O-}CY^1Y^2CF_2\text{-COOM} \qquad (V)$$

wherein $Rf^4$ is a linear or branched partially or fully fluorinated alkyl group having 1 to 12 carbon atoms and optionally containing an ether bond; $Y^1$ and $Y^2$ are the same or different and are each H or F; and M is as defined above.

The perfluoroalkylsulfonic acid (VI) is represented by the following general formula (VI):

$$F(CF_2)_{n5}SO_3M \qquad (VI)$$

wherein n5 is an integer of 3 to 14; and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14; and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$Rf^6(CH_2)_{n8}COOM$ (IX)

wherein $Rf^6$ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

$Rf^7$-O-$Rf^8$-O-$CF_2$-COOM (X)

wherein $Rf^7$ is a linear or branched partially or fully fluorinated alkyl group having 1 to 6 carbon atoms and optionally containing an ether bond; $Rf^8$ is a linear or branched partially or fully fluorinated alkyl group having 1 to 6 carbon atoms; and M is as defined above.

The alkoxyfluorosulfonic acid (XI) is represented by the following general formula (XI):

$Rf^9$-O-$CY^1Y^2CF_2$-$SO_3M$ (XI)

wherein $Rf^9$ is a linear or branched partially or fully fluorinated alkyl group having 1 to 12 carbon atoms and optionally containing an ether bond and optionally containing chlorine; $Y^1$ and $Y^2$ are the same or different and are each H or F; and M is as defined above.

The compound (XII) is represented by the following general formula (XII):

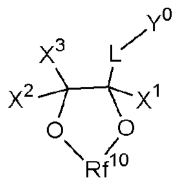

(X I I)

wherein $X^1$, $X^2$, and $X^3$ may be the same or different and are H, F, and a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group.

$Y^0$ may be -COOM, -$SO_2M$, or -$SO_3M$, and may be -$SO_3M$ or COOM, where M is as defined above.

Examples of L include a single bond, a partially or fully fluorinated alkylene group having 1 to 10 carbon atoms and optionally containing an ether bond.

The compound (XIII) is represented by the following general formula (XIII):

$Rf^{11}$-O-$(CF_2CF(CF_3)O)_{n9}(CF_2O)_{n10}CF_2COOM$ (XIII)

wherein $Rf^{11}$ is a fluoroalkyl group having 1 to 5 carbon atoms and containing chlorine, n9 is an integer of 0 to 3, n10 is an integer of 0 to 3, and M is as defined above. An example of the compound (XIII) is $CF_2ClO(CF_2CF(CF_3)O)_{n9}(CF_2O)_{n10}CF_2COONH_4$ (a mixture having an average molecular weight of 750, wherein n9 and n10 are as described above).

As described above, examples of the anionic fluorine-containing surfactant include a carboxylic acid-based surfactant and a sulfonic acid-based surfactant.

By the polymerization, a pretreatment aqueous dispersion containing the fluoropolymer can be provided. The fluoropolymer is usually at a concentration of 8 to 50% by mass in the aqueous dispersion obtained by the polymerization. In the aqueous dispersion, the lower limit of the concentration of the fluoropolymer is preferably 10% by mass, and more preferably 15% by mass, while the upper limit thereof is preferably 40% by mass, and more preferably 35% by mass.

It is preferable that the first production method of the present disclosure comprises a step B of adding a hydrocarbon surfactant to the pretreatment aqueous dispersion before the step A. The aqueous dispersion containing the fluoropolymer obtained by polymerization in the presence of the polymer (I) usually contains the polymer (I) used in the polymerization, but ultrafiltration, microfiltration, or dialysis membrane treatment may reduce the amount of the polymer (I) used in the polymerization and lower the stability of the aqueous dispersion. Therefore, by adding the hydrocarbon surfactant before the step A, the stability of the aqueous dispersion during ultrafiltration, microfiltration, or dialysis membrane treatment can be improved, and the reduction of colored components and the reduction of the amount of hydrogen fluoride generated can be efficiently carried out. The stability of the aqueous dispersion obtained through the step A can also be improved.

The step B may be carried out by, for example, adding water containing the hydrocarbon surfactant.

When the first production method of the present disclosure comprises the above-mentioned step C, the step B is performed after the step C and before the step A.

The hydrocarbon surfactant added in the step B is not limited, and any of the above-mentioned hydrocarbon surfactants can be used, but among them, nonionic surfactants are preferable. As the nonionic surfactants, all of those listed as nucleating agents in the above-mentioned step C can be adopted.

The nonionic surfactants are not limited, and at least one selected from the group consisting of, for example, the compounds represented by the general formula (i) and the compounds represented by the general formula (ii) mentioned above is preferable.

Examples of the fluoropolymer include a TFE polymer (PTFE) in which TFE is the monomer having the highest mole fraction (hereinafter, "most abundant monomer") among the monomers in the polymer, a VDF polymer in which VDF is the most abundant monomer, and a CTFE polymer in which CTFE is the most abundant monomer.

Examples of the fluoropolymer also include: (I) non melt-processible fluororesins, including tetrafluoroethylene polymers (TFE polymers (PTFE)); (II) melt-fabricable fluororesins, including ethylene/TFE copolymers (ETFE), TFE/HFP copolymers (FEP), TFE/perfluoro(alkyl vinyl ether) copolymers (e.g., PFA, MFA), TFE/perfluoroallyl ether copolymers, TFE/VDF copolymers, and electrolyte polymer precursors; and (III) fluoroelastomers, including TFE/propylene copolymers, TFE/propylene/third monomer copolymers (the third monomer may be VDF, HFP, CTFE, fluoroalkyl vinyl ether, or the like), TFE/fluoroalkyl vinyl ether copolymers; HFP/ethylene copolymers, HFP/ethylene/TFE copolymers; PVDF; thermoplastic elastomers such as VDF/HFP copolymers, HFP/ethylene copolymers, and VDF/TFE/HFP copolymers; and fluorine-containing segmented polymers disclosed in Japanese Patent Publication No. 61-49327.

It is preferable that the fluoropolymer has an ion exchange rate (IXR) of higher than 53. The preferred fluoropolymer has either no ionic groups at all or a limited number of ionic groups resulting in an ion exchange rate higher than about 100. The preferred ion exchange rate of the fluoropolymer is preferably 1,000 or more, more preferably 2,000 or more, and still more preferably 5,000 or more.

The TFE polymer may suitably be a TFE homopolymer, or may be a copolymer containing (1) TFE, (2) one or two or more fluorine-containing monomers each of which is different from TFE and has 2 to 8 carbon atoms, in particular VDF, HFP, or CTFE, and (3) another monomer. Examples of (3) the another monomer include fluoro(alkyl vinyl ethers) having an alkyl group having 1 to 5 carbon atoms, particularly 1 to 3 carbon atoms; fluorodioxoles; perfluoroalkyl ethylenes; and ω-hydroperfluoroolefins.

The TFE polymer may also be a copolymer of TFE and one or two or more fluorine-free monomers. Examples of the fluorine-free monomers include alkenes such as ethylene and propylene; vinyl esters; and vinyl ethers. The TFE polymer may also be a copolymer of TFE, one or two or more fluorine-containing monomers having 2 to 8 carbon atoms, and one or two or more fluorine-free monomers.

The VDF polymer may suitably be a VDF homopolymer (PVDF), or may be a copolymer containing (1) VDF, (2) one or two or more fluoroolefins each of which is different from VDF and has 2 to 8 carbon atoms, in particular TFE, HFP, or CTFE, and (3) a perfluoro(alkyl vinyl ether) having an alkyl group having 1 to 5 carbon atoms, particularly 1 to 3 carbon atoms.

The CTFE polymer may suitably be a CTFE homopolymer, or may be a copolymer containing (1) CTFE, (2) one or two or more fluoroolefins each of which is different from CTFE and has 2 to 8 carbon atoms, in particular TFE or HFP, and (3) a perfluoro(alkyl vinyl ether) having an alkyl group having 1 to 5 carbon atoms, particularly 1 to 3 carbon atoms.

The CTFE polymer may also be a copolymer of CTFE and one or two or more fluorine-free monomers, and examples of the fluorine-free monomers include alkenes such as ethylene and propylene; vinyl esters; and vinyl ethers.

The fluoropolymer may be vitreous, plastic, or elastomeric. The fluoropolymer is amorphous or partially crystallized, and may be subjected to compression firing, melt fabrication, or non-melt fabrication.

The step C can suitably produce a pretreatment aqueous dispersion containing a fluoropolymer such as (I) non melt-processible fluororesins, including tetrafluoroethylene polymers (TFE polymers (PTFE)); (II) melt-fabricable fluororesins, including ethylene/TFE copolymers (ETFE), TFE/HFP copolymers (FEP), TFE/perfluoro(alkyl vinyl ether) copolymers (e.g., PFA, MFA), TFE/perfluoroallyl ether copolymers, TFE/VDF copolymers, and electrolyte polymer precursors; and (III) fluoroelastomers, including TFE/propylene copolymers, TFE/propylene/third monomer copolymers (the third monomer may be VDF, HFP, CTFE, fluoroalkyl vinyl ether) TFE/fluoroalkyl vinyl ether copolymers; HFP/ethylene copolymers, HFP/ethylene/TFE copolymers; PVDF; thermoplastic elastomers such as VDF/HFP copolymers, HFP/ethylene copolymers, and VDF/TFE/HFP copolymers; and fluorine-containing segmented polymers disclosed in Japanese Patent Publication No. 61-49327.

The fluoropolymer is preferably a fluororesin, more preferably a fluororesin having a fluorine substitution percentage, calculated by the following formula, of 50% or higher, still more preferably a fluororesin having the fluorine substitution percentage of higher than 50%, further preferably a fluororesin having the fluorine substitution percentage of 55% or higher, further preferably a fluororesin having the fluorine substitution percentage of 60% or higher, further preferably a fluororesin having the fluorine substitution percentage of 75% or higher, particularly preferably a fluororesin having the fluorine substitution percentage of 80% or higher, and most preferably a fluororesin having the fluorine

substitution percentage of 90 to 100%, i.e., a perfluororesin.

Fluorine substitution percentage (%) = (number of fluorine atoms bonded to carbon atoms constituting fluoropolymer)/((number of hydrogen atoms bonded to carbon atoms constituting fluoropolymer) + (number of fluorine atoms and chlorine atoms bonded to carbon atoms constituting fluoropolymer)) × 100 (Formula)

The perfluororesin is more preferably a fluororesin having the fluorine substitution percentage of 95 to 100%, still more preferably PTFE, FEP, or PFA, and particularly preferably PTFE.

The fluoropolymer may have a core-shell structure. An example of the fluoropolymer having a core-shell structure is PTFE including a core of high-molecular-weight PTFE and a shell of a lower-molecular-weight PTFE or a modified PTFE in the particle. An example of such PTFE is PTFE disclosed in National Publication of International Patent Application No. 2005-527652.

The core-shell structure may have the following structures.

Core: TFE homopolymer Shell: TFE homopolymer
Core: modified PTFE Shell: TFE homopolymer
Core: modified PTFE Shell: modified PTFE
Core: TFE homopolymer Shell: modified PTFE
Core: low-molecular-weight PTFE Shell: high-molecular-weight PTFE
Core: high-molecular-weight PTFE Shell: low-molecular-weight PTFE

In the fluoropolymer having the core-shell structure, the lower limit of the proportion of the core is preferably 0.5% by mass, more preferably 1.0% by mass, still more preferably 3.0% by mass, particularly preferably 5.0% by mass, and most preferably 10.0% by mass. The upper limit of the proportion of the core is preferably 99.5% by mass, more preferably 99.0% by mass, still more preferably 98.0% by mass, further preferably 97.0% by mass, particularly preferably 95.0% by mass, and most preferably 90.0% by mass.

In the fluoropolymer having the core-shell structure, the lower limit of the proportion of the shell is preferably 0.5% by mass, more preferably 1.0% by mass, still more preferably 3.0% by mass, particularly preferably 5.0% by mass, and most preferably 10.0% by mass. The upper limit of the proportion of the shell is preferably 99.5% by mass, more preferably 99.0% by mass, still more preferably 98.0% by mass, further preferably 97.0% by mass, particularly preferably 95.0% by mass, and most preferably 90.0% by mass.

In the fluoropolymer having the core-shell structure, the core or the shell may be composed of two or more layers. For example, the fluoropolymer may have a trilayer structure including a core center portion of a modified PTFE, a core outer layer portion of a TFE homopolymer, and a shell of a modified PTFE.

Examples of the fluoropolymer having a core-shell structure also include those in which a single particle of the fluoropolymer has a plurality of cores.

(I) The non melt-processible fluororesins, (II) the melt-fabricable fluororesins, and (III) the fluoroelastomers are preferably produced in the following manner.

(I) Non melt-processible fluororesins

In the step C, polymerization of TFE is usually performed at a polymerization temperature of 10 to 150°C and a polymerization pressure of 0.05 to 5 MPaG. For example, the polymerization temperature is more preferably 30°C or higher, and still more preferably 50°C or higher. Further, the polymerization temperature is more preferably 120°C or lower, and still more preferably 100°C or lower. Further, the polymerization pressure is more preferably 0.3 MPaG or higher, still more preferably 0.5 MPaG or higher, and more preferably 5.0 MPaG or lower, still more preferably 3.0 MPaG or lower. In particular, from the viewpoint of improving the yield of fluoropolymer, the polymerization pressure is preferably 1.0 MPaG or more, more preferably 1.2 MPaG or more, still more preferably 1.5 MPaG or more, and more preferably 2.0 MPaG or more.

In an embodiment, the polymerization reaction is initiated by charging pure water into a pressure-resistant reaction vessel equipped with a stirrer, deoxidizing the system, charging TFE, increasing the temperature to a predetermined level, and adding a polymerization initiator. When the pressure decreases as the reaction progresses, additional TFE is fed continuously or intermittently to maintain the initial pressure. When the amount of TFE fed reaches a predetermined level, feeding is stopped, and then TFE in the reaction vessel is purged and the temperature is returned to room temperature, whereby the reaction is completed. Additional TFE may be added continuously or intermittently to prevent pressure drop.

When the TFE polymer is polytetrafluoroethylene (PTFE), in addition to TFE, various conventionally known modifying monomers may be used in combination. PTFE as used herein is a concept that encompasses not only a TFE homopolymer but also a non melt-processible copolymer of TFE and a modifying monomer (hereinafter, referred to as a "modified PTFE").

The total amount of the modifying monomer is preferably in the range of 0.00001 to 1.0% by mass based on all polymerized units in PTFE. The lower limit of the total amount thereof is more preferably 0.0001% by mass, still more preferably 0.001% by mass, and further preferably 0.005% by mass. The upper limit is, in the preferred order, 0.90% by mass, 0.50% by mass, 0.40% by mass, 0.30% by mass, 0.20% by mass, 0.15% by mass, 0.10% by mass, or 0.05% by mass.

The modifying monomer unit as used herein means a portion of the molecular structure of the TFE polymer as a part derived from the modifying monomer.

The modifying monomer may be any modifying monomer copolymerizable with TFE, and examples thereof include a fluoromonomer and a non-fluoromonomer. Further, one or more kinds of the modifying monomers may be used.

An example of the non-fluoromonomer is, but not limited to, a monomer represented by the general formula:

$$CH_2=CR^{Q1}-LR^{Q2}$$

wherein $R^{Q1}$ represents a hydrogen atom or an alkyl group; L represents a single bond, -CO-O-*, -O-CO-*, or - O-; * represents a bond position with $R^{Q2}$; and $R^{Q2}$ represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Of these, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the modifying monomer include perhaloolefins such as HFP, CTFE, and perfluorovinyl ether; fluoro(alkyl vinyl ethers) having an alkyl group having 1 to 5 carbon atoms, particularly 1 to 3 carbon atoms; cyclic fluorinated monomers such as fluorodioxole; perhaloalkyl ethylenes such as (perfluoroalkyl)ethylene; and ω-hydroperhaloolefins. The modifying monomer may be added all at once in the initial stage, or may be added continuously or intermittently in portions depending on the purpose and the manner of TFE feeding.

Examples of the perfluorovinyl ether include, but are not limited to, a perfluoro unsaturated compound represented by the following general formula (A):

$$CF_2=CF-ORf \qquad (A)$$

wherein Rf represents a perfluoro organic group. The "perfluoro organic group" as used herein means an organic group in which all hydrogen atoms bonded to the carbon atoms are replaced by fluorine atoms. The perfluoro organic group optionally has ether oxygen.

Examples of the perfluorovinyl ether include perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include:

those represented by the general formula (A) in which Rf is a perfluoro(alkoxyalkyl) group having 4 to 9 carbon atoms;
those in which Rf is a group represented by the following formula:

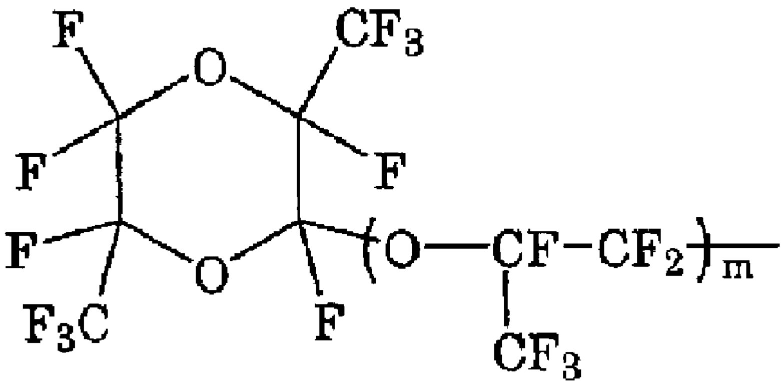

wherein m represents 0 or an integer of 1 to 4; and
those in which Rf is a group represented by the following formula:

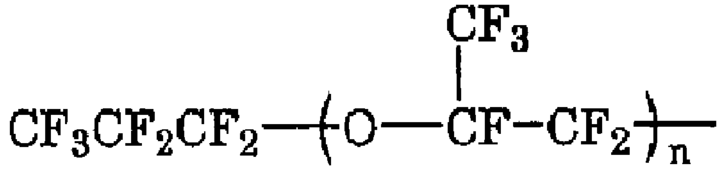

wherein n represents an integer of 1 to 4.

Examples of the hydrogen-containing fluoroolefin include $CH_2=CF_2$, $CFH=CH_2$, $CFH=CF_2$, $CF_2=CFCF_3$, $CH_2=CFCF_3$, $CH_2=CHCF_3$, $CHF=CHCF_3$ (E isomer), and $CHF=CHCF_3$ (Z isomer).
Examples of the (perfluoroalkyl)ethylene (PFAE) include, but are not limited to, (perfluorobutyl)ethylene (PFBE) and (perfluorohexyl)ethylene.
An example of the perfluoroallyl ether is a fluoromonomer represented by the general formula:

$$CF_2=CF-CF_2-ORf$$

wherein Rf represents a perfluoro organic group.
Rf in the above general formula is the same as Rf in the general formula (A). Rf is preferably a perfluoroalkyl group having 1 to 10 carbon atoms or a perfluoroalkoxyalkyl group having 1 to 10 carbon atoms. The perfluoroallyl ether is preferably at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably at least one selected from the group consisting of $CF_2=CF-CF_2-O-C_2F_5$, $CF_2=CF-CF_2-O-C_3F_7$, and $CF_2=CF-CF_2-O-C_4F_9$, and still more preferably $CF_2=CF-CF_2-O-CF_2CF_2CF_3$.
In the case of producing a fluoropolymer aqueous dispersion containing polytetrafluoroethylene (PTFE), in the step C, a (polyfluoroalkyl)ethylene and/or a comonomer (3) having a monomer reactivity ratio rTFE in copolymerization with TFE of 0.1 to 8 may be mixed in the polymerization system in an amount of 0.001 to 0.01% by mass relative to the final PTFE yield at the initiation of polymerization of TFE. This increases the stability of the PTFE aqueous dispersion obtained in the step C to the extent that the processability and moldability afterwards are not impaired. By using the PTFE aqueous dispersion thus obtained as the pretreatment aqueous dispersion, it is possible to produce a PTFE aqueous dispersion (fluoropolymer aqueous dispersion) that allows for obtaining a molded article with high heat resistance.
Here, the monomer reactivity ratio in copolymerization with TFE is a value obtained by dividing the rate constant in the case that propagating radicals react with TFE by the rate constant in the case that the propagating radicals react with comonomers, in the case that the propagating radicals are less than the repeating unit derived from TFE. A smaller monomer reactivity ratio indicates higher reactivity of the comonomers with TFE. The reactivity ratio can be determined by copolymerizing the comonomers with TFE in varying charging compositional features, determining the compositional features in the polymer formed immediately after initiation, and calculating the reactivity ratio by Fineman-Ross equation based on the compositional features.
The copolymerization is performed by, for example, using 3,600 g of deionized degassed water, 1,000 ppm by mass of ammonium perfluorooctanoate based on the water, and 100 g of paraffin wax contained in an autoclave made of stainless steel with an internal volume of 6.0 L at a pressure of 0.78 MPaG and a temperature of 70°C. A comonomer in an amount of 0.05 g, 0.1 g, 0.2 g, 0.5 g, or 1.0 g is added into the reactor, and then 0.072 g of ammonium persulfate (20 ppm by mass based on the water) is added thereto. To maintain the polymerization pressure at 0.78 MPaG, TFE is continuously

fed thereinto. When the charged amount of TFE reaches 1,000 g, stirring is stopped and the pressure is released until the pressure in the reactor decreases to the atmospheric pressure. After cooling, the paraffin wax is separated and removed to obtain an aqueous dispersion containing the produced polymer. The aqueous dispersion is stirred so that the resulting polymer coagulates, and the polymer is dried at 150°C. The compositional features in the resulting polymer are calculated by appropriate combination of NMR, FT-IR, elemental analysis, and X-ray fluorescence analysis depending on the types of the monomers.

The modifying monomer is also preferably exemplified by a comonomer (3) having a monomer reactivity ratio of 0.1 to 8. The presence of the comonomer (3) makes it possible to obtain PTFE particles having a small particle size, and to thereby obtain an aqueous dispersion having high dispersion stability.

The comonomer (3) having a monomer reactivity ratio of 0.1 to 8 is preferably at least one selected from the group consisting of comonomers represented by the formulas (3a) to (3d):

$CH_2=CH-Rf^1$ (3a)

wherein $Rf^1$ is a perfluoroalkyl group having 1 to 10 carbon atoms;

$CF_2=CF-O-Rf^2$ (3b)

wherein $Rf^2$ is a perfluoroalkyl group having 1 to 2 carbon atoms;

$CF_2=CF-O-(CF_2)_nCF=CF_2$ (3c)

wherein n is 1 or 2; and

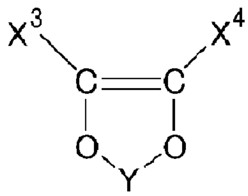

(3d)

wherein $X^3$ and $X^4$ are each F, Cl, or a methoxy group; and Y is represented by the formula Y1 or Y2;

-CF=CF- (Y1)

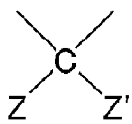

(Y2)

in the formula Y2, Z and Z' are each F or a fluorinated alkyl group having 1 to 3 carbon atoms.

The content of the comonomer (3) is preferably in the range of 0.00001 to 1.0% by mass based on all polymerized units in PTFE. The lower limit thereof is more preferably 0.0001% by mass, still more preferably 0.0005% by mass, further preferably 0.001% by mass, and still further preferably 0.005% by mass. The upper limit is, in the preferred order, 0.90% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer is preferably at least one selected from the group consisting of hexafluoropropylene, chlorotrifluoroethylene, vinylidene fluoride, perfluoro(alkyl vinyl ethers), (perfluoroalkyl)ethylenes, ethylene, and modifying monomers having a functional group capable of reacting by radical polymerization and a hydrophilic group, in view of obtaining an aqueous dispersion with a small average primary particle size, a small aspect ratio of primary particles, and excellent stability. The use of the modifying monomer allows for obtaining an aqueous dispersion of PTFE with a smaller average primary particle size, a small aspect ratio of primary particles, and excellent dispersion stability. By using the aqueous dispersion of PTFE thus obtained as the pretreatment aqueous dispersion, it is possible to produce a fluoropolymer aqueous dispersion with a small average primary particle size, a small aspect ratio of primary particles, excellent dispersion stability, and a small amount of uncoagulated polymer.

From the viewpoint of reactivity with TFE, the modifying monomer preferably contains at least one selected from

the group consisting of hexafluoropropylene, perfluoro(alkyl vinyl ether), and (perfluoroalkyl)ethylene.

The total amount of the hexafluoropropylene unit, perfluoro(alkyl vinyl ether) unit, and (perfluoroalkyl)ethylene unit is preferably in the range of 0.00001 to 1.0% by mass based on all polymerized units in PTFE. The lower limit of the total amount thereof is more preferably 0.0001% by mass, still more preferably 0.0005% by mass, further preferably 0.001% by mass, still further preferably 0.005% by mass, and particularly preferably 0.009% by mass. The upper limit is, in the preferred order, 0.9% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer preferably includes a modifying monomer having a functional group capable of reacting by radical polymerization and a hydrophilic group (hereinafter, referred to as a "modifying monomer (A)").

The presence of the modifying monomer (A) makes it possible to obtain PTFE particles having a small primary particle size, and to thereby obtain an aqueous dispersion having high dispersion stability and also reduce the aspect ratio of primary particles. That is, in the step C, the use of the modifying monomer (A) results in high dispersion stability in the finally obtained fluoropolymer aqueous dispersion. Furthermore, PTFE contained in the fluoropolymer aqueous dispersion can be made to have a small primary particle size and a small aspect ratio of primary particles.

The amount of the modifying monomer (A) used is preferably an amount greater than the amount equivalent to 0.1 ppm by mass of the aqueous medium, more preferably an amount greater than 0.5 ppm by mass, still more preferably an amount greater than 1.0 ppm by mass, further preferably 5 ppm by mass or more, and particularly preferably 10 ppm by mass or more. When the amount of the modifying monomer (A) used is too small, the average primary particle size of PTFE obtained may not be small enough.

The amount of the modifying monomer (A) used may be within the above range, but for example, the upper limit can be set to 5,000 ppm by mass. In the production method, the modifying monomer (A) may also be added into the system during the reaction in order to improve the stability of the aqueous dispersion during or after the reaction.

Since the modifying monomer (A) is highly watersoluble, even if the unreacted modifying monomer (A) remains in the aqueous dispersion, it can be easily removed by the concentration step or the coagulation and washing steps.

The modifying monomer (A) is incorporated in the produced polymer in the process of polymerization, but since the concentration of the modifying monomer (A) in the polymerization system itself is low and the amount incorporated into the polymer is small, there is no problem of the heat resistance of PTFE being degraded or coloring after sintering.

Examples of the hydrophilic group in the modifying monomer (A) include $-NH_2$, $-PO_3M$, -p(o)(OM)$_2$, $-OPO_3M$, -OP (O)(OM)$_2$, $-SO_3M$, $-OSO_3M$, and -COOM, wherein M represents H, a metal atom, $NR^{7y}{}_4$, imidazolium optionally having a substituent, pyridinium optionally having a substituent, or phosphonium optionally having a substituent, wherein $R^{7y}$ is H or an organic group, and may be the same or different, and any two thereof may be bonded to each other to form a ring. Of these, the hydrophilic group is preferably $-SO_3M$ or -COOM.

The organic group in $R^{7y}$ is preferably an alkyl group. $R^{7y}$ is preferably H or a $C_{1-10}$ organic group, more preferably H or a $C_{1-4}$ organic group, and still more preferably H or a $C_{1-4}$ alkyl group.

Examples of the metal atom include monovalent and divalent metal atoms, alkali metals (Group 1) and alkaline earth metals (Group 2), and preferred is Na, K, or Li.

Examples of the "functional group capable of reacting by radical polymerization" in the modifying monomer (A) include groups having an ethylenically unsaturated bond, such as a vinyl group or an allyl group. The group having an ethylenically unsaturated bond can be represented by the following formula:

$$CX^eX^g=CX^fR-$$

wherein $X^e$, $X^f$, and $X^g$ are each independently F, Cl, H, $CF_3$, $CF_2H$, $CFH_2$, or $CH_3$; and R is a linking group. Examples of the linking group of R include a linking group as $R^a$ described later.

Preferred are groups having an unsaturated bond, such as $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, and $-O-CF_2-CF=CF_2$.

Since the modifying monomer (A) has a functional group capable of reacting by radical polymerization, it is presumed that, when used in the polymerization, it reacts with the fluorine-containing monomer in the initial stage of the polymerization reaction to form particles that have a hydrophilic group derived from the modifying monomer (A) and are highly stable. Thus, polymerization in the presence of the modifying monomer (A) is considered to increase the number of particles.

The polymerization may be carried out in the presence of one kind of the modifying monomer (A), or in the presence of two or more kinds thereof.

In the polymerization, a compound having an unsaturated bond can be used as the modifying monomer (A).

The modifying monomer (A) is preferably at least one selected from the group consisting of compounds represented by the general formula (4):

$$CX^iX^k=CX^jR^a-(CZ^1Z^2)_k-Y^3 \quad (4)$$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1.

Examples of the hydrophilic group include $-NH_2$, $-PO_3M$, -p(o)$(OM)_2$, $-OPO_3M$, -OP(O)$(OM)_2$, $-SO_3M$, $-OSO_3M$, and -COOM, wherein M represents H, a metal atom, $NR^{7y}_4$, imidazolium optionally having a substituent, pyridinium optionally having a substituent, or phosphonium optionally having a substituent, wherein $R^{7y}$ is H or an organic group, and may be the same or different, and any two thereof may be bonded to each other to form a ring. Of these, the hydrophilic group is preferably $-SO_3M$ or -COOM. $R^{7y}$ is preferably H or a $C_{1-10}$ organic group, more preferably H or a $C_{1-4}$ organic group, and still more preferably H or a $C_{1-4}$ alkyl group.

Examples of the metal atom include monovalent and divalent metal atoms, alkali metals (Group 1) and alkaline earth metals (Group 2), and preferred is Na, K, or Li.

The use of the modifying monomer (A) allows for obtaining an aqueous dispersion having a smaller average primary particle size and superior stability. Also, the aspect ratio of the primary particles can be made smaller.

$R^a$ is a divalent linking group. The linking group ($R^a$) may be a single bond and preferably contains at least one carbon atom, and the number of carbon atoms may be 2 or more, 4 or more, 8 or more, 10 or more, or 20 or more. The upper limit thereof is not limited, and may be 100 or less, and may be 50 or less, for example.

The linking group($R^a$) may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be free from carbon atoms and may be a catenary heteroatom such as oxygen, sulfur, or nitrogen.

$R^a$ is preferably a catenary heteroatom such as oxygen, sulfur, or nitrogen, or a divalent organic group.

When $R^a$ is a divalent organic group, the hydrogen atom bonded to the carbon atom may be replaced by a halogen other than fluorine, such as chlorine, and may or may not contain a double bond. Further, $R^a$ may be linear or branched, and may be cyclic or acyclic. $R^a$ may also contain a functional group (e.g., ester, ether, ketone, amine, halide, etc.).

$R^a$ may also be a fluorine-free divalent organic group or a partially fluorinated or perfluorinated divalent organic group.

$R^a$ may be, for example, a hydrocarbon group in which a fluorine atom is not bonded to a carbon atom, a hydrocarbon group in which some of the hydrogen atoms bonded to a carbon atom are replaced by fluorine atoms, a hydrocarbon group in which all of the hydrogen atoms bonded to the carbon atoms are replaced by fluorine atoms, -(C=O)-, -(C=O)-O-, or a hydrocarbon group containing - (C=O)-, and these groups optionally contain an oxygen atom, optionally contain a double bond, and optionally contain a functional group.

$R^a$ is preferably -(C=O)-, -(C=O)-O-, or a hydrocarbon group having 1 to 100 carbon atoms that optionally contains an ether bond and optionally contains a -(C=O)-, wherein some or all of the hydrogen atoms bonded to the carbon atoms in the hydrocarbon group may be replaced by fluorine.

$R^a$ is preferably at least one selected from $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, -(C=O)-, -(C=O)-O-, $-(C=O)-(CH_2)_a-$, $-(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)_a-O]_b-$, $-(C=O)-O[(CH_2)_a-O]_b-$, $-(C=O)-O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, $-(C=O)-O-(CF_2)_a-O-(CF_2)_b-$, $-(C=O)-O-C_6H_4-$, and combinations thereof.

In the formula, a, b, c, and d are independently at least 1 or more. a, b, c and d may independently be 2 or more, 3 or more, 4 or more, 10 or more, or 20 or more. The upper limits of a, b, c, and d are 100, for example.

Specific examples suitable for $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CH_2-$, -(C=O)-, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-$, $-(C=O)-[(CF_2)_2-O]_n-$, $-(C=O)-O[(CH_2)_2-O]_n-$, $-(C=O)-O[(CF_2)_2-O]_n-$, $-(C=O)-O[(CH_2)_2-O]_n-(CH_2)-$, $-(C=O)-O[(CF_2)_2-O]_n-(CF_2)-$ $-(C=O)-(CH_2)_2-O-(CH_2)-$, $-(C=O)-(CF_2)_2-O-(CF_2)-$, $-(C=O)-O-(CH_2)_2-O-(CH_2)-$, $-(C=O)-O-(CF_2)-O-(CF_2)-$, and $-(C=O)-O-C_6H_4-$. In particular, preferred for $R^a$ among these is $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, -(C=O)-, -(C=O)-O-, $-(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $-(C=O)-(CH_2)_2-O-(CH_2)-$, or $-(C=O)-O-C_6H_4-$.

In the formula, n is an integer of 1 to 10.

$-R^a-(CZ^1Z^2)_k-$ in the general formula (4) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$,

$-CF_2-O-CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, $-CF_2-O-CF(CF_3)CF_2-O-C(CF_3)_2-$, -(C=O)-, -(C=O)-O-, $-(C=O)-(CH_2)-$, $(C=O)-(CF_2)-$, $-(C=O)-O-(CH_2)-$, $-(C=O)-O-(CF_2)-$, $-(C=O)-[(CH_2)_2-O]_n-(CH_2)-$, $(C=O)-[(CF_2)_2-O]_n-(CF_2)-$, $-(C=O)-[(CH_2)_2-O]_n-(CH_2)-(CH_2)-$, $-(C=O)-[(CF_2)_2-O]_n-(CF_2)-(CF_2)-$, $-(C=O)-O[(CH_2)_2-O]_n-(CF_2)-$, $-(C=O)-O[(CH_2)_2-O]_n-(CH_2)-(CH_2)-$, $-(C=O)-O[(CF_2)_2-O]_n-(CF_2)-$, $-(C=O)-O[(CF_2)_2-O]_n-(CF_2)-(CF_2)-$, $-(C=O)-(CH_2)_2-O-(CH_2)-(CH_2)-$, $-(C=O)-(CF_2)_2-O-(CF_2)-(CF_2)-$, $-(C=O)-O-(CH_2)_2-O-(CH_2)-(CH_2)-$, $-(C=O)-O-(CF_2)_2-O-(CF_2)-(CF_2)-$, $-(C=O)-O-(CH_2)_2-O-(CH_2)-C(CF_3)_2-$, $-(C=O)-O-(CF_2)_2-O-(CF_2)-C(CF_3)_2-$, or $-(C=O)-O-C_6H_4-C(CF_3)_2-$, and is more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, $-CF_2-O-CF(CF_3)CF_2-O-CF(CF_3)-$, - (C=O) -, $-(C=O)-O-(CH_2)-$, $-(C=O)-O-(CH_2)-(CH_2)-$, $-(C=O)-O[(CH_2)_2-O]_n-(CH_2)-(CH_2)-$, $-(C=O)-O-(CH_2)_2-O-(CH_2)-C(CF_3)_2-$, or $-(C=O)-O-C_6H_4-C(CF_3)_2-$.

In the formula, n is an integer of 1 to 10.

Specific examples of the compound represented by the general formula (4) include compounds represented by the following formulas:

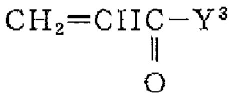 、 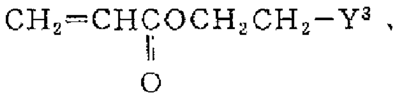 、 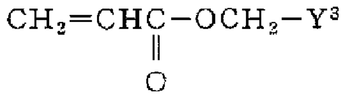 、

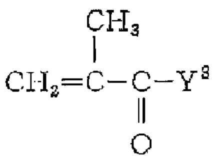 、 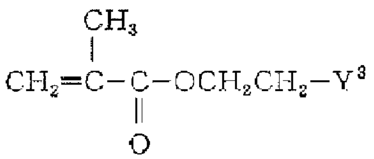 、 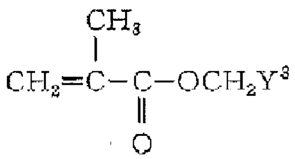 、

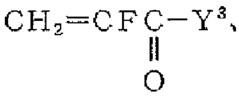 、 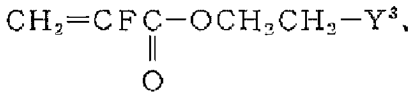 、 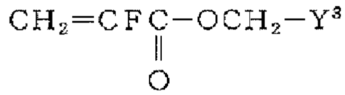 、

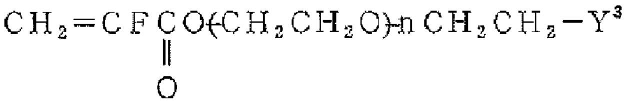 、

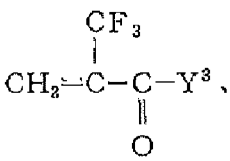 、 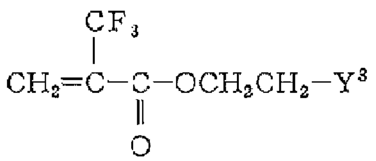 、

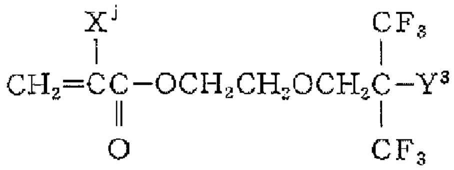 (i) 、

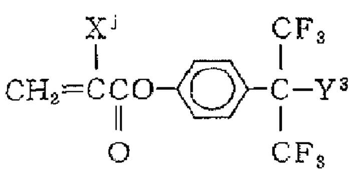 (i i)

wherein $X^j$ and $Y^3$ are as described above; and n is an integer of 1 to 10.

$R^a$ is preferably a divalent group represented by the general formula (r1):

$$-(C=O)_h-(O)_i-CF_2-O-(CX^6{}_2)_e-\{O-CF(CF_3)\}_f-(O)_g- \quad (r1)$$

wherein $X^6$ is each independently H, F, or $CF_3$; e is an integer of 0 to 3; f is an integer of 0 to 3; g is 0 or 1; h is 0 or 1; and i is 0 or 1,

and is also preferably a divalent group represented by the general formula (r2):

$$-(C=O)_h-(O)_i-CF_2-O-(CX^7{}_2)_e-(O)_g- \quad (r2)$$

wherein $X^7$ is each independently H, F, or $CF_3$; e is an integer of 0 to 3; g is 0 or 1; h is 0 or 1; and i is 0 or 1.

$-R^a-(CZ^1Z^2)_k-$ in the general formula (4) is also preferably a divalent group represented by the following formula (t1):

$$-(C=O)_h-(O)_i-CF_2-O-(CX^6{}_2)_e-\{O-CF(CF_3)\}_f-(O)_g-CZ^1Z^2- \quad (t1)$$

wherein $X^6$ is each independently H, F, or $CF_3$; e is an integer of 0 to 3; f is an integer of 0 to 3; g is 0 or 1; h is 0 or 1; i is 0 or 1; and $Z^1$ and $Z^2$ are each independently F or $CF_3$,

and is more preferably a group in which one of $Z^1$ and $Z^2$ is F and the other is $CF_3$ in the formula (t1).

Also, in the general formula (4), $-R^a-(CZ^1Z^2)_k-$ is preferably a divalent group represented by the following formula (t2):

$$-(C=O)_h-(O)_i-CF_2-O-(CX^7{}_2)_e-(O)_g=CZ^1Z^2- \quad (t2)$$

wherein $X^7$ is each independently H, F, or $CF_3$; e is an integer of 0 to 3; g is 0 or 1; h is 0 or 1; i is 0 or 1; and $Z^1$ and $Z^2$ are each independently F, or $CF_3$,

and is more preferably a group in which one of $Z^1$ and $Z^2$ is F and the other is $CF_3$ in the formula (t2).

The compound represented by the general formula (4) also preferably has a C-F bond and does not have a C-H bond, in the portion excluding the hydrophilic group ($Y^3$). In other words, in the general formula (4), $X^i$, $X^j$, and $X^k$ are all F, and $R^a$ is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by the general formula (4) may be partially fluorinated. In other words, the compound represented by the general formula (4) also preferably has at least one hydrogen atom bonded to a carbon atom and at least one fluorine atom bonded to a carbon atom, in the portion excluding the hydrophilic group ($Y^3$).

The compound represented by the general formula (4) is also preferably a compound represented by the following formula (4a):

$$CF_2=CF-O-Rf^0-Y^3 \quad (4a)$$

wherein $Y^3$ is a hydrophilic group; and $Rf^0$ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by the general formula (4) is also preferably a compound represented by the following formula (4b):

$$CH_2=CH-O-Rf^0-Y^3 \quad (4b)$$

wherein $Y^3$ is a hydrophilic group; and $Rf^0$ is a perfluorinated divalent linking group as defined in the formula (4a).

In the general formula (4), $Y^3$ is preferably $-OSO_3M$. Examples of the compound represented by the general formula (4) when $Y^3$ is $-OSO_3M$ include $CF_2=CF(OCF_2CF_2CH_2OSO_3M)$, $CH_2=CH((CF_2)_4CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, $CF_2=CF(OCF_2CF_2CF_2CF_2SO_2N(CH_3)CH_2CH_2OSO_3M)$, and $CH_2=CH(CF_2CF_2CH_2OSO_3M)$. In the formula, M is as described above.

In the general formula (4), $Y^3$ is preferably $-SO_3M$. Examples of the compound represented by the general formula (4) when $Y^3$ is $-SO_3M$ include $CF_2=CF(OCF_2CF_2SO_3M)$, $CF_2=CF(O(CF_2)_4SO_3M)$, $CF_2=CF(OCF_2CF(CF_3)$

$SO_3M$), $CF_2$=CF($OCF_2CF(CF_3)OCF_2CF_2SO_3M$), $CH_2$=CH($CF_2CF_2SO_3M$), $CF_2$=CF($OCF_2CF(CF_3)OCF_2CF_2CF_2CF_2SO_3M$), $CH_2$=CH($(CF_2)_4SO_3M$), $CH_2$=CH($CF_2CF_2SO_3M$), and $CH_2$=CH($(CF_2)_3SO_3M$). In the formula, M is as described above.

In the general formula (4), $Y^3$ is preferably -COOM. Examples of the compound represented by the general formula (4) when $Y^3$ is -COOM include $CF_2$=CF($OCF_2CF_2COOM$), $CF_2$=CF($OCF_2CF_2CF_2COOM$), $CF_2$=CF($O(CF_2)_5COOM$), $CF_2$=CF($OCF_2CF(CF_3)COOM$), $CF_2$=CF($OCF_2CF(CF_3)O(CF_2)_nCOOM$) (n is greater than 1), $CH_2$=CH($CF_2CF_2COOM$), $CH_2$=CH($(CF_2)_4COOM$), $CH_2$=CH($CF_2CF_2COOM$), $CH_2$=CH($(CF_2)_3COOM$), $CF_2$=CF($OCF_2CF_2SO_2NR'CH_2COOM$), $CF_2$=CF($O(CF_2)_4SO_2NR'CH_2COOM$), $CF_2$=CF($OCF_2CF(CF_3)SO_2NR'CH_2COOM$), $CF_2$=CF($OCF_2CF(CF_3)OCF_2CF_2SO_2NR'CH_2COOM$), $CH_2$=CH($CF_2CF_2SO_2NR'CH_2COOM$), $CF_2$=CF($OCF_2CF(CF_3)OCF_2CF_2CF_2CF_2SO_2NR'CH_2COOM$), $CH_2$=CH($(CF_2)_4SO_2NR'CH_2COOM$), $CH_2$=CH($CF_2CF_2SO_2NR'CH_2COOM$), and $CH_2$=CH($(CF_2)_3SO_2NR'CH_2COOM$). In the formula, R' is H or a $C_{1-4}$ alkyl group, and M is as described above.

In the general formula (4), $Y^3$ is preferably $-OPO_3M$ or $-OP(O)(OM)_2$. Examples of the compound represented by the general formula (4) when $Y^3$ is $-OPO_3M$ or $-OP(O)(OM)_2$ include $CF_2$=CF($OCF_2CF_2CH_2OP(O)(OM)_2$), $CF_2$=CF($O(CF_2)_4CH_{20}P(O)(OM)_2$), $CF_2$=CF($OCF_2CF(CF_3)CH_2OP(O)(OM)_2$), $CF_2$=CF($OCF_2CF(CF_3)OCF_2CF_2CH_2O$-$P(O)(OM)_2$), $CF_2$=CF($OCF_2CF_2SO_2N(CH_3)CH_2CH_2OP(O)(OM)_2$), $CF_2$=CF($OCF_2CF_2CF_2CF_2SO_2N(CH_3)CH_2CH_2O$-$P(O)(OM)_2$), $CH_2$=CH($CF_2CF_2CH_2OP(O)(OM)_2$, $CH_2$=CH($(CF_2)_4CH_2OP(O)(OM)_2$), $CH_2$=CH($CF_2CF_2CH_2OP(O)(OM)_2$), and $CH_2$=CH($(CF_2)_3CH_2OP(O)(OM)_2$). In the formula, M is as described above.

In the general formula (4), $Y^3$ is preferably $-PO_3M$ or $-P(O)(OM)_2$. Examples of the compound represented by the general formula (4) when $Y^3$ is $-PO_3M$ or $-P(O)(OM)_2$ include $CF_2$=CF($OCF_2CF_2P(O)(OM)_2$), $CF_2$=CF($O(CF_2)_4P(O)(OM)_2$), $CF_2$=CF($OCF_2CF(CF_3)P(O)(OM)_2$), $CF_2$=CF($OCF_2CF(CF_3)OCF_2CF_2P(O)(OM)_2$), $CH_2$=CH($CF_2CF_2P(O)(OM)_2$), $CH_2$=CH($(CF_2)_4P(O)(OM)_2$), $CH_2$=CH($CF_2CF_2P(O)(OM)_2$), and $CH_2$=CH($(CF_2)_3P(O)(OM)_2$), wherein M is as described above.

The compound represented by the general formula (4) is preferably at least one selected from the group consisting of:

a monomer represented by the following general formula (5):

$CX_2$=CY($-CZ_2-O-Rf-Y^3$)    (5)

wherein X is the same or different and is -H or -F; Y is -H, -F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above;

a monomer represented by the following general formula (6):

$CX_2$=CY ($-O-Rf-Y^3$)    (6)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above; and

a monomer represented by the following general formula (7):

$CX_2$=CY($-Rf-Y^3$)    (7)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above.

The fluorine-containing alkylene group having 2 to 100 carbon atoms and having an ether bond is an alkylene group which does not include a structure in which an oxygen atom is an end and contains an ether bond between carbon atoms.

In the general formula (5), each X is -H or -F. X may be both -H, may be both -F, or at least one thereof may be -H. For example, one thereof may be -F and the other may be -H, or both may be -H.

In the general formula (5), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or $-CF_3$, and more preferably -F.

In the general formula (5), Z is the same or different and is -H, -F, an alkyl group, or a fluoroalkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Z is preferably -H, -F, or $-CF_3$, and more preferably -F.

In the general formula (5), at least one of X, Y, and Z preferably contains a fluorine atom. For example, X, Y, and Z may be -H, -F, and -F, respectively.

In the general formula (5), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and still more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The fluorine-containing alkylene group having an ether bond preferably has 60 or less carbon atoms, more preferably 30 or less carbon atoms, and still more preferably 12 or less carbon atoms.

It is also preferable that the fluorine-containing alkylene group having an ether bond is a divalent group represented by the following formula:

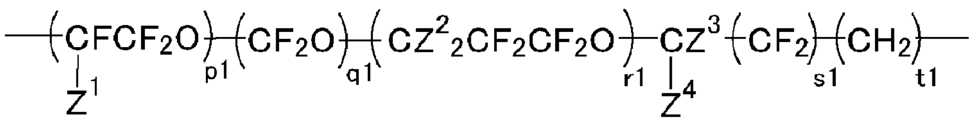

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)\ CF_2-O)_n-CF(CF_3)-$ (where n is an integer of 1 to 10), $-CF(CF_3)CF_2-O-CF(CF_3)CH_2-$, $-\ (CF(CF_3)\ CF_2-O)_n-CF(CF_3)CH_2-$ (where n is an integer of 1 to 10), $-CH_2CF_2CF_20-CH_2CF_2CH_2-$, $-CF_2CF_2CF_2O-CF_2CF_2-$, $-\ CF_2CF_2CF_2O-CF_2CF_2CH_2-$, $-CF_2CF_2O-CF_2-$, and $-CF_2CF_2O-CF_2CH_2-$.

The fluorine-containing alkylene group having an ether bond is preferably a perfluoroalkylene group.

In the general formula (5), $Y^3$ is -COOM, $-SO_3M$, or $-OSO_3M$, wherein M is H, a metal atom, $NR^{7y}{}_4$, imidazolium optionally having a substituent, pyridinium optionally having a substituent, or phosphonium optionally having a substituent, wherein $R^{7y}$ is H or an organic group, and may be the same or different, and any two thereof may be bonded to each other to form a ring.

The organic group in $R^{7y}$ is preferably an alkyl group.

$R^{7y}$ is preferably H or a $C_{1-10}$ organic group, more preferably H or a $C_{1-4}$ organic group, and still more preferably H or a $C_{1-4}$ alkyl group.

Examples of the metal atom include alkali metals (Group 1) and alkaline earth metals (Group 2), and preferred is Na, K, or Li.

M is preferably -H, a metal atom, or $-NR^{7y}{}_4$, more preferably -H, an alkali metal (Group 1), an alkaline earth metal (Group 2), or $-NR^{7y}{}_4$, still more preferably -H, -Na, -K, -Li, or $-NH_4$, further preferably -Na, -K, or - $NH_4$, particularly preferably -Na or $-NH_4$, and most preferably $-NH_4$.

$Y^3$ is preferably -COOM or $-SO_3M$, and more preferably -COOM.

The monomer represented by the general formula (5) is preferably a monomer (5a) represented by the general formula (5a):

$$CE_2=CF(-CF_2-O-Rf-Y^3) \qquad (5a)$$

wherein Rf and $Y^3$ are as described above.

Specific examples of the monomer represented by the general formula (5a) include a monomer represented by the following formula:

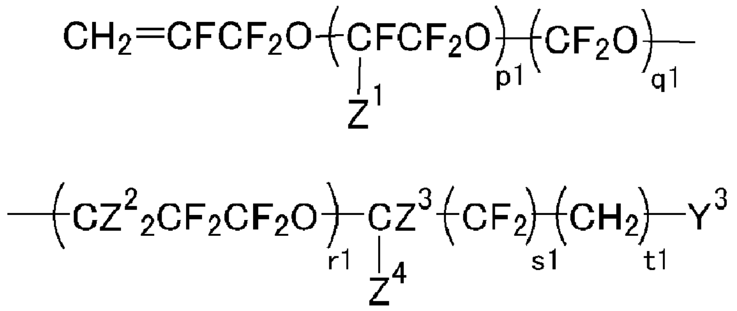,

wherein $Z^1$ is F or $CF_3$; $Z^2$ and $Z^3$ are each H or F; $Z^4$ is H, F, or $CF_3$; p1+q1+r1 is an integer of 0 to 10; s1 is 0 or 1; t1 is an integer of 0 to 5; and $Y^3$ is as described above, with the proviso that when $Z^3$ and $Z^4$ are both H, p1+q1+r1+s1 is not 0. More specific preferred examples thereof include:

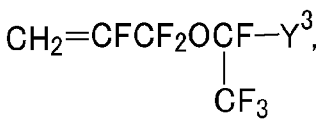 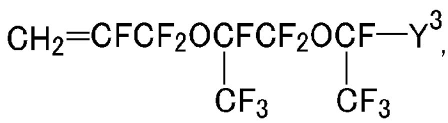

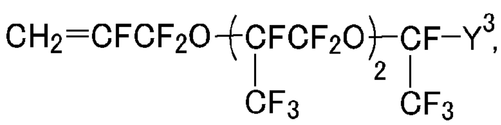 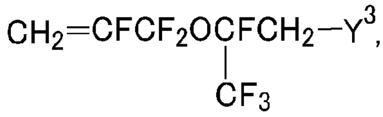

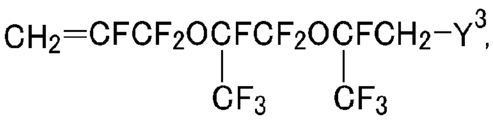 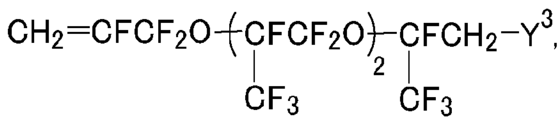

$CH_2=CFCF_2OCH_2CF_2-Y^3$, $CH_2=CFCF_2O(CH_2CF_2CF_2O)CH_2CF_2-Y^3$,

$CH_2=CFCF_2OCH_2CF_2CH_2-Y^3$,

$CH_2=CFCF_20(CH_2CF_2CF_2O)CH_2CF_2CH_2-Y^3$,

$CH_2=CFCF_2OCF_2CF_2-Y^3$, $CH_2=CFCF_2O(CF_2CF_2CF_2O)CF_2CF_2-Y^3$,

$CH_2=CFCF_2OCF_2CF_2CH_2-Y^3$,

$CH_2=CFCF_2O(CF_2CF_2CF_2O)CF_2CF_2CH_2-Y^3$,

$CH_2=CFCF_2OCF_2-Y^3$, $CH_2=CFCF_2O(CF_2CF_2O)CF_2-Y^3$,

$CH_2=CFCF_2OCF_2CH_2-Y^3$,

$CH_2=CFCF_2O(CF_2CF_2O)CF_2CH_2-Y^3$,

Of these, preferred are:

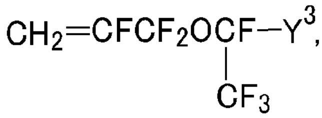
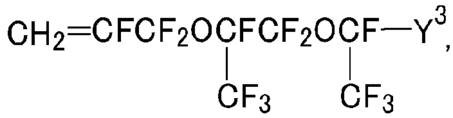

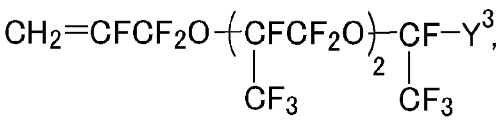
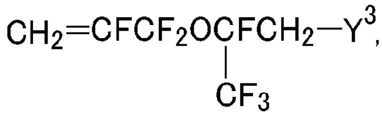

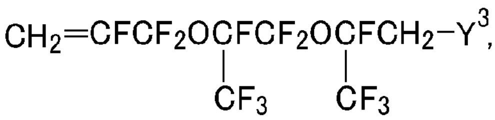
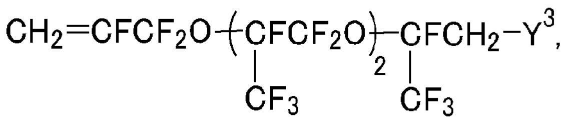

In the monomer represented by the general formula (5a), $Y^3$ in the formula (5a) is preferably -COOM. Specifically, the monomer represented by the general formula (5a) is preferably at least one selected from the group consisting of $CH_2=CFCF_2OCF(CF_3)COOM$ and $CH_2=CFCF_2OCF(CF_3)CF_2OCF(CF_3)COOM$ (wherein M is as defined above), and more preferably $CH_2=CFCF_2OCF(CF_3)COOM$.

The monomer represented by the general formula (5) is preferably a monomer (5b) represented by the general formula (5b):

$$CX^2_2=CFCF_2\text{-}O\text{-}(CF(CF_3)CF_2O)_{n5}\text{-}CF(CF_3)\text{-}Y^3 \qquad (5b)$$

wherein each $X^2$ is the same, and each represent F or H; n5 represents 0 or an integer of 1 to 10; and $Y^3$ is as defined above.

In the formula (5b), n5 is preferably 0 or an integer of 1 to 5, more preferably 0, 1, or 2, and still more preferably 0 or 1 from the viewpoint of stability of the resulting aqueous dispersion. $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the perfluorovinylalkyl compound represented by the formula (5b) include $CH_2=CFCF_2OCF(CF_3)COOM$ and $CH_2=CFCF_2OCF(CF_3)CF_2OCF(CF_3)COOM$, wherein M is as defined above.

Examples of the monomer represented by the general formula (5) further include a monomer represented by the general formula (5c):

$$CF_2=CFCF_2\text{-}O\text{-}Rf\text{-}Y^3 \qquad (5c)$$

wherein Rf and $Y^3$ are as described above.

More specific examples thereof include:

$CF_2=CFCF_2OCF_2CF_2CF_2\text{-}Y^3$,

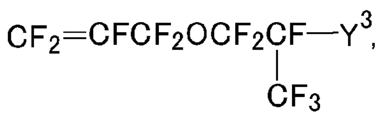

$CF_2=CFCF_2OCF_2CF_2CF_2CH_2\text{-}Y^3$,

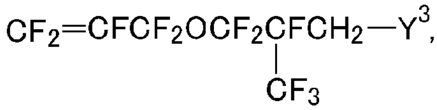

In the general formula (6), each X is -H or -F. X may be both -F, or at least one thereof may be -H. For example, one thereof may be -F and the other may be -H, or both may be -H.

In the general formula (6), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or $-CF_3$, and more preferably -F.

In the general formula (6), at least one of X and Y preferably contains a fluorine atom. For example, X, Y, and Z may be -H, -F, and -F, respectively.

In the general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and still more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

In the general formula (6), $Y^3$ is preferably -COOM, $-SO_3M$, or $-OSO_3M$, wherein M is H, a metal atom, $NR^7_4$, imidazolium optionally having a substituent, pyridinium optionally having a substituent, or phosphonium optionally having a substituent, where $R^7$ is H or an organic group, and may be the same or different, and any two thereof may be bonded to each other to form a ring.

The organic group of $R^7$ is preferably an alkyl group. $R^7$ is preferably H or a $C_{1-10}$ organic group, more preferably H or a $C_{1-4}$ organic group, and still more preferably H or a $C_{1-4}$ alkyl group.

Examples of the metal atom include alkali metals (Group 1) and alkaline earth metals (Group 2), and preferred is Na, K, or Li.

M is preferably -H, a metal atom, or $-NR^7_4$, more preferably -H, an alkali metal (Group 1), an alkaline earth metal (Group 2), or $-NR^7_4$, still more preferably -H, -Na, -K, -Li, or $-NH_4$, further preferably -Na, -K, or - $NH_4$, particularly preferably -Na or $-NH_4$, and most preferably $-NH_4$.

$Y^3$ is preferably -COOM or $-SO_3M$, and more preferably -COOM.

The monomer represented by the general formula (6) is preferably at least one selected from the group consisting of monomers represented by the following general formulas (6a), (6b), (6c), (6d), and (6e):

$$CF_2=CF-O-(CF_2)_{n1}-Y^3 \qquad (6a)$$

wherein n1 represents an integer of 1 to 10, and $Y^3$ is as defined above.

$$CF_2=CF-O-(CF_2C(CF_3)F)_{n2}-Y^3 \qquad (6b)$$

wherein n2 represents an integer of 1 to 5, and $Y^3$ is as defined above;

$$CF_2=CF-O-(CFX^1)_{n3}-Y^3 \qquad (6c)$$

wherein $X^1$ represents F or $CF_3$; n3 represents an integer of 1 to 10; and $Y^3$ is as defined above; and

$$CF_2=CF-O-(CF_2CFX^1O)_{n4}-(CF_2)_{n6}-Y^3 \qquad (6d)$$

wherein n4 represents an integer of 1 to 10, n6 represents an integer of 1 to 3, and $Y^3$ and $X^1$ are as defined above; and

$$CF_2=CF-O-(CF_2CF_2CFX^1O)_{n5}-CF_2CF_2CF_2-Y^3 \qquad (6e)$$

wherein n5 represents an integer of 0 to 10, and $Y^3$ and $X^1$ are as defined above.

In the formula (6a), n1 is preferably an integer of 5 or less, and more preferably an integer of 2 or less. $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the monomer represented by the formula (6a) include $CF_2=CF-O-CF_2COOM$, $CF_2=CF(OCF_2CF_2COOM)$, and $CF_2=CF(OCF_2CF_2CF_2COOM)$, wherein M is as defined above.

In the formula (6b), n2 is preferably an integer of 3 or less from the viewpoint of stability of the resulting aqueous dispersion, $Y^3$ is preferably -COOM from the viewpoint of obtaining appropriate water-solubility and stability of the

aqueous dispersion, and M is preferably H or $NH_4$ from the viewpoint of being less likely to remain as impurities and improving the heat resistance of the resulting molded body.

In the formula (6c), n3 is preferably an integer of 5 or less from the viewpoint of water-solubility, $Y^3$ is preferably -COOM from the viewpoint of obtaining appropriate water-solubility and stability of the aqueous dispersion, and M is preferably H or $NH_4$ from the viewpoint of improving dispersion stability.

In the formula (6d), $X^1$ is preferably $-CF_3$ from the viewpoint of stability of the aqueous dispersion, n4 is preferably an integer of 5 or less from the viewpoint of water-solubility, $Y^3$ is preferably -COOM from the viewpoint of obtaining appropriate water-solubility and stability of the aqueous dispersion, and M is preferably H or $NH_4$.

Examples of the monomer represented by the formula (6d) include $CF_2=CFOCF_2CF(CF_3)OCF_2CF_2COOM$, $CF_2=CFOCF_2CF(CF_3)OCF_2COOM$, and $CF_2=CFOCF_2CF(CF_3)OCF_2CF_2CF_2COOM$, wherein M represents H, $NH_4$, or an alkali metal.

In the general formula (6e), n5 is preferably an integer of 5 or less from the viewpoint of water-solubility, $Y^3$ is preferably -COOM from the viewpoint of obtaining appropriate water-solubility and stability of the aqueous dispersion, and M is preferably H or $NH_4$.

An example of the monomer represented by the general formula (6e) is $CF_2=CFOCF_2CF_2CF_2COOM$, wherein M represents H, $NH_4$, or an alkali metal.

In the general formula (7), Rf is preferably a fluorine-containing alkylene group having 1 to 40 carbon atoms. In the general formula (7), at least one of X and Y preferably contains a fluorine atom.

The monomer represented by the general formula (7) is preferably at least one selected from the group consisting of:

a monomer represented by the following general formula (7a):

$$CF_2=CF-(CF_2)_{n1}-Y^3 \qquad (7a)$$

wherein n1 represents an integer of 1 to 10; and $Y^3$ is as defined above; and
a monomer represented by the following general formula (7b):

$$CF_2=CF-(CF_2C(CF_3)F)_{n2}-Y^3 \qquad (7b)$$

wherein n2 represents an integer of 1 to 5; and $Y^3$ is as defined above.
$Y^3$ is preferably $-SO_3M$ or -COOM, and M is preferably H, a metal atom, $NR^{7y}{}_4$, imidazolium optionally having a substituent, pyridinium optionally having a substituent, or phosphonium optionally having a substituent. $R^{7y}$ represents H or an organic group.

In the formula (7a), n1 is preferably an integer of 5 or less, and more preferably an integer of 2 or less. $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

Examples of the perfluorovinylalkyl compound represented by the formula (7a) include $CF_2=CFCF_2COOM$, wherein M is as defined above.

In the formula (7b), n2 is preferably an integer of 3 or less from the viewpoint of stability of the resulting aqueous dispersion, $Y^3$ is preferably -COOM from the viewpoint of obtaining appropriate water-solubility and stability of the aqueous dispersion, and M is preferably H or $NH_4$ from the viewpoint of being less likely to remain as impurities and improving the heat resistance of the resulting molded body.

The modifying monomer preferably includes the modifying monomer (A), preferably includes at least one selected from the group consisting of compounds represented by the general formula (5a), the general formula (5b), the general formula (6a), the general formula (6b), the general formula (6c), and the general formula (6d), and more preferably includes the compound represented by the general formula (5a) or the general formula (5b).

When the modifying monomer (A) is used as the modifying monomer, the content of the modifying monomer (A) unit is preferably in the range of 0.00001 to 1.0% by mass based on all polymerized units in the TFE polymer (PTFE). The lower limit thereof is more preferably 0.0001% by mass, still more preferably 0.0005% by mass, further preferably 0.001% by mass, and still further preferably 0.005% by mass. The upper limit is, in the preferred order, 0.90% by mass, 0.50% by mass, 0.40% by mass, 0.30% by mass, 0.20% by mass, 0.15% by mass, 0.10% by mass, 0.08% by mass, 0.05% by mass, or 0.01% by mass.

In the production of the TFE polymer, as the amount of the polymer (I) added, the amount of the polymer (I) added in the above-mentioned step C can be adopted. The amount of the polymer (I) added is not limited as long as it is within the above range. Too large an amount of the polymer (I) added may cause generation of needle-shaped particles having a large aspect ratio and gelling of the aqueous dispersion, impairing the stability. The lower limit of the amount of the polymer

(I) used (added) is preferably 0.0001% by mass, more preferably 0.001% by mass, still more preferably 0.01% by mass, and particularly preferably 0.02% by mass, based on the aqueous medium. The upper limit of the amount of the polymer (I) used (added) is preferably 10% by mass and more preferably 5% by mass, based on the aqueous medium.

The polymer (I) may be added to the reaction vessel at once before initiation of the polymerization, may be added at once after initiation of the polymerization, may be added in multiple portions during the polymerization, or may be added continuously during the polymerization.

In production of the TFE polymer, the polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Further, during the polymerization, a radical scavenger such as hydroquinone or catechol may be added or a decomposer for peroxides such as ammonium sulfite may be added to adjust the radical concentration in the system.

The redox polymerization initiator is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator may preferably contain a copper salt or an iron salt. An example of the copper salt is copper(II) sulfate and an example of the iron salt is iron(II) sulfate.

Examples of the redox initiator include potassium permanganate/oxalic acid, ammonium persulfate/bisulfite/iron sulfate, manganese triacetate/oxalic acid, ammonium cerium nitrate/oxalic acid, and bromate/bisulfite, and potassium permanganate/oxalic acid is preferred. In the case of using a redox initiator, either an oxidizing agent or a reducing agent may be charged into a polymerization tank in advance, followed by adding the other continuously or intermittently thereto to initiate the polymerization. For example, in the case of potassium permanganate/oxalic acid, preferably, oxalic acid is charged into a polymerization tank and potassium permanganate is continuously added thereto.

In the production of the TFE polymer, a known chain transfer agent may be used. Examples thereof include saturated hydrocarbons such as methane, ethane, propane, and butane, halogenated hydrocarbons such as chloromethane, dichloromethane, and difluoroethane, alcohols such as methanol, ethanol, and isopropanol, and hydrogen. The chain transfer agent is preferably one in a gas state at a normal temperature and normal pressure.

The amount of the chain transfer agent used is usually 1 to 10,000 ppm by mass, preferably 1 to 5,000 ppm by mass, based on the total amount of TFE fed.

In production of the TFE polymer, a saturated hydrocarbon that is substantially inert to the reaction, that is in a liquid state under the reaction conditions, and that has 12 or more carbon atoms may be used as a dispersion stabilizer for the reaction system in an amount of 2 to 10 parts by mass based on 100 parts by mass of the aqueous medium. Ammonium carbonate, ammonium phosphate, or the like may be added as a buffer to adjust the pH during the reaction.

At completion of the polymerization for the TFE polymer, a pretreatment aqueous dispersion having a solid concentration of 1.0 to 70% by mass and containing the TFE polymer having an average primary particle size of 50 to 500 nm can be usually obtained. The pretreatment aqueous dispersion contains a surfactant including at least the polymer (I), and the fluoropolymer. Also, the use of the surfactant including at least the polymer (I) allows for obtaining a pretreatment aqueous dispersion having particles of the TFE polymer having a fine particle size as small as 0.5 $\mu$m or smaller.

The lower limit of the solid concentration in the pretreatment aqueous dispersion is preferably 5% by mass and more preferably 8% by mass. The upper limit thereof may be, but is not limited to, 40% by mass or 35% by mass.

The lower limit of the average primary particle size of the TFE polymer is preferably 100 nm and more preferably 150 nm. The upper limit thereof is preferably 400 nm and more preferably 350 nm.

The average primary particle size can be measured by dynamic light scattering. The average primary particle size may be measured by preparing an aqueous dispersion with a solid concentration being adjusted to 1.0% by mass and using dynamic light scattering at 25°C with 70 measurement processes, wherein the solvent (water) has a refractive index of 1.3328 and the solvent (water) has a viscosity of 0.8878 mPa·s. For the dynamic light scattering, ELSZ-1000S (manufactured by Otsuka Electronics Co., Ltd.) may be used, for example.

By carrying out the step A on the pretreatment aqueous dispersion containing the TFE polymer, an aqueous dispersion of the TFE polymer (fluoropolymer aqueous dispersion) can be obtained. TFE polymer fine powder can be produced by coagulating (agglomerating) the aqueous dispersion of the TFE polymer and recovering the agglomerate containing the TFE polymer. The aqueous dispersion of the TFE polymer can be formed into TFE polymer fine powder through coagulation, washing, and drying. The resulting fine powder may be used for various applications. Coagulation of the aqueous dispersion of the TFE polymer is usually performed by diluting the aqueous dispersion obtained by polymerization of polymer latex, for example, with water to a polymer concentration of 5 to 20% by mass, optionally adjusting the pH to a neutral or alkaline, and stirring the polymer more vigorously than during the reaction in a vessel equipped with a stirrer. The coagulation may be performed under stirring while adding a water-soluble organic compound such as methanol or acetone, an inorganic salt such as potassium nitrate or ammonium carbonate, or an inorganic acid

such as hydrochloric acid, sulfuric acid, or nitric acid as a coagulating agent. The coagulation may be continuously performed using a device such as an inline mixer.

From the viewpoint of productivity, the concentration of the non-agglomerated TFE polymer in the discharge water generated by the agglomeration is preferably low, more preferably less than 0.4% by mass, and particularly preferably less than 0.3% by mass.

Pigment-containing or filler-containing TFE polymer fine powder in which pigments and fillers are uniformly mixed can be obtained by adding pigments for coloring and various fillers for improving mechanical properties before or during the coagulation.

The wet powder obtained by coagulating the TFE polymer in the aqueous dispersion is usually dried by means of vacuum, high-frequency waves, hot air, or the like while keeping the wet powder in a state in which the wet powder is less fluidized, preferably in a stationary state. Friction between the powder particles especially at high temperature usually has unfavorable effects on the TFE polymer in the form of fine powder. This is because the particles made of such a TFE polymer are easily formed into fibrils even with a small shearing force and lose its original, stable particulate structure.

The drying is performed at a drying temperature of 10 to 300°C(10 to 250°C), preferably 100 to 300°C(100 to 200°C).

The resulting fine powder of the TFE polymer is preferred for molding, and suitable applications thereof include tubes for hydraulic systems or fuel systems of aircraft or automobiles, flexible hoses for chemicals or vapors, and electric wire coating.

The aqueous dispersion of the TFE polymer is preferably mixed with a nonionic surfactant to stabilize and further concentrate the aqueous dispersion, and then further mixed with, depending on its purpose, an organic or inorganic filler to form a composition and used in a variety of applications. The composition, when applied to a metal or ceramic substrate, can provide a coating surface having non-stickiness, a low coefficient of friction, and excellent gloss, smoothness, abrasion resistance, weather resistance, and heat resistance, which is suitable for coating of rolls and cooking utensils and impregnation of glass cloth.

The aqueous dispersion of the TFE polymer may also be used to prepare an organosol of the TFE polymer. The organosol may contain the TFE polymer and an organic solvent, and examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents. Preferably used are N-methyl-2-pyrrolidone and dimethylacetamide. The organosol may be prepared by the method disclosed in International Publication No. WO2012/002038, for example.

The aqueous dispersion of the TFE polymer or the fine powder of the TFE polymer is also preferably used as a processing aid. When used as a processing aid, the aqueous dispersion or the fine powder is mixed with a host polymer, for example, to improve the melt strength of the host polymer in melt fabrication and to improve the mechanical strength, electric properties, incombustibility, anti-drop performance during combustion, and slidability of the resulting polymer.

The aqueous dispersion of the TFE polymer or the fine powder of the TFE polymer is also preferably used as a binder for batteries or used for dustproof applications.

The aqueous dispersion of the TFE polymer or the fine powder of the TFE polymer is also preferably combined with a resin other than the TFE polymer to form a processing aid before use. The aqueous dispersion or fine powder of the TFE polymer is suitable as a raw material of the PTFEs disclosed in, for example, Japanese Patent Laid-Open No. 11-49912, U.S. Patent No. 5,804,654, Japanese Patent Laid-Open No. 11-29679, and Japanese Patent Laid-Open No. 2003-2980. Processing aids containing the aqueous dispersion or the fine powder are not inferior in any way to the processing aids disclosed in the publications.

The aqueous dispersion of the TFE polymer is also preferably mixed with an aqueous dispersion of a melt-fabricable fluororesin so that the components coagulate to form co-coagulated powder. The co-coagulated powder is suitable as a processing aid.

Examples of the melt-fabricable fluororesin include FEP, PFA, TFE/perfluoroallyl ether copolymers, ETFE, and ethylene/TFE/HFP copolymers (EFEP), of which FEP is preferred.

The aqueous dispersion also preferably contains a melt-fabricable fluororesin. Examples of the melt-fabricable fluororesin include FEP, PFA, TFE/perfluoroallyl ether copolymers, ETFE, and EFEP. The aqueous dispersion of the TFE polymer containing the melt-fabricable fluororesin may be used as a coating material. The melt-fabricable fluororesin enables sufficient fusion of the TFE polymer particles, improving the film-formability and providing the resulting film with gloss.

The fluorine-free resin to which the co-coagulated powder is added may be in the form of powder, pellets, or emulsion. In order to achieve sufficient mixing of the resins, the addition is preferably performed by a known method such as extrusion kneading or roll kneading under a shearing force.

The aqueous dispersion of the TFE polymer is also preferably used as a dust suppression treatment agent. The dust suppression treatment agent may be used in a method for suppressing dust from a dust-generating substance by mixing the dust suppression treatment agent with the dust-generating substance and subjecting the mixture to a

compression-shear action at a temperature of 20 to 200°C to fibrillate the TFE polymer, for example, methods disclosed in Japanese Patent No. 2,827,152 and Japanese Patent No. 2,538,783.

The aqueous dispersion of the TFE polymer can suitably be used for the dust suppression treatment agent composition disclosed in International Publication No. WO2007/004250, and can also suitably be used for the method of dust suppression treatment disclosed in International Publication No. WO2007/000812.

The dust control treatment agent is suitably used for dust suppression treatment in the fields of building-products, soil stabilizers, solidifying materials, fertilizers, landfill of incineration ash and harmful substance, and explosion proof equipment, cosmetics, and sands for pet excretion represented by cat sand.

The aqueous dispersion of the TFE polymer is also preferably used as a material for producing TFE polymer fibers by a dispersion spinning method. The dispersion spinning method is a method in which the aqueous dispersion of the TFE polymer and an aqueous dispersion of a matrix polymer are mixed and the mixture is extruded to form an intermediate fiber structure, and then the intermediate fiber structure is fired to decompose the matrix polymer and sinter the TFE polymer particles, thereby providing TFE polymer fibers.

The high-molecular-weight PTFE powder obtained by polymerization has stretchability and non melt processability, and is also useful as a material for a stretched body (porous body). In the first production method of the present disclosure, the fluoropolymer may be a high-molecular-weight PTFE. When the fluoropolymer aqueous dispersion contains a high-molecular-weight PTFE, it is also useful as a raw material for stretched bodies (porous bodies).

When the stretched body is in the form of a film (PTFE stretched film or PTFE porous film), the stretched body can be formed by stretching by a known PTFE stretching method. Stretching allows easy formation of fibrils of PTFE, resulting in a high-molecular-weight PTFE porous body (film) including nodes and fibers.

Preferably, roll-stretching a sheet-shaped or rod-shaped paste extrudate in an extruding direction can provide a uniaxially stretched film.

Further stretching in a transverse direction using a tenter, for example, can provide a biaxially stretched film.

Prebaking treatment is also preferably performed before stretching.

This PTFE stretched body is a porous body having a high porosity, and can suitably be used as a filter material for a variety of microfiltration filters such as air filters and chemical filters and a support member for polymer electrolyte films.

The PTFE stretched body is also useful as a material of products used in the fields of textiles, of medical treatment, of electrochemistry, of sealants, of air filters, of ventilation/internal pressure adjustment, of liquid filters, and of consumer goods.

The following provides examples of specific applications.

- Electrochemical field

Examples of the applications in this field include prepregs for dielectric materials, EMI-shielding materials, and heat conductive materials. More specifically, examples thereof include printed circuit boards, electromagnetic interference shielding materials, insulating heat conductive materials, and insulating materials.

- Sealant field

Examples of the applications in this field include gaskets, packings, pump diaphragms, pump tubes, and sealants for aircraft.

- Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), adsorbent-attached filters (for HDD embedment), adsorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

- Ventilation/internal pressure adjustment field

Examples of the applications in this field include materials for freeze drying such as vessels for freeze drying, ventilation materials for automobiles for electronic circuits and lamps, applications relating to vessels such as vessel caps, protective ventilation for electronic devices, including small devices such as tablet terminals and mobile phone terminals, and ventilation for medical treatment.

- Liquid filter field

Examples of the applications in this field include liquid filters for semiconductors (for production of semiconductors), hydrophilic PTFE filters (for production of semiconductors), filters for chemicals (for chemical treatment), filters for pure water production lines (for production of pure water), and back-washing liquid filters (for treatment of industrial discharge water).

- Consumer goods field

Examples of the applications in this field include clothes, cable guides (movable wires for motorcycles), clothes for motor cyclists, cast liners (medical supporters), filters for cleaners, bagpipes (musical instrument), cables (signal cables for guitars, etc.), and strings (for string instrument).

- Textile field

Examples of the applications in this field include PTFE fibers (fiber materials), machine threads (textiles), weaving yarns (textiles), and ropes.

- Medical treatment field

Examples of the applications in this field include implants (stretched articles), artificial blood vessels, catheters, general surgical operations (tissue reinforcing materials), products for head and neck (dura mater alternatives), oral health (tissue regenerative medicine), and orthopedics (bandages).

The above-mentioned polymer (I) may also be used to produce a low-molecular-weight PTFE. In the first production method of the present disclosure, the fluoropolymer may be a low-molecular-weight PTFE.

The low-molecular-weight PTFE may be produced by polymerization, or may be produced by reducing the molecular weight of a high-molecular-weight PTFE obtained by polymerization by a known method (e.g., thermolysis, radiolysis).

A low-molecular-weight PTFE having a molecular weight of 600,000 or less (also referred to as PTFE micropowder) has excellent chemical stability and a very low surface energy, and is less likely to generate fibrils, and is therefore suitably used as an additive for improving the lubricity and the texture of the coating surface in production of plastics, inks, cosmetics, coating materials, greases, parts of office automation equipment, and toners (e.g., see Japanese Patent Laid-Open No. 10-147617).

A low-molecular-weight PTFE may also be obtained by dispersing a polymerization initiator and the polymer (I) in an aqueous medium in the presence of a chain transfer agent, and then polymerizing TFE alone or TFE and a monomer copolymerizable with TFE.

In the case of using the low-molecular-weight PTFE obtained by the polymerization in the form of powder, the powder particles may be obtained by coagulating the aqueous dispersion.

The high-molecular-weight PTFE as used herein means a non melt-processible and fibrillatable PTFE. The low-molecular-weight PTFE as used herein means a melt-fabricable and non-fibrillatable PTFE.

The term "non melt-processible" means a feature of polymer that the melt flow rate thereof cannot be measured at a temperature higher than the crystal melting point in conformity with ASTM D 1238 and D 2116.

The presence or absence of the fibrillation ability can be determined by "paste extrusion", a representative method of molding a "high-molecular-weight PTFE powder" which is a powder of a TFE polymer. Usually, the high-molecular-weight PTFE can be paste-extruded when it is fibrillatable. When a non-fired molded product obtained by paste extrusion shows substantially no strength or elongation (for example, when it shows an elongation of 0% and is broken when stretched), it can be regarded as non-fibrillatable.

The high-molecular-weight PTFE preferably has a standard specific gravity (SSG) of 2.130 to 2.280. The standard specific gravity is determined by the water replacement method in conformity with ASTM D-792 using a sample molded in conformity with ASTM D4895-89. The "high-molecular-weight" as used herein means that the standard specific gravity is within the above range.

The low-molecular-weight PTFE has a complex viscosity at 380°C of $1 \times 10^2$ to $7 \times 10^5$ Pa·s. The "low-molecular-weight" as used herein means that the complex viscosity is within the above range.

The high-molecular-weight PTFE has a complex viscosity significantly higher than that of the low-molecular-weight PTFE, and the complex viscosity thereof is difficult to measure accurately. The complex viscosity of the low-molecular-weight PTFE is measurable, but the low-molecular-weight PTFE has difficulty in providing a molded article to be used in measurement of the standard specific gravity. Thus, it is difficult to measure its accurate standard specific gravity. Accordingly, in the present disclosure, the standard specific gravity is used as an index of the molecular weight of the high-molecular-weight PTFE, while the complex viscosity is used as an index of the molecular weight of the low-molecular-weight PTFE. It should be noted that there is no known measuring method for directly specifying the molecular weight of either the high-molecular-weight PTFE or the low-molecular-weight PTFE.

The high-molecular-weight PTFE preferably has a peak temperature of 333 to 347°C, more preferably 335 to 345°C. The low-molecular-weight PTFE preferably has a peak temperature of 322 to 333°C, more preferably 324 to 332°C. The peak temperature is the temperature corresponding to the maximum value on a heat-of-fusion curve with a temperature-increasing rate of 10°C/min using a differential scanning calorimeter (DSC) for a PTFE which has never been heated up to 300°C or higher. The peak temperature can be specified as the temperature corresponding to the maximum value appearing in the differential thermal (DTA) curve obtained by increasing the temperature of PTFE without a history of being heated to a temperature of 300°C or higher at 10°C/min using TG/DTA (simultaneous thermogravimetric analyzer).

Preferably, the high-molecular-weight PTFE has at least one endothermic peak in a range of 333 to 347°C on a heat-of-fusion curve with a temperature-increasing rate of 10°C/min using a differential scanning calorimeter (DSC) for a PTFE which has never been heated up to 300°C or higher, and has an enthalpy of fusion of 62 mJ/mg or higher at 290 to 350°C calculated from the heat-of-fusion curve.

The PTFE fine powder obtained by using the above-mentioned polymer (I) may also be used to produce unsintered tape (green tape).

(II) Melt-fabricable fluororesins

(1) In a step C, the polymerization for FEP is preferably performed at a polymerization temperature of 10 to 150°C and a polymerization pressure of 0.3 to 6.0 MPaG.

FEP preferably has a monomer composition ratio (% by mass) of TFE:HFP = (60 to 95): (5 to 40), more preferably (85 to 92): (8 to 15). The FEP may be modified with a perfluoro(alkyl vinyl ether) as a third component within a range of 0.1 to 2% by mass of all monomers.

In the polymerization of the FEP, as the amount of the polymer (I) added, the amount of the polymer (I) added in the above-mentioned step C can be adopted. Usually, the polymer (I) is added in an amount of 0.0001 to 10% by mass based on 100% by mass of the aqueous medium.

In the polymerization for FEP, the chain transfer agent used is preferably cyclohexane, methanol, ethanol, propanol, ethane, propane, butane, pentane, hexane, carbon tetrachloride, chloroform, methylene chloride, methyl chloride, or the like, and the pH buffer used is preferably ammonium carbonate, disodium hydrogen phosphate, or the like.

In the first production method of the present disclosure, when the fluoropolymer is FEP, the aqueous dispersion of FEP obtained may optionally be subjected to post-treatment such as concentration, and then the concentrate may be dried and powdered, and the powder may be melt-extruded into pellets. The aqueous medium in the FEP aqueous dispersion may optionally contain an additive such as a nonionic surfactant and may contain a water-soluble organic solvent such as a water-soluble alcohol or may be free from a water-soluble organic solvent.

The melt extrusion may be performed under any appropriately set extrusion conditions usually capable of providing pellets.

In the first production method of the present disclosure, when the fluoropolymer is FEP, the FEP may contain an end group such as $-CF_3$ or $-CF_2H$ on at least one of the polymer main chain and a polymer side chain, but it is preferable that the content of thermally unstable groups such as -COOH, $-CH_2OH$, -COF,-CF=CF-, - $CONH_2$, or $-COOCH_3$ (hereinafter, referred to as an "unstable end group") is low or absent.

The unstable end group is chemically unstable, and thus not only reduces the heat resistance of the resin but also causes increase in the attenuation of the resulting electric wire.

In the first production method of the present disclosure, it is preferable that, in the fluoropolymer, the total number of unstable end groups and $-CF_2H$ end groups is 50 or less per $1 \times 10^6$ carbon atoms. The number of such groups is more preferably less than 20, still more preferably 5 or less, per $1 \times 10^6$ carbon atoms. There may also be neither unstable end groups nor $-CF_2H$ end groups, i.e. all end groups may be $-CF_3$ end groups.

The unstable end groups and the $-CF_2H$ end groups may be fluorinated and converted into the $-CF_3$ end groups and thereby stabilized. Examples of the fluorination method include, but not limited to, methods of exposing the polymer to a fluorine radical source that generates fluorine radicals under fluorination conditions. Examples of the fluorine radical source include fluorine gas, $CoF_3$, $AgF_2$, $UF_6$, $OF_2$, $N_2F_2$, $CF_3OF$, and halogen fluorides such as $IF_5$ and $ClF_3$. Of these, preferred is a method of bringing a fluorination gas and the FEP into direct contact with each other. In order to control the reaction, the contact is preferably performed using a diluted fluorine gas having a fluorine gas concentration of 10 to 50% by mass. The diluted fluorine gas is obtainable by diluting fluorine gas with an inert gas such as nitrogen gas or argon gas. The fluorine gas treatment may be performed at a temperature of 100 to 250°C. The treatment temperature is not limited to

this range and may be appropriately set in accordance with the situation. The fluorine gas treatment is preferably performed by feeding a diluted fluorine gas into the reactor continuously or intermittently. This fluorination may be performed on dry powder after the polymerization or on melt-extruded pellets.

The FEP has good moldability and is less likely to cause molding defects, as well as has properties such as heat resistance, chemical resistance, solvent resistance, insulation, and electric properties.

The FEP powder may be produced by a method of drying the fluoropolymer aqueous dispersion containing the FEP obtained by the above-mentioned production method of the present disclosure to powder the FEP.

The powder may be fluorinated. The fluorinated powder may be produced by a method of feeding a fluorine gas to the powder obtained by the above-described method for producing a powder to fluorinate the powder to obtain a fluorinated powder.

The FEP pellets may be produced by a method of pelletizing FEP powder.

The pellets may be fluorinated. The fluorinated pellets may be produced by a method of feeding a fluorine gas to the pellets obtained by the above-described method for producing pellets to fluorinate the pellets to obtain fluorinated pellets.

Thus, this FEP may be used in production of a variety of molded articles such as coating materials for electric wires, foamed electric wires, cables, and wires, tubes, films, sheets, and filaments.

(2) In the step C, the polymerization for a TFE/perfluoro(alkyl vinyl ether) copolymer such as PFA or MFA and a TFE/perfluoroallyl ether copolymer is usually preferably carried out at a polymerization temperature of 10 to 100°C and a polymerization pressure of 0.3 to 6.0 MPaG.

The TFE/perfluoro(alkyl vinyl ether) copolymer preferably has a monomer composition ratio (mol%) of TFE:perfluoro(alkyl vinyl ether) = (90 to 99.7):(0.3 to 10), more preferably (97 to 99):(1 to 3). The perfluoro(alkyl vinyl ether) used is preferably one represented by the formula: $CF_2=CFORf^4$, wherein $Rf^4$ is a perfluoroalkyl group having 1 to 6 carbon atoms.

The TFE/perfluoroallyl ether copolymer preferably has a monomer composition ratio (mol%) of TFE:perfluoroallyl ether = (90 to 99.7): (0.3 to 10), more preferably (97 to 99): (1 to 3). The perfluoroallyl ether used is preferably one represented by the formula: $CF_2=CFCF_2ORf^4$, wherein $Rf^4$ is a perfluoroalkyl group having 1 to 6 carbon atoms.

In the polymerization for the TFE/perfluoro(alkyl vinyl ether) copolymer and the TFE/perfluoroallyl ether copolymer, as the amount of the above-mentioned polymer (I) added, the amount of the polymer (I) added in the above-mentioned step C can be adopted. Usually, it is preferable that the polymer (I) is added in an amount of 0.0001 to 10% by mass based on 100% by mass of the aqueous medium.

In the polymerization for the TFE/perfluoro(alkyl vinyl ether) copolymer and the TFE/perfluoroallyl ether copolymer, the chain transfer agent used is preferably cyclohexane, methanol, ethanol, propanol, propane, butane, pentane, hexane, carbon tetrachloride, chloroform, methylene chloride, methyl chloride, methane, ethane, or the like, and the pH buffer used is preferably ammonium carbonate, disodium hydrogen phosphate, or the like.

In the first production method of the present disclosure, when the fluoropolymer is a TFE/perfluoro(alkyl vinyl ether) copolymer such as PFA or MFA or a TFE/perfluoroallyl ether copolymer, the obtained aqueous dispersion of the TFE/perfluoro(alkyl vinyl ether) copolymer such as PFA or MFA or the TFE/perfluoroallyl ether copolymer may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant and may contain a water-soluble organic solvent such as a water-soluble alcohol or may be free from a water-soluble organic solvent.

The melt extrusion may be performed under any appropriately set extrusion conditions usually capable of providing pellets.

In order to improve the heat resistance of the copolymer and to reinforce a chemical permeation suppression effect of a molded article, the copolymer is preferably subjected to a fluorine gas treatment.

The fluorine gas treatment is performed by bringing fluorine gas into contact with a chemical permeation suppressant. However, since the reaction with fluorine is extremely exothermic, it is preferable to dilute fluorine with an inert gas such as nitrogen. The amount of fluorine in the fluorine gas/inert gas mixture is 1 to 100% by mass, preferably 10 to 25% by mass. The treatment temperature is 150 to 250°C, preferably 200 to 250°C and the fluorine gas treatment duration is 3 to 16 hours, preferably 4 to 12 hours.

The fluorine gas treatment is performed at a gas pressure in the range of 1 to 10 atm, preferably atmospheric pressure. In the case of using a reactor at atmospheric pressure, the fluorine gas/inert gas mixture may be continuously passed through the reactor. This results in conversion of unstable ends of the copolymer into $-CF_3$ ends, thermally stabilizing the copolymer.

The copolymer and the composition thereof may be molded by compression molding, transfer molding, extrusion molding, injection molding, blow molding, or the like as in the case of conventional molding techniques for PFA.

Such a molding technique can provide a desired molded article. Examples of the molded article include sheets, films, packings, round bars, square bars, pipes, tubes, round tanks, square tanks, tanks, wafer carriers, wafer boxes, beakers, filter housings, flowmeters, pumps, valves, cocks, connectors, nuts, electric wires, and heat-resistant electric

wires.

Preferred among these are tubes, pipes, tanks, and connectors to be used for a variety of chemical reaction devices, semiconductor manufacturing devices, and acidic or alkaline chemical feeding devices each requiring chemical impermeability.

The aqueous dispersion of the TFE/perfluoro(alkyl vinyl ether) copolymer such as PFA or MFA and the TFE/perfluoroallyl ether copolymer may also be appropriately mixed with a nonionic surfactant, and optionally polyethersulfone, polyamide-imide, and/or polyimide, and metal powder are dissolved or dispersed in an organic solvent. Thereby, a primer composition can be obtained. This primer composition may be used for a method of applying a fluororesin to a metal surface. The method includes applying the primer composition to a metal surface, applying a melt-fabricable fluororesin composition to the resulting primer layer, and firing the melt-fabricable fluororesin composition layer together with the primer layer.

(3) In the step C, the polymerization for ETFE is preferably performed at a polymerization temperature of 10 to 100°C and a polymerization pressure of 0.3 to 2.0 MPaG.

The ETFE preferably has a monomer composition ratio (mol%) of TFE:ethylene = (50 to 99): (50 to 1). The ETFE may be modified with a third monomer within a range of 0 to 20% by mass of all monomers. The composition ratio thereof is preferably TFE:ethylene:third monomer = (63 to 94): (27 to 2): (1 to 10). The third monomer is preferably perfluorobutyl ethylene, perfluorohexyl ethylene, 3,3,4,4,5,5,6,6,7,7,8,8,8-tridecafluorooct-1-ene, 2,3,3,4,4,5,5-heptafluoro-1-pentene ($CH_2=CFCF_2CF_2CF_2H$), or 2-trifluoromethyl-3,3,3-trifluoropropene ($(CF_3)_2C=CH_2$).

In the polymerization for the ETFE, as the amount of the above-mentioned polymer (I) added, the amount of the polymer (I) added in the above-mentioned step C can be adopted. Usually, the polymer (I) is added in an amount of 0.0001 to 10% by mass based on 100% by mass of the aqueous medium.

In the polymerization for ETFE, the chain transfer agent used is preferably cyclohexane, methanol, ethanol, propanol, ethane, propane, butane, pentane, hexane, carbon tetrachloride, chloroform, methylene chloride, methyl chloride.

In the first production method of the present disclosure, when the fluoropolymer is ETFE, the aqueous dispersion of ETFE obtained may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant and may contain a water-soluble organic solvent such as a water-soluble alcohol or may be free from a water-soluble organic solvent.

The melt extrusion may be performed under any appropriately set extrusion conditions usually capable of providing pellets.

The ETFE may be extrusion-molded into a sheet. In other words, powder or pellets of ETFE in a molten state may be continuously extruded through a die and then cooled to provide a sheet-shaped molded article. The ETFE may be mixed with an additive.

Known additives may be incorporated as appropriate. Specific examples thereof include ultraviolet absorbers, photostabilizers, antioxidants, infrared absorbers, flame retarders, flame-retardant fillers, organic pigments, inorganic pigments, and dyes. From the viewpoint of excellent weather resistance, inorganic additives are preferred.

The content of the additive in the ETFE sheet is preferably 20% by mass or less, and particularly preferably 10% by mass or less, based on the total mass of the ETFE sheet.

The ETFE sheet has excellent mechanical strength and appearance, and thus can suitably be used for film materials (e.g., roof materials, ceiling materials, outer wall materials, inner wall materials, and coating materials) of film-structured buildings (e.g., sports facilities, gardening facilities, and atriums). In addition to the film materials of film-structured buildings, the ETFE sheet is also useful for, for example, outdoor boards (e.g., noise-blocking walls, windbreak fences, breakwater fences, roof panels of carports, shopping arcades, footpath walls, and roof materials), shatter-resistant window films, heat-resistant waterproof sheets, building materials (e.g., tent materials of warehouse tents, film materials for shading, partial roof materials for skylights, window materials alternative to glass, film materials for flame-retardant partitions, curtains, outer wall reinforcement, waterproof films, anti-smoke films, non-flammable transparent partitions, road reinforcement, interiors (e.g., lighting, wall surfaces, and blinds), exteriors (e.g., tents and signboards)), living and leisure goods (e.g., fishing rods, rackets, golf clubs, and screens), automobile materials (e.g., hoods, damping materials, and bodies), aircraft materials, shipment materials, exteriors of home appliances, tanks, vessel inner walls, filters, film materials for construction works, electronic materials (e.g., printed circuit boards, circuit boards, insulating films, and release films), surface materials for solar cell modules, mirror protection materials for solar thermal energy, and surface materials for solar water heaters.

(4) The first production method of the present disclosure may be used to produce a fluoropolymer aqueous dispersion containing an electrolyte polymer precursor. In the step C, the polymerization for the electrolyte polymer precursor is preferably performed at a polymerization temperature of 10 to 100°C and a polymerization pressure of 0.1 to 2.0 MPaG. The electrolyte polymer precursor contains a vinyl ether monomer as described below and can be converted into an ion-exchangeable polymer through a hydrolysis treatment.

An example of the vinyl ether monomer to be used for the electrolyte polymer precursor is

a fluoromonomer represented by the general formula (150):

$$CF_2=CF-O-(CF_2CFY^{151}-O)_n-(CFY^{152})_m-A^{151}$$

wherein $Y^{151}$ represents a fluorine atom, a chlorine atom, a $-SO_2F$ group, or a perfluoroalkyl group; the perfluoroalkyl group optionally containing ether oxygen and a $-SO_2F$ group; n represents an integer of 0 to 3; n $Y^{151}$s are the same as or different from each other; $Y^{152}$ represents a fluorine atom, a chlorine atom, or a $-SO_2F$ group; m represents an integer of 1 to 5; m $Y^{152}$s are the same as or different from each other; $A^{151}$ represents - $SO_2X^{151}$,$-COZ^{151}$, or $-POZ^{152}Z^{153}$; $X^{151}$ represents F, Cl, Br, I, $-OR^{151}$, or$-NR^{152}R^{153}$; $Z^{151}$, $Z^{152}$, and $Z^{153}$ are the same as or different from each other, and each represent $-NR^{154}R^{155}$ or $-OR^{156}$; and $R^{151}$, $R^{152}$, $R^{153}$, $R^{154}$, $R^{155}$, and $R^{156}$ are the same as or different from each other, and each represent H, ammonium, an alkali metal, or an alkyl group, aryl group, or sulfonyl-containing group optionally containing a fluorine atom.

The electrolyte polymer precursor preferably has a monomer composition ratio (mol%) of TFE:vinyl ether = (50 to 99): (50 to 1), more preferably TFE:vinyl ether = (50 to 93): (50 to 7).

The electrolyte polymer precursor may be modified with a third monomer within a range of 0 to 20% by mass of all monomers. Examples of the third monomer include multifunctional monomers such as CTFE, vinylidene fluoride, perfluoroalkyl vinyl ether, and divinylbenzene.

The electrolyte polymer precursor thereby obtained may be molded into a film, followed by hydrolysis using an alkali solution and a treatment using a mineral acid, and thereby used as a polymer electrolyte film for fuel cells, electrolysis devices, redox flow batteries

The electrolyte polymer precursor may be hydrolyzed using an alkali solution while the dispersed state thereof is maintained, thereby providing an electrolyte polymer dispersion.

This dispersion may be then heated up to 120°C or higher in a pressurized vessel and thereby dissolved in, for example, a solvent mixture of water and an alcohol, i.e., converted into a solution state.

The solution thereby obtained may be used as a binder for electrodes. Also, the solution may be combined with a variety of additives and cast to form a film, and the film may be used for antifouling films, organic actuators

(5) TFE/VDF copolymer

In the step C, the polymerization for the TFE/VDF copolymer may be performed at any polymerization temperature, for examples, 0 to 100°C. The polymerization pressure is determined as appropriate in accordance with the other polymerization conditions such as the polymerization temperature, and may be usually 0 to 9.8 MPaG.

The TFE/VDF copolymer preferably has a monomer composition ratio (mol%) of TFE:VDF = (5 to 90):(95 to 10). The TFE/VDF copolymer may be modified with a third monomer within a range of 0 to 50 mol% of all monomers. The composition ratio thereof is preferably TFE:ethylene:third monomer = (30 to 85):(10 to 69.9):(0.1 to 10).

The third monomer is preferably a monomer represented by the formula:

$$CX^{11}X^{12}=CX^{13}(CX^{14}X^{15})_{n11}X^{16}$$

wherein $X^{11}$ to $X^{16}$ are the same as or different from each other, and each represent H, F, or Cl; n11 represents an integer of 0 to 8, with the proviso that the third monomer is other than TFE and VDF; or a monomer represented by the formula:

$$CX^{21}X^{22}=CX^{23}-O(CX^{24}X^{25})_{n21}X^{26}$$

wherein $X^{21}$ to $X^{26}$ are the same as or different from each other, and each represent H, F, or Cl; and n21 represents an integer of 0 to 8.

The third monomer may be a fluorine-free ethylenic monomer. From the viewpoint of maintaining the heat resistance and the chemical resistance, the fluorine-free ethylenic monomer is preferably selected from ethylenic monomers having 6 or less carbon atoms. Examples thereof include ethylene, propylene, 1-butene, 2-butene, vinyl chloride, vinylidene chloride, alkyl vinyl ethers (e.g., methyl vinyl ether, ethyl vinyl ether, and propyl vinyl ether), maleic acid, itaconic acid, 3-butenoic acid, 4-pentenoic acid, vinylsulfonic acid, acrylic acid, and methacrylic acid.

In the polymerization of the TFE/VDF copolymer, as the amount of the above-mentioned polymer (I) added, the amount of the polymer (I) added in the above-mentioned step C can be adopted. Usually, the polymer (I) is added in an

amount of 0.0001 to 5% by mass based on 100% by mass of the aqueous medium.

The TFE/VDF copolymer obtained by the polymerization may be amidated by bringing it into contact with a nitrogen compound capable of generating ammonia water, ammonia gas, or ammonia.

The TFE/VDF copolymer obtained by the above-described method may also preferably be used as a material for providing TFE/VDF copolymer fibers by a spinning-drawing method. The spinning-drawing method is a method for obtaining a TFE/VDF copolymer fiber by melt spinning a TFE/VDF copolymer, cooling and solidifying it to obtain an undrawn yarn, and then running the undrawn yarn in a heating cylinder to draw the undrawn yarn.

The TFE/VDF copolymer may be dissolved in an organic solvent to provide a solution of the TFE/VDF copolymer. Examples of the organic solvent include nitrogen-containing organic solvents such as N-methyl-2-pyrrolidone, N,N-dimethyl acetamide, and dimethyl formamide; ketone-based solvents such as acetone, methyl ethyl ketone, cyclohexanone, and methyl isobutyl ketone; ester-based solvents such as ethyl acetate and butyl acetate; ether-based solvents such as tetrahydrofuran and dioxane; and general-purpose organic solvents having a low boiling point such as solvent mixtures thereof. The solution may be used as a binder for batteries.

The aqueous dispersion of the TFE/VDF copolymer may preferably be used to coat a porous substrate formed from a polyolefin resin to provide a composite porous film. The aqueous dispersion may also preferably contain inorganic particles and/or organic particles dispersed therein and be used to coat a porous substrate to provide a composite porous film. The composite porous film thereby obtained may be used as a separator for lithium secondary batteries.

The powder of the melt-fabricable fluororesin is suitably used as a powdery coating material. When applied to a substrate, the powdery coating material made of the melt-fabricable fluororesin powder can provide a film having a smooth surface. The melt-fabricable fluororesin powder having an average particle size of 1 μm or greater and smaller than 100 μm is particularly suitable as a powdery coating material used for electrostatic coating. The melt-fabricable fluororesin powder having an average particle size of 100 μm or greater and 1,000 μm or smaller is particularly suitable as a powdery coating material used for rotational coating or rotational molding.

The melt-fabricable fluororesin powder can be produced by a method of drying the aqueous dispersion of the melt-fabricable fluororesin obtained by the above-mentioned first production method of the present disclosure to powder the melt-fabricable fluororesin. The method for producing the melt-fabricable fluororesin powder is also one aspect of the present disclosure.

(III) Fluoroelastomers

In the step C, the polymerization reaction for the fluoroelastomer is initiated by charging pure water and the polymer (I) into a pressure-resistant reaction vessel equipped with a stirrer, deoxidizing the system, charging the monomers, increasing the temperature to a predetermined level, and adding a polymerization initiator. The pressure decreases as the reaction progresses, and additional monomers are fed continuously or intermittently to maintain the initial pressure. When the amount of the monomers fed reaches a predetermined level, feeding is stopped, and the monomers in the reaction vessel are purged and the temperature is returned to room temperature, whereby the reaction is completed. In this case, polymer latex can be continuously taken out of the reaction vessel.

In particular, in the case of producing a thermoplastic elastomer as the fluoroelastomer, it is also possible to use a method in which fluoropolymer fine particles are synthesized at a high concentration defined as described above and then diluted for further polymerization as disclosed in International Publication No. WO00/01741, whereby the final polymerization rate can be increased as compared with ordinary polymerization.

The polymerization for the fluoroelastomer may be performed under conditions appropriately selected from the viewpoints of physical properties of the target polymer and control of the polymerization rate, and is performed at a polymerization temperature of usually -20 to 200°C, preferably 5 to 150°C, and a polymerization pressure of usually 0.5 to 10 MPaG, preferably 1 to 7 MPaG. The polymerization medium preferably has a pH usually maintained at 2.5 to 13 using a pH adjuster to be described later by a known method, for example.

Examples of the monomer used in the polymerization for the fluoroelastomer include vinylidene fluoride, as well as fluorine-containing ethylenically unsaturated monomers having fluorine atoms at least as much as the carbon atoms therein and copolymerizable with vinylidene fluoride. Examples of the fluorine-containing ethylenically unsaturated monomers include trifluoropropene, pentafluoropropene, hexafluorobutene, and octafluorobutene. Of these, hexafluoropropene is particularly preferred because of the properties of the elastomer obtained when hexafluoropropene blocks the crystal growth of the polymer. Examples of the fluorine-containing ethylenically unsaturated monomers also include trifluoroethylene, TFE, and CTFE. Fluorine-containing monomers containing one or two or more chlorine and/or bromine substituents may also be used. Perfluoro(alkyl vinyl ethers) such as perfluoro(methyl vinyl ether) may also be used. TFE and HFP are preferred for producing fluoroelastomer.

The fluoroelastomer preferably has a monomer composition ratio (% by mass) of vinylidene fluoride:HFP:TFE = (20 to 70): (30 to 48):(0 to 32). The fluoroelastomer having this composition ratio exhibits good elastomeric characteristics, chemical resistance, and thermal stability.

In the polymerization for the fluoroelastomer, as the amount of the above-mentioned polymer (I) added, the amount of the polymer (I) added in the above-mentioned step C can be adopted. Usually, the polymer (I) is added in an amount of 0.0001 to 20% by mass based on 100% by mass of the aqueous medium. It is preferably added in an amount of 10% by mass or less, and more preferably 2% by mass or less.

In the polymerization for the fluoroelastomer, the polymerization initiator used may be a known inorganic radical polymerization initiator. Examples of particularly useful inorganic radical polymerization initiators include conventionally known water-soluble inorganic peroxides, such as persulfates, perphosphates, perborates, percarbonates or permanganates of sodium, potassium, and ammonium. The radical polymerization initiator may be further activated with a reducing agent such as sulfite, bisulfite, metabisulfite, hyposulfite, thiosulfate, phosphite, or hypophosphite of sodium, potassium, or ammonium or an easily oxidizable metal compound such as an iron(I) salt, a copper(I) salt, or a silver salt. A preferred inorganic radical polymerization initiator is ammonium persulfate. More preferred is combination use of ammonium persulfate and sodium bisulfite in a redox system.

The concentration of the polymerization initiator added is appropriately determined in accordance with the molecular weight of the target fluoropolymer and the polymerization reaction rate, and is set to 0.0001 to 10% by mass, preferably 0.01 to 5% by mass, based on 100% by mass of the total amount of the monomers.

In the polymerization for the fluoroelastomer, a known chain transfer agent may be used, and examples thereof include hydrocarbons, esters, ethers, alcohols, ketones, chlorine compounds, and carbonates. A hydrocarbon, an ester, an ether, an alcohol, a chlorine compound, an iodine compound may be used as the thermoplastic elastomer, for example. Of these, preferred are acetone and isopropyl alcohol. From the viewpoint of reducing a reaction rate drop in polymerization for a thermoplastic elastomer, isopentane, diethyl malonate, and ethyl acetate are preferred. Diiodine compounds such as $I(CF_2)_4I$, $I(CF_2)_6I$, and $ICH_2I$ are preferred because they can iodize ends of the polymer and allow the resulting polymer to serve as a reactive polymer.

The amount of the chain transfer agent used is usually $0.5 \times 10^{-3}$ to $5 \times 10^{-3}$ mol%, preferably $1.0 \times 10^{-3}$ to $3.5 \times 10^{-3}$ mol%, based on the total amount of the monomers fed.

Paraffin wax may preferably be used as an emulsion stabilizer in the polymerization for the fluoroelastomer, for example. A phosphate, sodium hydroxide, potassium hydroxide may preferably be used as a pH adjuster in the polymerization for a thermoplastic elastomer, for example.

At completion of the polymerization, the pretreatment aqueous dispersion containing the fluoroelastomer obtained by the step C has a solid concentration of 1.0 to 40% by mass, an average particle size of 0.03 to 1 μm, preferably 0.05 to 0.5 μm, and a number average molecular weight of 1,000 to 2,000,000.

The aqueous dispersion of the fluoroelastomer obtained by the first production method of the present disclosure may optionally be mixed with a dispersion stabilizer such as a hydrocarbon surfactant or be concentrated, for example, to form a dispersion suitable for rubber molding. The dispersion is subjected to treatments such as pH adjustment, solidification, and heating. The treatments are performed as follows.

The pH adjustment is performed such that a mineral acid such as nitric acid, sulfuric acid, hydrochloric acid, or phosphoric acid and/or a carboxylic acid or the like having 5 or less carbon atoms and having pK = 4.2 or lower is added to adjust the pH to 2 or lower.

The solidification is performed by adding an alkaline earth metal salt. Examples of the alkaline earth metal salt include nitrates, chlorates, and acetates of calcium or magnesium.

Although the pH adjustment and the solidification may be performed in any order, the pH adjustment is preferably performed prior to performing the solidification.

These operations are followed by washing with the same volume of water as the fluoroelastomer to remove a small amount of impurities such as buffer solution and salts present in the fluoroelastomer and drying of the fluoroelastomer. The drying is usually performed at about 70 to 200°C while the air is circulated in a drying furnace at high temperature.

The fluoroelastomer may be either a partially fluorinated elastomer or a perfluoroelastomer.

Examples of the partially fluorinated elastomer include vinylidene fluoride (VdF)-based fluoroelastomers, tetrafluoroethylene (TFE)/propylene (Pr)-based fluoroelastomers, tetrafluoroethylene (TFE)/propylene/vinylidene fluoride (VdF)-based fluoroelastomers, ethylene/hexafluoropropylene (HFP)-based fluoroelastomers, ethylene/hexafluoropropylene (HFP)/vinylidene fluoride (VdF)-based fluoroelastomers, and ethylene/hexafluoropropylene (HFP)/tetrafluoroethylene (TFE)-based fluoroelastomers. Of these, the partially fluorinated elastomer is preferably at least one selected from the group consisting of vinylidene fluoride-based fluoroelastomers and tetrafluoroethylene/propylene-based fluoroelastomers.

The vinylidene fluoride-based fluoroelastomer is preferably a copolymer containing 45 to 85 mol% of vinylidene fluoride and 55 to 15 mol% of at least one monomer copolymerizable with and different from vinylidene fluoride. The vinylidene fluoride-based fluoroelastomer is more preferably a copolymer containing 50 to 80 mol% of vinylidene fluoride and 50 to 20 mol% of at least one monomer copolymerizable with and different from vinylidene fluoride.

Examples of the at least one monomer copolymerizable with and different from vinylidene fluoride include

monomers such as tetrafluoroethylene (TFE), hexafluoropropylene (HFP), fluoroalkyl vinyl ethers, chlorotrifluoroethylene (CTFE), trifluoroethylene, trifluoropropylene, pentafluoropropylene, trifluorobutene, tetrafluoroisobutene, hexafluoroisobutene, vinyl fluoride, a fluoromonomer represented by the general formula (100): $CHX^{101}=CX^{102}Rf^{101}$ (wherein one of $X^{101}$ and $X^{102}$ is H and the other is F, and $Rf^{101}$ is a linear or branched fluoroalkyl group having 1 to 12 carbon atoms), a fluoromonomer represented by the general formula (170): $CH_2=CH-(CF_2)_n-X^{171}$ (wherein $X^{171}$ is H or F, and n is an integer of 3 to 10), and a monomer that provides a crosslinking site; and non-fluorinated monomers such as ethylene, propylene, and alkyl vinyl ethers. These may be used alone or in any combination thereof. Of these, preferred is at least one selected from the group consisting of TFE, HFP, fluoroalkyl vinyl ether, and CTFE. The fluoroalkyl vinyl ether is preferably a fluoromonomer represented by the general formula (160).

Specific examples of the vinylidene fluoride-based fluoroelastomers include VdF/HFP-based rubber, VdF/HFP/TFE-based rubber, VdF/CTFE-based rubber, VdF/CTFE/TFE-based rubber, rubber based on VDF and a fluoromonomer represented by the general formula (100), rubber based on VDF, a fluoromonomer represented by the general formula (100), and TFE, rubber based on VDF and perfluoro(methyl vinyl ether) (PMVE), VDF/PMVE/TFE-based rubber, and VDF/PMVE/TFE/HFP-based rubber. The rubber based on VDF and a fluoromonomer represented by the general formula (100) is preferably VDF/$CH_2=CFCF_3$-based rubber. The rubber based on VDF, a fluoromonomer represented by the formula (100), and TFE is preferably VDF/TFE/$CH_2=CFCF_3$-based rubber.

The VDF/$CH_2=CFCF_3$-based rubber is preferably a copolymer containing 40 to 99.5 mol% of VDF and 0.5 to 60 mol% of $CH_2=CFCF_3$, more preferably a copolymer containing 50 to 85 mol% of VDF and 20 to 50 mol% of $CH_2=CFCF_3$.

The tetrafluoroethylene/propylene-based fluoroelastomer is preferably a copolymer containing 45 to 70 mol% of tetrafluoroethylene, 55 to 30 mol% of propylene, and 0 to 5 mol% of a fluoromonomer that provides a crosslinking site.

The fluoroelastomer may be a perfluoroelastomer. The perfluoroelastomer is preferably at least one selected from the group consisting of perfluoroelastomers containing TFE, such as a copolymer containing TFE and a fluoromonomer represented by the general formula (160), (130), or (140) and a copolymer containing TFE, a fluoromonomer represented by the general formula (160), (130), or (140), and a monomer that provides a crosslinking site.

In the case of the TFE/PMVE copolymer, the composition ratio thereof is preferably 45 to 90/10 to 55 (mol%), more preferably 55 to 80/20 to 45, and still more preferably 55 to 70/30 to 45.

In the case of the copolymer of TFE, PMVE, and a monomer that provides a crosslinking site, the composition ratio thereof is preferably 45 to 89.9/10 to 54.9/0.01 to 4 (mol%), more preferably 55 to 77.9/20 to 49.9/0.1 to 3.5, and still more preferably 55 to 69.8/30 to 44.8/0.2 to 3.

In the case of the copolymer of TFE and a fluoromonomer represented by the general formula (160), (130), or (140) having 4 to 12 carbon atoms, the composition ratio thereof is preferably 50 to 90/10 to 50 (mol%), more preferably 60 to 88/12 to 40, and still more preferably 65 to 85/15 to 35.

In the case of the copolymer of TFE, a fluoromonomer represented by the general formula (160), (130), or (140) having 4 to 12 carbon atoms, and a monomer that provides a crosslinking site, the composition ratio thereof is preferably 50 to 89.9/10 to 49.9/0.01 to 4 (mol%), more preferably 60 to 87.9/12 to 39.9/0.1 to 3.5, and still more preferably 65 to 84.8/15 to 34.8/0.2 to 3.

When these copolymers have compositional features outside these ranges, the properties as a rubber elastic body are lost, and the properties tend to be close to those of a resin.

The perfluoroelastomer is preferably at least one selected from the group consisting of copolymers of TFE, a fluoromonomer represented by the general formula (140), and a fluoromonomer that provides a crosslinking site, copolymers of TFE and a perfluorovinyl ether represented by the general formula (140), copolymers of TFE and a fluoromonomer represented by the general formula (160), and copolymers of TFE, a fluoromonomer represented by the general formula (160), and a monomer that provides a crosslinking site.

Examples of the perfluoroelastomer further include the perfluoroelastomers disclosed in documents such as International Publication No. WO97/24381, Japanese Patent Publication No. 61-57324, Japanese Patent Publication No. 04-81608, and Japanese Patent Publication No. 05-13961.

From the viewpoint of achieving an excellent compression set at high temperature, the fluoroelastomer preferably has a glass transition temperature of -70°C or higher, more preferably -60°C or higher, and still more preferably -50°C or higher. From the viewpoint of achieving good cold resistance, the glass transition temperature is preferably 5°C or lower, more preferably 0°C or lower, and still more preferably -3°C or lower.

The glass transition temperature can be determined as follows. Specifically, using a differential scanning calorimeter (DSC822e, manufactured by Mettler-Toledo International Inc.), 10 mg of a sample is heated at a rate of 10°C/min to give a DSC curve, and the temperature is read at the midpoint of two intersections between each of the extension lines of the base lines before and after the secondary transition of the DSC curve and the tangent line at the inflection point of the DSC curve.

From the viewpoint of achieving good heat resistance, the fluoroelastomer preferably has a Mooney viscosity ML(1+20) at 170°C of 30 or higher, more preferably 40 or higher, and still more preferably 50 or higher. From the viewpoint of achieving good processability, the Mooney viscosity is preferably 150 or lower, more preferably 120 or lower, and still

more preferably 110 or lower.

From the viewpoint of achieving good heat resistance, the fluoroelastomer preferably has a Mooney viscosity ML(1+20) at 140°C of 30 or higher, more preferably 40 or higher, and still more preferably 50 or higher. From the viewpoint of achieving good processability, the Mooney viscosity is preferably 180 or lower, more preferably 150 or lower, and still more preferably 110 or lower.

From the viewpoint of achieving good heat resistance, the fluoroelastomer preferably has a Mooney viscosity ML(1+10) at 100°C of 10 or higher, more preferably 20 or higher, and still more preferably 30 or higher. From the viewpoint of achieving good processability, the Mooney viscosity is preferably 120 or lower, more preferably 100 or lower, and still more preferably 80 or lower.

The Mooney viscosity can be determined using a Mooney viscometer MV2000E manufactured by Alpha Technologies Inc. at 170°C, 140°C, or 100°C in conformity with JIS K 6300.

The pretreatment aqueous dispersion containing the fluoroelastomer used in the first production method of the present disclosure may be in any form as long as it is obtainable by the polymerization, and it may be an aqueous dispersion as polymerized, may be one obtained by diluting or concentrating the aqueous dispersion as polymerized, or may be one that has undergone dispersion stabilization treatment. The fluoropolymer aqueous dispersion containing the fluoroelastomer obtained by the first production method of the present disclosure may also be used in the form of a gum or a crumb obtained by conventionally known coagulation, drying, and any other treatment on the aqueous dispersion. The polymer (I) used in the step C can improve the stability of the aqueous dispersion, and is more preferably used in a polymerization method in which substances insoluble in water such as an initiator, including an organic peroxide, and a chain transfer agent, including an iodine or bromine compound, are added during the polymerization defined as described above.

The gum is a small particulate mass of the fluoroelastomer. The crumb is an amorphous mass of the fluoroelastomer resulting from fusion of particles that cannot maintain the form of small particles as gum at room temperature.

The fluoroelastomer may be mixed with an additive such as a curing agent and a filler to be processed into a fluoroelastomer composition.

Examples of the curing agent include polyols, polyamines, organic peroxides, organotins, bis(aminophenol) tetraamine, and bis(thioaminophenol).

The fluoroelastomer composition is made of the above fluoroelastomer, and thus is substantially free from an emulsifier and is excellent in that it is easily crosslinked during molding.

The fluoroelastomer may be molded to form a fluoroelastomer molded body. The molding may be performed by any method such as a known method using the above-mentioned curing agent.

The fluoroelastomer molded body is suitable for seals, gaskets, electric wire coatings, hoses, tubes, laminated products, and accessories, particularly parts for semiconductor manufacturing devices and automobile parts.

The first production method of the present disclosure can provide a fluoropolymer aqueous dispersion.

The fluoropolymer aqueous dispersion may contain a hydrocarbon surfactant. Examples of the hydrocarbon surfactant include the above-mentioned hydrocarbon surfactant.

The hydrocarbon surfactant may be suitably used as a dispersant for dispersing the fluoropolymer obtained by the polymerization in an aqueous medium.

The present disclosure further provides a fluoropolymer aqueous dispersion, comprising: a polymer (I) comprising a polymerized unit (I) derived from a monomer represented by the following general formula (I); an aqueous medium; and a fluoropolymer, with the proviso that the fluoropolymer is other than the polymer (I), wherein the difference $\Delta L^*$ between the lightness $L^*$ of the fluoropolymer aqueous dispersion and the lightness $L^*$ of a post-microfiltration fluoropolymer aqueous dispersion (fluoropolymer aqueous dispersion after purification under the condition of using a microfiltration membrane) obtained by microfiltering the fluoropolymer aqueous dispersion is less than 16:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The specific method of the purification (microfiltration) is as follows: 1.82 g of a nonionic surfactant is added to 156.4 g of the fluoropolymer aqueous dispersion; 0.72 g of a nonionic surfactant is added to every 156.4 g of pure water to make additional water; and the aqueous dispersion is brought into contact with a microfiltration membrane (made of polyethylene, inner diameter: 0.7 mm, length: 130 mm, average pore size: 0.1 μm, effective membrane area: 150 $cm^2$) under the conditions with a water pressure of 0.1 MPa and a temperature of 25°C.

The $\Delta L^*$ is the value expressed by the following equation, which is the absolute value of the value obtained by subtracting the lightness $L^*$ before the purification from the lightness $L^*$ after the purification.

$\Delta L^*$ = |lightness L* after the purification - lightness L* before the purification|

The $\Delta L^*$ is more preferably 12 or less, still more preferably 8 or less, further preferably 5 or less, still further preferably 3 or less, and particularly preferably 1 or less.

The fluoropolymer aqueous dispersion of the present disclosure can be obtained by the above-mentioned first production method of the present disclosure.

The fluoropolymer in the fluoropolymer aqueous dispersion obtained by the first production method of the present disclosure, and in the fluoropolymer aqueous dispersion of the present disclosure is more preferably a fluororesin, and above all, it is still more preferably a fluororesin having a fluorine substitution percentage, which is mentioned above, of 50% or higher, further preferably a fluororesin having a fluorine substitution percentage of higher than 50%, further preferably a fluororesin having a fluorine substitution percentage of 55% or higher, further preferably a fluororesin having a fluorine substitution percentage of 60% or higher, further preferably a fluororesin having a fluorine substitution percentage of 75% or higher, particularly preferably a fluororesin having a fluorine substitution percentage of 80% or higher, and most preferably a fluororesin having a fluorine substitution percentage of 90 to 100%, i.e., a perfluororesin. The perfluororesin is more preferably a fluororesin having a fluorine substitution percentage of 95 to 100%, still more preferably PTFE, FEP, or PFA, and particularly preferably PTFE. As PTFE, any of the embodiments described in the first production method of the present disclosure can be adopted.

As the fluoropolymer in the fluoropolymer aqueous dispersion obtained by the first production method of the present disclosure, and in the fluoropolymer aqueous dispersion of the present disclosure, PTFE, FEP, and a TFE/perfluoro(alkyl vinyl ether) copolymer are preferable, and PTFE is still more preferable.

It is preferable that the fluoropolymer aqueous dispersion obtained by the first production method of the present disclosure and the fluoropolymer aqueous dispersion of the present disclosure have a content of the polymer (I) of 0.0001 to 10% by mass. When the content of the polymer (I) is less than 0.0001% by mass, the dispersion stability may deteriorate, and when the content thereof is more than 10% by mass, dispersion effects commensurate with the amount thereof may not be obtained, which is impractical. The lower limit of the content of the polymer (I) is more preferably 0.001% by mass, while the upper limit thereof is more preferably 5% by mass and still more preferably 3% by mass.

The content of the polymer (I) can be measured by solid-state NMR, as mentioned above.

The fluoropolymer aqueous dispersion obtained by the first production method of the present disclosure and the fluoropolymer aqueous dispersion of the present disclosure may contain one single type of polymer (I) or two or more different types of polymers (I).

As the polymer (I), all of the embodiments described in the first production method of the present disclosure can be applied.

It is also preferable that the fluoropolymer aqueous dispersion of the present disclosure contains a nonionic surfactant.

As the nonionic surfactant, those listed as the above-mentioned hydrocarbon surfactants can be adopted. In particular, at least one selected from the group consisting of the compounds represented by the general formula (i) and the compounds represented by the general formula (ii) is preferable.

In the fluoropolymer aqueous dispersion obtained by the production method of the present disclosure and the fluoropolymer aqueous dispersion of the present disclosure, the content of the fluoropolymer may be, but is not limited to, 0.01 to 80% by mass, for example. The content thereof is preferably 0.02% by mass or more, more preferably 0.05% by mass or more, still more preferably 20% by mass or more, and particularly preferably 30% by mass or more, and it is preferably 75% by mass or less, more preferably 70% by mass or less, still more preferably 55% by mass or less, particularly preferably 50% by mass or less, and most preferably 45% by mass or less.

In the fluoropolymer aqueous dispersion obtained by the production method of the present disclosure and the fluoropolymer aqueous dispersion of the present disclosure, the content of the fluoropolymer can be determined by, for example, a method in which the solid components are separated by a MF membrane.

In the fluoropolymer aqueous dispersion obtained by the production method of the present disclosure the total amount of the polymer (I), water, and the fluoropolymer is preferably 95.0% by mass or more, more preferably 99.0% by mass or more, still more preferably 99.9% by mass or more, and it is particularly preferable that the aqueous dispersion consists only of the polymer (I), water, and the fluoropolymer.

It is preferable that the fluoropolymer aqueous dispersion obtained by the production method of the present disclosure and the fluoropolymer aqueous dispersion have a lightness L* of 70 or more. It is more preferably 80 or more, and still more preferably 90 or more. The lightness L* may be greater than 86, greater than 91, or greater than 95.

The lightness L* is measured using an X-rite colorimeter.

It is preferable that the fluoropolymer aqueous dispersion obtained by the first production method of the present disclosure and the fluoropolymer aqueous dispersion of the present disclosure are substantially free from a fluorine-containing surfactant. In the fluoropolymer aqueous dispersion of the present disclosure, the term "substantially free from

a fluorine-containing surfactant" means that the fluorine-containing surfactant is 10 ppm by mass or less based on the fluoropolymer. The content of the fluorine-containing surfactant is preferably 1 ppm by mass or less, more preferably 100 ppb by mass or less, further preferably 10 ppb by mass or less, further preferably 1 ppb by mass or less, and particularly preferably the fluorine-containing surfactant is below the detection limit as measured by liquid chromatography-mass spectrometry (LC/MS/MS).

The amount of the fluorine-containing surfactant can be determined by a known method. For example, it can be determined by LC/MS/MS analysis. First, the obtained aqueous dispersion is extracted into an organic solvent of methanol, and the extracted liquid is subjected to LC/MS/MS analysis. Then, the molecular weight information is extracted from the LC/MS/MS spectrum to confirm agreement with the structural formula of the candidate surfactant.

Thereafter, aqueous solutions having five or more different concentration levels of the confirmed surfactant are prepared, and LC/MS/MS analysis is performed for each concentration level to prepare a calibration curve with the area.

The obtained aqueous dispersion may be subjected to Soxhlet extraction with methanol, and the extracted liquid may be subjected to LC/MS/MS analysis for quantitative measurement.

In other words, the content of the fluorine-containing surfactant can be quantified by, for example, LC/MS/MS analysis. First, methanol is added to the aqueous dispersion for extraction, and the resulting extracted liquid is subjected to LC/MS/MS analysis. In order to further increase the extraction efficiency, a treatment by Soxhlet extraction, ultrasonic treatment, or the like may be performed. The molecular weight information is extracted from the obtained LC/MS/MS spectrum to confirm agreement with the structural formula of the candidate fluorine-containing surfactant. Thereafter, aqueous solutions having five or more different content levels of the confirmed fluorine-containing surfactant are prepared, and LC/MS/MS analysis is performed on the aqueous solutions with the respective content levels, and the relationship between the content level and the area corresponding to that content level is plotted to draw a calibration curve. Then, using the calibration curve, the area of the LC/MS/MS chromatogram of the fluorine-containing surfactant in the extracted liquid can be converted to the content of the fluorine-containing surfactant.

The fluorine-containing surfactant is the same as those exemplified in the first production method of the present disclosure mentioned above. For example, the surfactant may be a fluorine atom-containing surfactant having, in the portion excluding the anionic group, 20 or less carbon atoms in total, may be a fluorine-containing surfactant having an anionic moiety having a molecular weight of 800 or less, and may be a fluorine-containing surfactant having a Log POW of 3.5 or less.

Examples of the anionic fluorine-containing surfactant include compounds represented by the general formula ($N^0$), and specific examples thereof include compounds represented by the general formula ($N^1$), compounds represented by the general formula ($N^2$), compounds represented by the general formula ($N^3$), compounds represented by the general formula ($N^4$), and compounds represented by the general formula ($N^5$). More specific examples thereof include a perfluorocarboxylic acid (I) represented by the general formula (I), an ω-H perfluorocarboxylic acid (II) represented by the general formula (II), a perfluoropolyethercarboxylic acid (III) represented by the general formula (III), a perfluoroalkylalkylenecarboxylic acid (IV) represented by the general formula (IV), a perfluoroalkoxyfluorocarboxylic acid (V) represented by the general formula (V), a perfluoroalkylsulfonic acid (VI) represented by the general formula (VI), an ω-H perfluorosulfonic acid (VII) represented by the general formula (VII), a perfluoroalkylalkylene sulfonic acid (VIII) represented by the general formula (VIII), an alkylalkylene carboxylic acid (IX) represented by the general formula (IX), a fluorocarboxylic acid (X) represented by the general formula (X), an alkoxyfluorosulfonic acid (XI) represented by the general formula (XI), a compound (XII) represented by the general formula (XII), and a compound (XIII) represented by the general formula (XIII).

The fluoropolymer aqueous dispersion obtained by the first production method of the present disclosure and the fluoropolymer aqueous dispersion of the present disclosure may be concentrated or subjected to a dispersion stabilization treatment to form a dispersion, or may be subjected to coagulation or agglomeration, and collected and dried into powder or other solid.

To the fluoropolymer aqueous dispersion obtained by the first production method of the present disclosure and the fluoropolymer aqueous dispersion of the present disclosure, conventionally known additives such as pigments and fillers can be added. The additives may be used to an extent that does not inhibit the effects of the present disclosure.

The polymer (I) may be removed by the concentration operation.

The fluoropolymer aqueous dispersion obtained by carrying out the first production method of the present disclosure may also be subjected to a dispersion stabilization treatment without concentration depending on the application, to prepare an aqueous dispersion having a long pot life. Examples of the dispersion stabilizer used include the same as those described above.

Examples of the applications of the fluoropolymer aqueous dispersion include, but are not limited to, those in which the aqueous dispersion is directly used, such as coating achieved by applying the aqueous dispersion to a substrate, drying the dispersion, and optionally sintering the workpiece; impregnation achieved by impregnating a porous support such as nonwoven fabric or a resin molded article with the aqueous dispersion, drying the dispersion, and preferably sintering the workpiece; and casting achieved by applying the aqueous dispersion to a substrate such as glass, drying the

dispersion, optionally immersing the workpiece into water to remove the substrate and to thereby provide a thin film. Examples of such applications include aqueous dispersion-type coating materials, binders for electrodes, and water repellents for electrodes.

The fluoropolymer aqueous dispersion may be used in the form of an aqueous coating material for coating by mixing with a known compounding agent such as a pigment, a thickener, a dispersant, a defoaming agent, an antifreezing agent, a film-forming aid, or by compounding another polymer compound.

In addition, the aqueous dispersion may be used for additive applications, for example, for a binder application for preventing the active material of an electrode from falling off, for a compound application such as a drip inhibitor, or for a dust suppression treatment application for preventing floating of sand and dust.

For the purpose of adjusting the viscosity of the fluoropolymer aqueous dispersion or improving the miscibility with a pigment or filler, the fluoropolymer aqueous dispersion may preferably contain an anionic surfactant. The anionic surfactant may be appropriately added to an extent that causes no problems from the economic and environmental viewpoints.

Examples of the anionic surfactant include non-fluorinated anionic surfactants and fluorine-containing anionic surfactants. Preferred are fluorine-free, non-fluorinated anionic surfactants, i.e., hydrocarbon anion surfactants.

For the purpose of adjusting the viscosity, any known anionic surfactants may be used, for example, anionic surfactants disclosed in International Publication No. WO2013/146950 and International Publication No. WO2013/146947. Examples thereof include those having a saturated or unsaturated aliphatic chain having 6 to 40 carbon atoms, preferably 8 to 20 carbon atoms, and more preferably 9 to 13 carbon atoms. The saturated or unsaturated aliphatic chain may be either linear or branched, or may have a cyclic structure. The hydrocarbon may have aromaticity, or may have an aromatic group. The hydrocarbon may contain a hetero atom such as oxygen, nitrogen, or sulfur.

Examples of the anionic surfactants include alkyl sulfonates, alkyl sulfates, and alkyl aryl sulfates, and salts thereof; aliphatic (carboxylic) acids and salts thereof; and phosphoric acid alkyl esters and phosphoric acid alkyl aryl esters, and salts thereof. Of these, preferred are alkyl sulfonates, alkyl sulfates, and aliphatic carboxylic acids, or salts thereof.

Preferred examples of the alkyl sulfates or salts thereof include ammonium lauryl sulfate and sodium lauryl sulfate.

Preferred examples of the aliphatic carboxylic acids or salts thereof include succinic acid, decanoic acid, undecanoic acid, undecenoic acid, lauric acid, hydrododecanoic acid, or salts thereof.

The amount of the anionic surfactant added depends on the types of the anion surfactant and other compounding agents, and is preferably 10 ppm to 5,000 ppm based on the mass of the solid of the fluoropolymer.

The lower limit of the amount of the anionic surfactant added is more preferably 50 ppm or more, still more preferably 100 ppm or more. Too small an amount of the anionic surfactant may result in a poor viscosity adjusting effect.

The upper limit of the amount of the anionic surfactant added is more preferably 3,000 ppm or less, still more preferably 2,000 ppm or less. Too large an amount of the anionic surfactant may impair mechanical stability and storage stability of the aqueous dispersion.

For the purpose of adjusting the viscosity of the fluoropolymer aqueous dispersion, components other than the anionic surfactants, such as methyl cellulose, alumina sol, polyvinyl alcohol, and carboxylated vinyl polymers may also be added.

The fluoropolymer aqueous dispersion may optionally contain other polymer compounds to an extent that does not impair the characteristics of the fluoropolymer aqueous dispersion.

Examples of the other polymer compound include, but are not limited to, polyethylene oxide (dispersion stabilizer), polyethylene glycol (dispersion stabilizer), phenol resin, urea resin, epoxy resin, melamine resin, polyester resin, polyether resin, silicone acrylic resin, silicone resin, silicone polyester resin, and polyurethane resin.

The fluoropolymer can be produced by washing and drying the coagulated product containing the fluoropolymer obtained by coagulating the fluoropolymer aqueous dispersion. The polymer (I), decomposition products and by-products of the polymer (I) by-produced from the polymer (I), residual monomers may be collected from discharge water generated in the coagulation or the washing and/or from off gas generated in the drying, and then purified to reuse the polymer (I), the decomposition products and by-products of the polymer (I) by-produced from the polymer (I), the residual monomers. The collection and the purification may be performed by known methods, although not limited thereto. For example, they may be performed by the methods disclosed in National Publication of International Patent Application No. 2011-520020. Examples thereof further include the methods disclosed in U.S. Patent Application Publication No. 2007/15937, U.S. Patent Application Publication No. 2007/25902, and U.S. Patent Application Publication No. 2007/27251. Specific examples of the methods are as follows.

An example of the method of collecting the polymer (I), the decomposition products and by-products of the polymer (I) by-produced from the polymer (I), the residual monomers, and the like from discharge water is a method in which the discharge water is brought into contact with adsorbent particles formed of ion exchange resin, activated carbon, silica gel, clay, zeolite, so that the particles are allowed to adsorb the polymer (I) and the others, the discharge water and the

adsorbent particles are then separated, and the adsorbent particles, which have adsorbed the polymer (I) and the others, are collected. Incinerating the adsorbent particles having adsorbed the polymer (I) and the others can prevent emission of the polymer (I) and the others into the environment.

Alternatively, the polymer (I) and the others may be removed and eluted by a known method from the ion exchange resin particles having adsorbed the polymer (I) and the others, and collected. For example, in the case of using anion exchange resin particles as the ion exchange resin particles, the polymer (I) and the others can be eluted by bringing a mineral acid into contact with an anion exchange resin. When a water-soluble organic solvent is added to the resulting eluate, the mixture is usually separated into two phases. Since the lower phase contains the polymer (I) and the others, it is possible to collect the polymer (I) and the others by collecting and neutralizing the lower phase. Examples of the water-soluble organic solvent include polar solvents such as alcohols, ketones, and ethers.

Other methods of collecting the polymer (I) and the others from ion exchange resin particles include a method of using an ammonium salt and a water-soluble organic solvent and a method of using an alcohol and, if necessary, an acid. In the latter method, ester derivatives of the polymer (I) and the others are generated, and thus, they can easily be separated from the alcohol by distillation and the polymer (I) and the others can easily be collected.

When the discharge water contains fluoropolymer particles and other solids, they are preferably removed from the discharge water before the discharge water and the adsorbent particles are brought into contact with each other. Examples of methods of removing the fluoropolymer particles and other solids include a method of adding an aluminum salt, for example, to deposit these components, and then separating the discharge water and the deposits to remove the deposits, and an electrocoagulation method. The components may also be removed by a mechanical method, and examples thereof include a crossflow filtration method, a depth filtration method, and a precoat filtration method.

From the viewpoint of productivity, the discharge water preferably contains the fluoropolymer in a non-agglomerated form in a low concentration, more preferably less than 0.4% by mass, and particularly preferably less than 0.3% by mass.

An example of the method of collecting the polymer (I) and the others from the off gas is a method in which a scrubber is brought into contact with deionized water, an alkaline aqueous solution, an organic solvent such as a glycol ether solvent, to provide a scrubber solution containing the polymer (I) and the others. When the alkaline aqueous solution used is a highly concentrated alkaline aqueous solution, the scrubber solution can be collected in a state where the polymer (I) and the others are phase-separated, and thus the polymer (I) and the others can be easily collected and reused. Examples of the alkali compound include alkali metal hydroxides and quaternary ammonium salts.

The scrubber solution containing the polymer (I) and the others may be concentrated using a reverse osmosis membrane, for example. The concentrated scrubber solution usually contains fluoride ions. Still, the fluoride ions may be removed by adding alumina after the concentration so that the polymer (I) and the others can easily be reused. Alternatively, the scrubber solution may be brought into contact with adsorbent particles so that the adsorbent particles can adsorb the polymer (I) and the others, and thereby the polymer (I) and the others may be collected by the aforementioned method.

The polymer (I) and the others collected by any of the methods may be reused in the production of fluoropolymer.

The present disclosure also provides but does not claim a method for producing a fluoropolymer aqueous dispersion (hereinafter, also referred to as a "second production method of the present disclosure"), the method comprising: a step A' of performing ultrafiltration, microfiltration, or dialysis membrane treatment, or a combination thereof on a pretreatment aqueous dispersion containing a fluoropolymer obtained by polymerization in the presence of a water-soluble polymer in which hydrogen atoms bonded to carbon atoms have been replaced by fluorine atoms at a proportion of 50% or more, with the proviso that the fluoropolymer is other than the water-soluble polymer.

For the second production method of the present disclosure, the same methods and embodiments as the above-mentioned first production method of the present disclosure can all be adopted, except that a water-soluble polymer in which hydrogen atoms bonded to carbon atoms have been replaced by fluorine atoms at a proportion of 50% or more is used instead of the polymer (I). The fluoropolymer aqueous dispersion obtained by the second production method of the present disclosure may contain one single type of water-soluble polymer or two or more different types of water-soluble polymers.

The water-soluble polymer is not limited, and a water-soluble polymer among the above-mentioned polymer (I) in which hydrogen atoms bonded to carbon atoms have been replaced by fluorine atoms at a proportion of 50% or more can be used, or a water-soluble polymer other than the above-mentioned polymer (I) in which hydrogen atoms bonded to carbon atoms have been replaced by fluorine atoms at a proportion of 50% or more can be used.

An example of the water-soluble polymer is a water-soluble polymer comprising a polymerized unit (I) derived from a monomer represented by the following general formula (I):

$$CX^1X^3=CX^2R\text{-}CZ^1Z^2\text{-}A^0 \qquad (I)$$

wherein $X^1$, $X^2$, and $X^3$ are each independently F, Cl, H, or $CF_3$; $A^0$ is an anionic group; R is a linking group; and $Z^1$ and $Z^2$

are each independently F or $CF_3$.

In the water-soluble polymer, the content of the polymerized unit (I) is preferably 50% by mass or more, more preferably 60% by mass or more, still more preferably 70% by mass or more, further preferably 80% by mass or more, still further preferably 90% by mass or more, particularly preferably 95% by mass or more, and most preferably 99% by mass or more.

The water-soluble polymer may comprise a polymerized unit derived from a fluorine-containing monomer based on trifluoroethylene, tetrafluoroethylene (TFE), vinylidene fluoride (VdF), vinyl fluoride (VF), chlorotrifluoroethylene (CTFE), hexafluoropropylene (HFP), hexafluoroisobutylene, perfluoroalkylethylene, fluorovinyl ether (FVE).

The water-soluble polymer may also comprise a polymerized unit derived from a fluorine-free monomer. The fluorine-free monomer may be any monomer having a radically polymerizable ethylenically unsaturated bond, and examples thereof include acrylic esters, methacrylic esters, unsaturated carboxylic acids, hydrolyzable silyl group-containing monomers, hydroxyl group-containing alkyl vinyl ethers, carboxylic acid vinyl esters, and $\alpha$-olefins. Of these, the fluorine-free monomer is preferably at least one selected from the group consisting of acrylic esters, methacrylic esters, unsaturated carboxylic acids, and hydrolyzable silyl group-containing monomers.

In addition, the fluorine-free monomer is more preferably at least one selected from the group consisting of at least one monomer selected from the group consisting of acrylic esters and methacrylic esters, unsaturated carboxylic acids, and hydrolyzable silyl group-containing monomers.

Besides, a monomer having a radically polymerizable ethylenically unsaturated bond may be used in combination.

As for the acrylic ester or methacrylic ester, an acrylic acid alkyl ester in which the alkyl group has 1 to 10 carbon atoms, or a methacrylic acid alkyl ester in which the alkyl group has 1 to 10 carbon atoms, is preferable. Examples of the acrylic acid alkyl ester and methacrylic acid alkyl ester include (meth)acrylic acid alkyl esters such as methyl acrylate, ethyl acrylate, n-propyl acrylate, isopropyl acrylate, n-butyl acrylate, methyl methacrylate, n-propyl methacrylate, ethyl methacrylate, n-butyl methacrylate, isopropyl methacrylate, 2-ethylhexyl acrylate, 2-ethylhexyl methacrylate, cyclohexyl acrylate, and cyclohexyl methacrylate.

The acrylic acid alkyl ester or methacrylic acid alkyl ester may also be a hydroxyl group-containing acrylic monomer having a hydroxyl group and a (meth)acryloyl group in the molecule, such as 2-hydroxyethyl acrylate, 2-hydroxypropyl acrylate, 4-hydroxybutyl acrylate, 2-hydroxyethyl methacrylate, 2-hydroxypropyl methacrylate, and 4-hydroxybutyl methacrylate.

These acrylic esters or methacrylic esters may be used alone or in combination with two or more types, and are preferably n-butyl acrylate and methyl methacrylate.

As for the fluorine-free monomer, above all, at least one (meth)acrylic acid alkyl ester selected from the group consisting of methyl methacrylate, n-butyl acrylate, 2-ethylhexyl methacrylate, and cyclohexyl methacrylate is preferable. The acrylic acid esters or methacrylic acid esters are those containing no hydrolyzable silyl group.

As for the acrylic acid esters or methacrylic acid esters, a combination of n-butyl acrylate and methyl methacrylate or a combination of n-butyl acrylate, methyl methacrylate, and 2-ethylhexyl methacrylate is still more preferable, and a combination of n-butyl acrylate, methyl methacrylate, and 2-ethylhexyl methacrylate is particularly preferable. In addition, it is also preferable to combine a hydroxyl group-containing acrylic monomer having a hydroxyl group and a (meth)acryloyl group.

Specific examples of the unsaturated carboxylic acids include acrylic acid, methacrylic acid, vinylacetic acid, crotonic acid, cinnamic acid, 3-allyloxypropionic acid, 3-(2-allyloxyethoxycarbonyl)propionic acid, itaconic acid, itaconic acid monoester, maleic acid, maleic acid monoester, maleic anhydride, fumaric acid, fumaric acid monoester, vinyl phthalate, vinyl pyromellitate, and undecylenic acid. Of these, from the viewpoint of low homopolymerizability and difficulty in forming a homopolymer, and from the viewpoint of ease of controlling the introduction of a carboxyl group, at least one selected from the group consisting of acrylic acid, methacrylic acid, vinylacetic acid, crotonic acid, itaconic acid, maleic acid, maleic acid monoester, fumaric acid, fumaric acid monoester, 3-allyloxypropionic acid, and undecylenic acid is preferable.

Examples of the hydrolyzable silyl group-containing monomers include:

$CH_2{=}CHCOO(CH_2)_3Si(OCH_3)_3$;

$CH_2{=}CHCOO(CH_2)_3Si(CH_3)(OCH_3)_2$;

$CH_2{=}CHCOO(CH_2)_3Si(OC_2H_5)_3$;

$CH_2{=}CHCOO(CH_2)_3Si(CH_3)(OC_2H_5)_2$;

$CH_2{=}C(CH_3)COO(CH_2)_3Si(OCH_3)_3$;

$CH_2=C(CH_3)COO(CH_2)_3Si(CH_3)(OCH_3)_2$;

$CH_2=C(CH_3)COO(CH_2)_3Si(OC_2H_5)_3$;

$CH_2=C(CH_3)COO(CH_2)_3Si(CH_3)(OC_2H_5)_2$;

$CH_2=C(CH_3)COO(CH_2)_2O(CH_2)_3Si(OCH_3)_3$;

$CH_2=C(CH_3)COO(CH_2)_2(CH_2)_3Si(CH_3)(OCH_3)_2$;

$CH_2=C(CH_3)COO(CH_2)_{11}Si(OCH_3)_3$; and

$CH_2=C(CH_3)COO(CH_2)_{11}Si(CH_3)(OCH_3)_2$.

These hydrolyzable silyl group-containing monomers may be used alone, or may be used in combination with two or more types.

As for the hydrolyzable silyl group-containing monomer, above all, at least one selected from the group consisting of γ-methacryloxypropyltrimethoxysilane, γ-methacryloxypropylmethyldimethoxysilane, γ-methacryloxypropyltriethoxysilane, and γ-methacryloxypropylmethyldiethoxysilane is preferable, and γ-methacryloxypropyltriethoxysilane is more preferable.

Examples of the hydroxyl group-containing alkyl vinyl ethers include 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, 2-hydroxyethyl allyl ether, 4-hydroxybutyl allyl ether, and glycerol monoallyl ether. From the viewpoint of excellent polymerization reactivity, at least one selected from the group consisting of 4-hydroxybutyl vinyl ether and 2-hydroxyethyl vinyl ether is preferable.

Examples of the carboxylic acid vinyl esters include vinyl acetate, vinyl propionate, vinyl butyrate, vinyl isobutyrate, vinyl pivalate, vinyl caproate, vinyl versatate, vinyl laurate, vinyl stearate, vinyl cyclohexylcarboxylate, vinyl benzoate, and vinyl para-t-butylbenzoate.

Examples of the α-olefins include ethylene, propylene, n-butene, isobutene, and styrene.

The number average molecular weight of the water-soluble polymer is preferably $0.1 \times 10^4$ or more, more preferably $0.2 \times 10^4$ or more, still more preferably $0.3 \times 10^4$ or more, particularly preferably $0.4 \times 10^4$ or more, still further preferably $0.5 \times 10^4$ or more, particularly preferably $1.0 \times 10^4$ or more, even further preferably $3.0 \times 10^4$ or more, and most preferably $3.1 \times 10^4$ or more. The number average molecular weight thereof is also preferably $75.0 \times 10^4$ or less, more preferably $50.0 \times 10^4$ or less, still more preferably $40.0 \times 10^4$ or less, still more preferably $30.0 \times 10^4$ or less, and particularly preferably $20.0 \times 10^4$ or less. The weight average molecular weight of the water-soluble polymer is preferably $0.2 \times 10^4$ or more, more preferably $0.4 \times 10^4$ or more, still more preferably $0.6 \times 10^4$ or more, further preferably $0.8 \times 10^4$ or more, particularly preferably $1.0 \times 10^4$ or more, more particularly preferably $5.0 \times 10^4$ or more, still more particularly preferably $10.0 \times 10^4$ or more, still further preferably $15.0 \times 10^4$ or more, even further preferably $20.0 \times 10^4$ or more, and most preferably $25.0 \times 10^4$ or more. The weight average molecular weight thereof is also preferably $150.0 \times 10^4$ or less, more preferably $100.0 \times 10^4$ or less, still more preferably $60.0 \times 10^4$ or less, particularly preferably $50.0 \times 10^4$ or less, and still further preferably $40.0 \times 10^4$ or less.

The number average molecular weight and the weight average molecular weight are values calculated by gel permeation chromatography (GPC) using monodisperse polystyrene as a standard.

It is preferable that the water-soluble polymer has an ion exchange rate (IXR) of 53 or less. The IXR is preferably 0.5 or more, more preferably 1 or more, still more preferably 3 or more, further preferably 4 or more, still further preferably 5 or more, and particularly preferably 8 or more. The IXR is also more preferably 43 or less, still more preferably 33 or less, and particularly preferably 23 or less.

In the water-soluble polymer, the ionic groups are typically distributed along the polymer main chain. The water-soluble polymer comprises the polymer main chain together with repeating side chains bonded to this main chain, and these side chains preferably have ionic groups.

The water-soluble polymer preferably comprises ionic groups having a pKa of less than 10, more preferably less than 7. The ionic groups of the water-soluble polymer are preferably selected from the group consisting of sulfonate, carboxylate, phosphonate, phosphate, and mixtures thereof.

The term "sulfonate, carboxylate, phosphonate, and phosphate" is intended to refer to the respective salts or the respective acids that can form the salts. When a salt is used, that salt is preferably an alkali metal salt or an ammonium salt. The preferred ionic group is a sulfonate group.

The present disclosure also provides but does not claim a method for producing a fluoropolymer aqueous

dispersion (hereinafter, also referred to as a "third production method of the present disclosure"), the method comprising a step A'' of performing ultrafiltration, microfiltration, or dialysis membrane treatment, or a combination thereof on a pretreatment aqueous dispersion containing a fluoropolymer obtained by polymerization in the presence of a polymer in which hydrogen atoms bonded to carbon atoms have been replaced by fluorine atoms at a proportion of 50% (% by mass) or more and that includes an ionic group and has an ion exchange ratio of 53 or less, with the proviso that the fluoropolymer is other than the polymer.

For the third production method of the present disclosure, the same methods as the first production method of the present disclosure can all be adopted, except that a polymer (hereinafter, also referred to as a "polymer $\alpha$") in which hydrogen atoms bonded to carbon atoms have been replaced by fluorine atoms at a proportion of 50% or more and that includes an ionic group and has an ion exchange ratio of 53 or less is used instead of the polymer (I). The fluoropolymer aqueous dispersion obtained by the third production method of the present disclosure may contain one single type of polymer $\alpha$ or two or more different types of polymer $\alpha$.

The polymer $\alpha$ is not limited, and a water-soluble polymer among the above-mentioned polymer (I) in which hydrogen atoms bonded to carbon atoms have been replaced by fluorine atoms at a proportion of 50% or more (atomic constitution ratio) can be used, or a polymer other than the above-mentioned polymer (I) in which hydrogen atoms bonded to carbon atoms have been replaced by fluorine atoms at a proportion of 50% or more and that includes an ionic group and has an ion exchange ratio of 53 or less can be used.

An example of the polymer $\alpha$ is a water-soluble polymer comprising a polymerized unit (I) derived from a monomer represented by the following general formula (I):

$$CX^1X^3=CX^2R\text{-}CZ^1Z^2\text{-}A^0 \qquad (I)$$

wherein $X^1$, $X^2$, and $X^3$ are each independently F, Cl, H, or $CF_3$; $A^0$ is an anionic group; R is a linking group; and $Z^1$ and $Z^2$ are each independently F or $CF_3$.

In the polymer $\alpha$, the content of the polymerized unit (I) is preferably 50% by mass or more, more preferably 60% by mass or more, still more preferably 70% by mass or more, further preferably 80% by mass or more, still further preferably 90% by mass or more, particularly preferably 95% by mass or more, and most preferably 99% by mass or more.

The polymer $\alpha$ may comprise a polymerized unit derived from a fluorine-containing monomer based on trifluoroethylene, tetrafluoroethylene (TFE), vinylidene fluoride (VdF), vinyl fluoride (VF), chlorotrifluoroethylene (CTFE), hexafluoropropylene (HFP), hexafluoroisobutylene, perfluoroalkylethylene, fluorovinyl ether (FVE).

The polymer $\alpha$ may also comprise a polymerized unit derived from a fluorine-free monomer. The fluorine-free monomer may be any monomer having a radically polymerizable ethylenically unsaturated bond, and examples thereof include acrylic esters, methacrylic esters, unsaturated carboxylic acids, hydrolyzable silyl group-containing monomers, hydroxyl group-containing alkyl vinyl ethers, carboxylic acid vinyl esters, and $\alpha$-olefins. Of these, the fluorine-free monomer is preferably at least one selected from the group consisting of acrylic esters, methacrylic esters, unsaturated carboxylic acids, and hydrolyzable silyl group-containing monomers.

In addition, the fluorine-free monomer is more preferably at least one selected from the group consisting of at least one monomer selected from the group consisting of acrylic esters and methacrylic esters, unsaturated carboxylic acids, and hydrolyzable silyl group-containing monomers.

Besides, a monomer having a radically polymerizable ethylenically unsaturated bond may be used in combination.

As the fluorine-free monomer, those described for the water-soluble polymer may be used.

The number average molecular weight of the polymer $\alpha$ is preferably $0.1 \times 10^4$ or more, more preferably $0.2 \times 10^4$ or more, still more preferably $0.3 \times 10^4$ or more, particularly preferably $0.4 \times 10^4$ or more, still further preferably $0.5 \times 10^4$ or more, particularly preferably $1.0 \times 10^4$ or more, even further preferably $3.0 \times 10^4$ or more, and most preferably $3.1 \times 10^4$ or more. The number average molecular weight thereof is also preferably $75.0 \times 10^4$ or less, more preferably $50.0 \times 10^4$ or less, still more preferably $40.0 \times 10^4$ or less, still more preferably $30.0 \times 10^4$ or less, and particularly preferably $20.0 \times 10^4$ or less. The weight average molecular weight of the polymer $\alpha$ is preferably $0.2 \times 10^4$ or more, more preferably $0.4 \times 10^4$ or more, still more preferably $0.6 \times 10^4$ or more, still more preferably $0.8 \times 10^4$ or more, particularly preferably $1.0 \times 10^4$ or more, more particularly preferably $5.0 \times 10^4$ or more, still more particularly preferably $10.0 \times 10^4$ or more, still further preferably $15.0 \times 10^4$ or more, even further preferably $20.0 \times 10^4$ or more, and most preferably $25.0 \times 10^4$ or more.

The weight average molecular weight thereof is also preferably $150.0 \times 10^4$ or less, more preferably $100.0 \times 10^4$ or less, still more preferably $60.0 \times 10^4$ or less, particularly preferably $50.0 \times 10^4$ or less, and still further preferably $40.0 \times 10^4$ or less.

The number average molecular weight and the weight average molecular weight are values calculated by gel permeation chromatography (GPC) using monodisperse polystyrene as a standard.

The polymer $\alpha$ has an ion exchange rate (IXR) of 53 or less. The IXR is preferably 0.5 or more, more preferably 1 or more, still more preferably 3 or more, further preferably 4 or more, still further preferably 5 or more, and particularly

preferably 8 or more. The IXR is also more preferably 43 or less, still more preferably 33 or less, and particularly preferably 23 or less.

In the polymer $\alpha$, the ionic groups are typically distributed along the polymer main chain.

The polymer $\alpha$ comprises the polymer main chain together with repeating side chains bonded to this main chain, and these side chains preferably have ionic groups.

The polymer $\alpha$ preferably comprises ionic groups having a pKa of less than 10, more preferably less than 7. The ionic groups of the polymer $\alpha$ are preferably selected from the group consisting of sulfonate, carboxylate, phosphonate, phosphate and mixtures thereof.

The term "sulfonate, carboxylate, phosphonate, and phosphate" is intended to refer to the respective salts or the respective acids that can form the salts. When a salt is used, that salt is preferably an alkali metal salt or an ammonium salt.

The present disclosure also provides but does not claim method for treating a discharge water (hereinafter, also referred to as a "treatment method of the present disclosure"), the method comprising a step of, from a discharge water collected by a step A of performing ultrafiltration, microfiltration, or dialysis membrane treatment, or a combination thereof on a pretreatment aqueous dispersion containing a fluoropolymer obtained by polymerizing a fluoromonomer in the presence of a polymer (I) comprising a polymerized unit (I) derived from a monomer represented by the following general formula (I), collecting the polymer (I), with the proviso that the fluoromonomer is other than the monomer represented by the following general formula (I) and the fluoropolymer is other than the polymer (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

In the treatment method of the present disclosure, as the polymer (I), those mentioned above as the polymer (I) used in the first production method of the present disclosure can be used.

In the treatment method of the present disclosure, as the fluoromonomer, those mentioned above as the polymer (I) used in the first production method of the present disclosure can be used.

In the treatment method of the present disclosure, as the fluoropolymer, those mentioned above as the fluoropolymer used in the first production method of the present disclosure can be used.

In the treatment method of the present disclosure, as the pretreatment aqueous dispersion, those mentioned above as the pretreatment aqueous dispersion used in the first production method of the present disclosure can be used.

In the treatment method of the present disclosure, as the method of carrying out the step A, the method mentioned above as the method of carrying out the step A in the first production method of the present disclosure can be used.

By carrying out the step A on the pretreatment aqueous dispersion, a liquid that does not permeate an ultrafiltration membrane, microfiltration membrane, or dialysis membrane can be collected as the fluoropolymer aqueous dispersion containing the fluoropolymer. Meanwhile, a liquid that permeates an ultrafiltration membrane, microfiltration membrane, or dialysis membrane can be collected as a discharge water.

The discharge water contains the polymer (I). The treatment method of the present disclosure allows for efficiently collecting the polymer (I) from the discharge water. The polymer (I) collected from the discharge water by the treatment method of the present disclosure can be used in the polymerization for the fluoropolymer. Thus, according to the treatment method of the present disclosure, in the case where the polymer (I) is used for the polymerization for the fluoropolymer, the polymer (I) can be efficiently collected from the discharge water, and furthermore, the polymer (I) can be reused, and therefore, the amount of consumption of the polymer (I) can be reduced. In addition, the treatment method of the present disclosure can prevent the discharge of the polymer (I) into the environment.

In the step A of the treatment method of the present disclosure, it is preferable to carry out any of ultrafiltration, microfiltration, or dialysis membrane treatment only once, it is more preferable to carry out ultrafiltration or microfiltration only once, and it is still more preferable to carry out microfiltration only once.

The content of the polymer (I) in the discharge water is not limited, and from the viewpoint of increasing the collection efficiency, it is preferably 10% by mass or less, more preferably 1% by mass or less, still more preferably 0.5% by mass or less, and particularly preferably 0.2% by mass or less. Also, the content thereof may be greater than 0% by mass, may be greater than 0.005% by mass, may be greater than 0.006% by mass, may be greater than 0.008% by mass, may be 0.010% by mass or more, may be greater than 0.020% by mass, may be greater than 0.025% by mass, or may be 0.1% by mass or more.

The discharge water may contain the fluoropolymer. The content of the fluoropolymer in the discharge water is not limited, and it is preferably 1.0% by mass or less, more preferably 0.5% by mass or less, and still more preferably 0.2% by mass or less, and it may be 0% by mass or more or may be 0.1% by mass or more.

The step of collecting the polymer (I) is preferably a step in which at least one of filtration, adsorption, and agglomeration is carried out on the discharge water, and it is preferable that at least agglomeration is carried out on the

discharge water since the collection efficiency of the polymer (I) can be even further improved.

The method of carrying out filtration on the discharge water is not limited, and an example thereof is a method of passing the discharge water through a filtration membrane. The temperature in the filtration is not limited, and it may be, for example, 0 to 50°C.

By passing the discharge water through a filtration membrane, the polymer (I) contained in the discharge water can be collected.

The type of filtration membrane is not limited, and may be appropriately selected depending on the discharge water, filtration conditions, and the like. As the filtration membrane, any one of reverse osmosis membrane, nanofiltration membrane, filter paper, microfiltration membrane, or ultrafiltration membrane may be used, or a combination of two or more types of filtration membranes may be used. Specifically, a filtration membrane with a pore size of 0.05 nm to 25 μm can be used. Also, as the reverse osmosis membrane, nanofiltration membrane, or ultrafiltration membrane, a filtration membrane with a pore size of 0.05 nm to 0.5 μm can be used.

The filtration membrane may have a NaCl rejection of 10% or more, for example. The NaCl rejection is the value obtained by filtering a NaCl solution (raw water) through a filtration membrane to obtain permeated water, measuring the NaCl concentration in the raw water and permeated water, and calculating it with the following equation:

NaCl rejection (%) = (1 - (NaCl concentration of permeated water)/(NaCl concentration of raw water)) × 100

The shape of the filtration membrane is not limited, and for example, it may be flat, spiral, or tubular. When a plurality of filtration membranes are used in combination, single membranes may be arranged in series, or a so-called composite membrane, in which a plurality of membranes have been laminated in advance, may be used. In the membrane filtration, the filtration pressure may be appropriately set depending on the water to be treated, the type of filtration membrane to be used, and the like.

It is also preferable that the filtration is pressure filtration. By carrying out the pressure filtration, the polymer (I) can be collected more efficiently. For the pressure filtration, known devices can be used as appropriate. For example, the pressure filtration may be carried out using a pressure filtration machine equipped with a candle type filter. When a pressure filtration device is used, by applying internal pressure, the cake layer formed on the surface of a filtration aid retaining member can be periodically peeled off, and thus the treatment of water can be stably carried out over a long period of time. Alternatively, the discharge water may be subjected to vacuum filtration to separate and collect the polymer (I). In the case of carrying out pressure filtration or vacuum filtration, the filtration pressure can be appropriately set depending on the discharge water to be treated, the types of filtration aid and filtration aid retaining member, which will be mentioned later, and the type of filtration device.

When carrying out filtration, a filtration aid may be used. The filtration aid serves to capture the polymer (I) in the discharge water. By filtration using the filtration aid, the filtration aid that has captured the polymer (I) can be collected as the filtered product from the discharge water. The filtration aid is generally used for the purpose of improving filtration characteristics, such as reducing filtration resistance and preventing clogging of the filter material, and is usually a particulate, powdery or fibrous substance.

The filtration aid is not limited. For example, it is preferably at least one selected from the group consisting of diatomaceous earth, filter sand (manganese sand, manganese zeolite, activated carbon, anthracite, ceramic sand) , perlite, and cellulose, and it is more preferably diatomaceous earth.

As the particle size of the filtration aid is larger, the increase in filtration pressure is suppressed and the filtration speed is increased, and thus the amount of discharge water treated per unit time can be increased. On the other hand, as the particle size of the filtration aid is smaller, the effect of capturing the polymer (I) is higher, and thus the concentration of the polymer (I) in the filtrate can be even further reduced. The average particle size of the filtration aid is preferably 1 to 1,000 μm, more preferably 1 to 500 μm, still more preferably 1 to 200 μm, still more preferably 10 to 100 μm, and particularly preferably 20 to 60 μm. Also, when the average particle size of the filtration aid is 20 μm or more, preferably 40 μm or more, more preferably 60 μm or more, and still more preferably 80 μm or more, the filtration speed can be made faster and the amount of discharge water treated per unit time can be increased. In addition, when the average particle size of the filtration aid is 80 μm or less, preferably 60 μm or less, more preferably 40 μm or less, and still more preferably 20 μm or less, the effect of capturing the polymer (I) is even further enhanced, and the concentration of the polymer (I) contained in the filtrate can be even further reduced. The average particle size of the filtration aid refers to the average particle size on a volume basis (volume average particle size), as measured using a laser diffraction particle size distribution measurement apparatus.

The filtration aid is particularly preferably diatomaceous earth having an average particle size of 20 to 60 μm.

The filtration aid may be added to the discharge water. In this way, carrying out the filtration while directly adding the filtration aid to the liquid to be filtered is generally referred to as "body feed". Since the body feed can effectively suppress the increase in filtration pressure, it has advantages in that the amount of discharge water treated per unit time

can be increased and that the filtration operation can be carried out for a long time while maintaining a fast filtration speed.

The filtration aid may be retained by a filtration aid retaining member for use. By retaining the filtration aid, the filtration aid retaining member serves to separate the discharge water into the filtration aid that has captured the polymer (I) and the filtrate (solid-liquid separation). The filtration aid retaining member may be, for example, a cloth-like member such as filter cloth, filter paper, or metal mesh, a porous material such as sintered metal or sponge, or a filling material such as gravel or sand. The type of filtration aid retaining member used can be appropriately selected depending on the conditions such as the discharge water to be treated.

For example, a layer of filtration aid may be formed on the surface of the filtration aid retaining member. In this way, forming a layer of filtration aid on the surface of the filtration aid retaining member before filtration is generally referred to as "precoating". Since the precoating can effectively prevent the clogging of the filtration aid retaining member, the increase in filtration pressure can be suppressed, resulting in an increase in the amount of water treated per unit time.

The pore size of the filtration aid retaining member can be appropriately set depending on the particle size of the filtration aid to be used. The pore size of the filtration aid retaining member may be, for example, 1 to 1,000 μm. As the pore diameter of the filtration aid retaining member is smaller, the filtration aid can be retained more reliably. On the other hand, as the pore size of the filtration aid retaining member is larger, the pressure loss during filtration can be reduced. When diatomaceous earth is used as the filtration aid, the pore size of the filtration aid retaining member is preferably smaller than the average particle size of the filtration aid. For example, it is preferably 60% or less of the average particle size of the filtration aid. The material constituting the filtration aid retaining member is not limited, and it may be, for example, a synthetic fiber such as polypropylene, polyester, polyamide, polyimide, polyacrylonitrile, polytetrafluoroethylene (PTFE), polyphenylene sulfide (PPS), vinylidene chloride, or vinylon; glass fiber; cotton

In the treatment method of the present disclosure, the body feed or precoating may be carried out independently, or the body feed and precoating may be combined. By combining the body feed and precoating, the polymer (I) in water can be captured even more efficiently, and furthermore, the increase in filtration pressure can be even further suppressed, and thus the collection of polymer (I) can be carried out with high efficiency over a long period of time.

The amount of the filtration aid can be appropriately set depending on the water to be treated, the type of filtration aid to be used, and the like, and it is not limited to a specific amount. As an example, the amount of the filtration aid added to the water in the body feed may be an amount such that the concentration of the filtration aid in the water containing the polymer (I) is 1 to 10,000 ppm, preferably 10 to 1,000 ppm, and more preferably 20 to 100 ppm. The amount of the filtration aid used in the precoating may be an amount such that the thickness of the layer of filtration aid formed on the surface of the filtration aid retaining member is 0.5 to 10 mm, preferably 1 to 7 mm.

Adsorption can be carried out by bringing the discharge water into contact with an adsorbent. As the method of bringing the discharge water into contact with an adsorbent, commonly employed methods can be adopted. For example, it can be performed by a method in which an adsorbent is added to the discharge water and the mixture is stirred, or by a column method in which the discharge water is allowed to flow through a column packed with an adsorbent. The packed column used in the column method may be any of the following: moving bed, fixed bed, or fluidized bed.

When using the method in which an adsorbent is added to the discharge water and the mixture is stirred, it is preferable to collect the adsorbent that has adsorbed the polymer (I) after the stirring. The method of collection is not limited, and for example, filtration can be used. As for the method of filtration, the method mentioned above as the method of carrying out filtration on the discharge water can be used.

Although the adsorbent is not limited, it is preferably at least one type selected from the group consisting of ion exchange resins, chelating agents, synthetic adsorbents, activated carbon, silica gel, clay, and zeolite. Alumina and carbon nanotubes, can also be used as the adsorbent.

The adsorbent is more preferably at least one selected from the group consisting of ion exchange resins, chelating agents, synthetic adsorbents, and activated carbon. The use of an ion exchange resin, chelating agent, synthetic adsorbent, or activated carbon as the adsorbent can improve the adsorption ratio of the polymer (I). The adsorbent is more preferably an ion exchange resin. The use of an ion exchange resin can further increase the adsorption ratio of the polymer (I).

For the adsorption, one type of adsorbent may be used alone, or a combination of two or more types of adsorbents may be used.

The ion exchange resin may be either a cation exchange resin or an anion exchange resin. As the anion exchange resin, for example, ion exchange resins having amino groups and/or quaternary ammonium groups as functional groups can be used. The ion exchange resin is preferably a strongly basic anion exchange resin. The basicity of the anion exchange resin can be set in a variety of ways depending on the polymer backbone and/or the type of functional group. Commercially available products can be used as the anion exchange resin, and for example, the DIAION (TM) SA series, manufactured by Mitsubishi Chemical Corporation; A200, A300, PFA694E, manufactured by Purorite Corporation; and the Amberlite (TM) series and the Amberjet (TM) series such as IRA4002OH manufactured by ORGANO CORPORATION can be used. As the cation exchange resin, for example, ion exchange resins having carboxylic acid groups and/or sulfonic acid groups as functional groups can be used. The acidity of the cation exchange resin can be set in

a variety of ways depending on the polymer backbone and/or the type of functional group. Commercially available products can be used as the cation exchange resin, and for example, the DIAION (TM) SK series, manufactured by Mitsubishi Chemical Corporation; C100, etc. manufactured by Purorite Corporation; the Amberlite (TM) series manufactured by ORGANO CORPORATION; can be used.

It is preferable that the ion exchange resin has a pore size of 1 to 5,000 Å. From the viewpoint of collection efficiency, the pore size is preferably 50 Å or more, more preferably 100 Å or more, and still more preferably 150 Å or more. The pore size may be 200 Å or more, or may be 250 Å or more.

Also, the pore size may be 1,000 Å or less. The pore size can be calculated by, for example, measuring the specific surface area and total pore volume by the gas adsorption method.

From the viewpoint of collection efficiency, the ion exchange resin preferably has a total exchange capacity of 0.1 eq/L-Resin or more. The total exchange capacity is more preferably 0.5 eq/L-Resin or more, and still more preferably 0.9 eq/L-Resin or more. Also, although a larger total exchange capacity is better, the upper limit thereof may be 5.0 eq/L-Resin, for example.

The ion exchange resin is usually spherical and has an average particle size of about 300 to 1,300 μm.

The chelating agent is usually a compound with a multidentate ligand that can coordinate to a metal ion to form a chelate compound. The material thereof and whether it is a gel type or MR type is not limited. Examples thereof include resins formed by introducing functional groups into styrene-divinylbenzene copolymers, phenolic polymers .

Examples of the chelating agent include iminodiacetic acid type, iminopropionic acid type, aminophosphonic acid type such as aminomethylene phosphonic acid type, polyamine type, aminocarboxylic acid type, dithiocarbamic acid type, thiol type, amidoxime type, and pyridine type.

The chelating agent is preferably spherical and may have an average particle size of about 300 to 1,300 μm.

Specific examples of the chelating agent include the "Unicellex" (trade name) series (manufactured by Unitika Ltd.), the "Lewatit" (trade name) series (manufactured by Lanxess AG), and the "EPOROUS" (R) (trade name) series (manufactured by Miyoshi Oil & Fat Co., Ltd.) (Z-7, Z-100, SE-3, and AS-4).

The synthetic adsorbent is a porous resin having no ion-exchange group, and any known synthetic adsorbents can be adopted. Examples of the ion-exchange group include an amino group, a quaternary ammonium group, a carboxylic acid group, and a sulfonic acid group. Specific examples of the synthetic adsorbent include styrene resins such as styrene-divinylbenzene copolymers, acrylic resins such as (meth)acrylic ester-ethylene glycol dimethacrylate copolymers, methacrylic resins, polyvinyl resins, and dextran resins. Specific examples of commercially available synthetic adsorbents include styrene resins such as DIAION HP10, DIAION HP20, DIAION HP21, DIAION HP40, DIAION HP50, SEPABEADS SP207, SEPABEADS SP70, SEPABEADS SP825, SEPABEADS SP850, and SEPABEADS SP207 (all manufactured by Mitsubishi Chemical Corporation), Amberlite XAD1180N, Amberlite XAD2000, Amberlite XAD4, and Amberlite FPX66 (all manufactured by ORGANO CORPORATION); and acrylic resins such as DIAION HP2MG (manufactured by Mitsubishi Chemical Corporation) and Amberlite HXAD-7HP (manufactured by ORGANO CORPORATION) .

The synthetic adsorbent preferably has a pore size of 1 to 5,000 Å. From the viewpoint of collection efficiency, the pore size is preferably 50 Å or more, more preferably 100 Å or more, and still more preferably 150 Å or more. The pore size may be 200 Å or more, or may be 250 Å or more. Also, the pore size may be 1,000 Å or less. The pore size can be calculated by, for example, measuring the specific surface area and total pore volume by the gas adsorption method.

The synthetic adsorbent preferably has a specific surface area of 300 $m^2/g$ or more. The specific surface area is more preferably 400 $m^2/g$ or more, still more preferably 500 $m^2/g$ or more, and still further preferably 600 $m^2/g$ or more. The upper limit of the specific surface area is not limited, and it may be 2,000 $m^2/g$ or less, may be 1,500 $m^2/g$ or less, or may be 1,000 $m^2/g$ or less.

The synthetic adsorbent is usually spherical and has an average particle size of about 200 to 1,300 μm.

The activated carbon can be produced from carbonaceous materials. The carbonaceous materials may be anything that produces activated carbon through carbonization or activation, and examples thereof include plant-based materials such as wood, sawdust, charcoal, fruit shells including coconut shells and walnut shells, and fruit seeds; mineral-based materials such as coal including peat, lignite, brown coal, bituminous coal, and anthracite, pitches including petroleum pitch and coal pitch, coke, tars including coal tar and petroleum tar, and petroleum distillation residues; natural materials such as cellulosic fibers including cotton and rayon; and synthetic materials such as phenolic resins, polyvinyl alcohol, and polyacrylonitrile. The shape may be any of powder, granular, or fibrous form, or it may be a molded form thereof.

The activated carbon preferably has a specific surface area of 500 $m^2/g$ or more. The specific surface area is more preferably 1,000 $m^2/g$ or more, still more preferably 1,500 $m^2/g$ or more, still further preferably 1,800 $m^2/g$ or more, and particularly preferably 2,000 $m^2/g$ or more. The upper limit of the specific surface area is not limited, and it may be, for example, 2,500 $m^2/g$.

The shape of the activated carbon is not limited, and may be, for example, in the shape of pellets, granules, powder, or spherical particles. The activated carbon may be a commercially available product. Examples of commercially

available products of the activated carbon include Shirasagi (TM), manufactured by Osaka Gas Chemicals Co., Ltd., Filtrasorb (TM) CAL, Diahope (TM), Diasorb (TM), manufactured by Calgon Carbon Japan K.K., and the Ebadia (TM) series, manufactured by Swing Corporation.

When the activated carbon is used as the adsorbent, it is preferable that the activated carbon is highly activated carbon. The use of highly activated carbon can increase the adsorption ratio of the polymer (I) compared to ordinary activated carbon. It is preferable that the activated carbon has an adsorption performance that has been improved by carrying out a steam activation treatment. In the steam activation treatment, it is preferable to expose the activated carbon to a temperature of 120°C or higher, for example 130 to 350°C, particularly 150 to 1,000°C, and to steam at a pressure of 0.2 MPa or more, for example 0.5 to 15 MPa, particularly 1 MPa to 15 MPa. The steam activation treatment time may generally be 10 seconds to 50 hours, for example, 10 minutes to 10 hours. In the activation, heating in a furnace may be carried out.

Cations may be attached to the surface of the activated carbon. Examples of the cations include metal ions, metal oxide ions, and ammonium ions. Examples of the metals include metal atoms from Groups 1 to 13 of the periodic table (for example, alkali metals (such as Li, Na, and K), alkaline earth metals (such as Mg and Ca), Ti, Zr, V, Cr, Fe, Ni, Cu, and Zn).

In the adsorption, the amount of the adsorbent relative to the water containing the polymer (I) is not limited, and it may be, for example, 0.01 to 1,000 g based on 1,000 g of the water containing the polymer (I). The amount thereof is preferably 0.1 g or more, more preferably 1 g or more, and still more preferably 5 g or more, based on 1,000 g of the water containing the polymer (I). Also, the amount thereof is preferably 500 g or less.

The temperature in the adsorption is not limited, and it may be, for example, 0 to 50°C.

The adsorption device that can be used in the adsorption is not limited as long as it is an adsorption device equipped with the above-mentioned adsorbent, and a variety of adsorption devices may be appropriately used depending on the purpose. The adsorption device may be, for example, a packed column filled with the adsorbent, specifically an ion exchange column or an activated carbon column.

In the treatment method of the present disclosure, it is preferable to collect the adsorbent that has adsorbed the polymer (I) from the discharge water. The collection method is not limited, and any conventionally known method may be used. For example, the adsorbent that has adsorbed the polymer (I) may be collected as the filtered product by the above-mentioned filtration.

The agglomeration can be carried out by, for example, adding an agglomerating agent to the discharge water. The step of collecting the polymer (I) is preferably a step of adding an agglomerating agent to the discharge water. In the step of collecting the polymer (I), it is preferable to add an agglomerating agent to the discharge water and then stir the mixture. The stirring time is not limited and may be appropriately set depending on the amount of the polymer (I) in the water and the amount of the agglomerating agent added. The stirring time may be appropriately set in the range of 0 minutes to 100 hours, for example.

Examples of the agglomerating agent include inorganic agglomerating agents, organic agglomerating agents, and polymeric agglomerating agents. The amount of the agglomerating agent added may be appropriately selected depending on the amount of the polymer (I) contained in the water, the type of agglomerating agent, but for example, it may be 300% by weight or less, and may be 0.01% by weight or more based on the polymer (I).

The step of collecting the polymer (I) is particularly preferably a step of adding an inorganic agglomerating agent to the discharge water. The step of collecting the polymer (I) is to carry out the agglomeration on the polymer (I), and in a suitable embodiment, it is a step of adding an inorganic agglomerating agent to the discharge water.

Examples of the inorganic agglomerating agent include metal salts, and commercially available products may be used. Sea water containing $Mg^{2+}$, $Ca^{2+}$, etc. and low-molecular-weight cationic polymeric agglomerating agents can also be used.

The amount of the inorganic agglomerating agent added is preferably 0.01% by weight or more, more preferably 0.04% by weight or more, and still more preferably 0.1% by weight or more, based on the polymer (I). Also, the amount thereof is preferably 300% by weight or less, preferably 50% by weight or less, more preferably 30% by weight or less, and still more preferably 20% by weight or less, based on the polymer (I).

The amount of the inorganic agglomerating agent added is preferably 1 ppm by weight or more, more preferably 10 ppm by weight or more, and still more preferably 20 ppm by weight or more, based on the water containing the polymer (I). Also, the amount thereof is preferably 15,000 ppm by weight or less, more preferably 10,000 ppm by weight or less, and still more preferably 5,000 ppm by weight or less.

The inorganic agglomerating agent is preferably a metal salt. As for the inorganic agglomerating agent that is a metal salt, metal salts containing divalent or higher metal elements are preferable. Here, the divalent or higher metal element constituting the metal salt is more preferably at least one metal element selected from the group consisting of Fe, Al, and Ca, still more preferably at least one metal element selected from the group consisting of Fe and Al, and particularly preferably Al. Also, the counter ion of the metal element constituting the metal salt is more preferably at least one selected from the group consisting of sulfate ion, hydroxide ion, fluorine ion, nitrate ion, and chlorine ion, still more preferably at least one selected from the group consisting of sulfate ion and chlorine ion, and particularly preferably sulfate ion.

The term "metal salt" as used herein refers to a single salt, composite salt, and/or complex salt. In addition, the term "salt containing a divalent or higher metal element" refers to a single salt, composite salt, and/or complex salt containing the divalent or higher metal element.

The metal salt is preferably, for example, at least one metal salt selected from the group consisting of aluminum salts (for example, aluminum sulfate, polyaluminum chloride ), iron salts (for example, ferrous hydroxide, ferric hydroxide, ferrous sulfate, ferric sulfate, polyferric sulfate ), calcium salts (for example, calcium hydroxide, calcium chloride, calcium sulfate, calcium carbonate, calcium nitrate, calcium fluoride ), and silicate minerals containing divalent or higher metal elements and silicon (for example, kaolinite, montmorillonite, zeolite ).

Examples of the silicate minerals include silica-alumina agglomerating agents as commercially available agglomerating agents. Examples thereof include Flonite 723, Flonite 113, Flonite 101, Flonite S, and Flonite D manufactured by Nihon Kassei Hakudo Co., Ltd.

The metal salt that can be used as the agglomerating agent may be in a form that produces a metal salt or converts the counter ion of the metal element of a metal salt in the step of adding the agglomerating agent.

Examples of such a form include a form of adding a metal salt with a counter ion, such as a metal hydroxide, to the discharge water. In such a form, conversion of the counter ion of the metal salt occurs. A better impurity collection effect may be obtained when conversion of the counter ion of the metal salt occurs.

The inorganic agglomerating agent is preferably at least one metal salt selected from the group consisting of iron salts and aluminum salts, more preferably at least one metal salt selected from the group consisting of ferric chloride, aluminum sulfate, and polyaluminum chloride, still more preferably at least one aluminum salt selected from the group consisting of aluminum sulfate and polyaluminum chloride, and particularly preferably aluminum sulfate.

Examples of the polymeric agglomerating agent include sodium alginate, chitin/chitosan agglomerating agents, cationic polymeric agglomerating agents, anionic polymeric agglomerating agents, amphoteric polymeric agglomerating agents, and nonionic polymeric agglomerating agents. It is preferably at least one selected from the group consisting of cationic polymeric agglomerating agents, anionic polymeric agglomerating agents, amphoteric polymeric agglomerating agents, and nonionic polymeric agglomerating agents.

The amount of the polymeric agglomerating agent added is preferably 0.001% by weight or more, more preferably 0.004% by weight or more, and particularly preferably 0.01% by weight or more, based on the polymer (I). The upper limit value of the amount of the polymeric agglomerating agent added is not limited, and it is preferably 50% by weight or less, more preferably 30% by weight or less, and particularly preferably 20% by weight or less, based on the polymer (I).

The amount of the polymeric agglomerating agent added is preferably 0.1 ppm by weight or more, more preferably 1 ppm by weight or more, and still more preferably 2 ppm by weight or more, based on the discharge water.

Also, the amount thereof is preferably 15,000 ppm by weight or less, more preferably 10,000 ppm by weight or less, and still more preferably 5,000 ppm by weight or less.

Examples of the cationic polymeric agglomerating agents include polyaminoalkyl methacrylates such as dimethylaminoethyl methacrylate, polyethyleneimine, polydiallylammonium halides, chitosan, and urea-formalin resins.

Examples of commercially available products of the cationic polymeric agglomerating agents include Takifloc C-403, C-408, C-805, C-806, and C-809 manufactured by Taki Chemical Co., Ltd.; and Aronfloc EC-509L, C-508, CX-400, C-303, and CX-333 manufactured by MT AquaPolymer, Inc.

Examples of the anionic polymeric agglomerating agents include polyacrylamide-based polymeric agglomerating agents such as sodium polyacrylate, polyacrylamide partial hydrolysate, partially sulfomethylated polyacrylamide, and poly(2-acrylamide)-2-methylpropane sulfate.

Examples of commercially available products of the anionic polymeric agglomerating agents include Floclan A1210 manufactured by KATAYAMA NALCO INC.; Takifloc A-102, A-103, A-177T, A-108T, A-142, and A-50 manufactured by Taki Chemical Co., Ltd.; Accofloc A-95, A-110, and A-150 manufactured by MT AquaPolymer, Inc.; Sumifloc FA-40 and FA-50 manufactured by MT AquaPolymer, Inc.; and Diafloc AP199, Ap120C, Ap784, and DF732B manufactured by Mitsubishi Chemical Corporation.

Examples of the nonionic polymeric agglomerating agents include polyacrylamide and polyethylene oxide.

Examples of commercially available products of the nonionic polymeric agglomerating agents include Takifloc N-100T, N-131, and A-122T manufactured by Taki Chemical Co., Ltd.; Accofloc N-100 and N-210 manufactured by MT AquaPolymer, Inc.; Sumifloc FN-10H and FN-20H manufactured by MT AquaPolymer, Inc.; and Diafloc NP500, NP780, and DF500 manufactured by Mitsubishi Chemical Corporation.

Examples of the amphoteric polymeric agglomerating agents include copolymers of acrylamide, aminoalkyl methacrylate, and sodium acrylate.

Examples of commercially available products of the amphoteric polymeric agglomerating agents include Takifloc MC-601, MC-602, and MC-603 manufactured by Taki Chemical Co., Ltd.; and Diafloc KA003 and KA606A manufactured by Mitsubishi Chemical Corporation.

Among the polymeric agglomerating agents, anionic polymeric agglomerating agents are preferable.

The temperature in the agglomeration is not limited, and it is preferably 0°C or higher, more preferably 5°C or higher, and still more preferably 10°C or higher, for example. Further, the temperature is preferably 50°C or lower, more preferably 40°C or lower, and still more preferably 30°C or lower.
In the step of collecting the polymer (I), only an inorganic agglomerating agent may be added as the agglomerating agent, only a polymeric agglomerating agent may be added, or both inorganic agglomerating agent and polymeric agglomerating agent may be added. In addition, an inorganic agglomerating agent and a polymeric agglomerating agent may be added at the same time, a polymeric agglomerating agent may be added after adding an inorganic agglomerating agent, or an inorganic agglomerating agent may be added after adding a polymeric agglomerating agent. Furthermore, a polymeric agglomerating agent and an inorganic agglomerating agent may be added in multiple portions, or a polymeric agglomerating agent and an inorganic agglomerating agent may be added alternately.
The step of collecting the polymer (I) is particularly preferably a step of adding an inorganic agglomerating agent to the discharge water and then adding a polymeric agglomerating agent thereto. By adding the inorganic agglomerating agent, the surface charge of the polymer (I) is neutralized by the opposite charge, causing it to agglomerate and form flocs.
Subsequently, by adding the polymeric agglomerating agent to coarsen the flocs, the flocs agglomerated by the inorganic agglomerating agent can be crosslinked to form coarse flocs, which allows for more efficient collection of the polymer (I).
In this case, the amount of the inorganic agglomerating agent added is preferably 0.01% by weight or more, more preferably 0.04% by weight or more, and particularly preferably 0.1% by weight or more, based on the polymer (I). Also, the amount thereof is preferably 300% by weight or less, more preferably 50% by weight or less, still more preferably 30% by weight or less, and still further preferably 20% by weight or less.
The amount of the inorganic agglomerating agent added is preferably 1 ppm by weight or more, more preferably 10 ppm by weight or more, and still more preferably 20 ppm by weight or more, based on the discharge water. Also, the amount thereof is preferably 15,000 ppm by weight or less, more preferably 10,000 ppm by weight or less, and still more preferably 5,000 ppm by weight or less.
The amount of the polymeric agglomerating agent added is preferably 0.001% by weight or more, more preferably 0.004% by weight or more, and particularly preferably 0.01% by weight or more, based on the polymer (I). Also, the amount thereof is preferably 50% by weight or less, more preferably 30% by weight or less, and still more preferably 20% by weight or less.
The amount of the polymeric agglomerating agent added is preferably 0.1 ppm by weight or more, more preferably 1 ppm by weight or more, and still more preferably 2 ppm by weight or more, based on the discharge water.
Also, the amount thereof is preferably 15,000 ppm by weight or less, more preferably 10,000 ppm by weight or less, and still more preferably 5,000 ppm by weight or less.
In the step of collecting the polymer (I), it is also preferable to adjust the pH by adding a pH adjuster to the water containing the polymer (I) after adding the inorganic agglomerating agent to the water containing the polymer (I) and before adding the polymeric agglomerating agent. By adjusting the pH, the polymer (I) can be collected more efficiently.
In the step of collecting the polymer (I), it is preferable to adjust the pH to 4.0 or more, more preferably to 5.0 or more, and still more preferably to 6.0 or more before adding the polymeric agglomerating agent. Also, it is preferable to adjust the pH to 11.0 or less, more preferably to 9.0 or less, and still more preferably 8.0 or less.
The pH adjuster is not limited, and acid compounds or alkali compounds can be used, for example. Examples of the acid compounds include hydrochloric acid (HCl), nitric acid ($HNO_3$), sulfuric acid ($H_2SO_4$), and phosphoric acid ($H_3PO_4$), and in particular, hydrochloric acid (HCl) or nitric acid ($HNO_3$) is preferable. Examples of the alkali compounds include hydroxides of alkali metals such as NaOH and KOH; hydroxides of alkaline earth metals such as $Mg(OH)_2$ and $Ca(OH)_2$; salts with buffering actions such as disodium hydrogen phosphate; and organic compounds such as ammonia and amines.
The pH can be measured by a pH meter (for example, a pH meter D-20 manufactured by HORIBA Advanced Techno, Co., Ltd.) .
In the treatment method of the present disclosure, it is preferable to carry out agglomeration on the discharge water to agglomerate the polymer (I) and then collect the agglomerated polymer (I) from the discharge water. The method of collecting the agglomerated polymer (I) from the discharge water is not limited, and examples thereof include filtration. The method of the filtration is not limited, and the methods mentioned above can be adopted as appropriate.
In the treatment method of the present disclosure, it is preferable to agglomerate the polymer (I) and then collect the agglomerated polymer (I). The method of collection is not limited, and examples thereof include filtration. The method of the filtration is not limited, and the methods mentioned above can be adopted as appropriate.
The step of collecting the polymer (I) is particularly preferably a step of adding an inorganic agglomerating agent to the discharge water, then adding a polymeric agglomerating agent thereto, and filtering the water containing the agglomerated polymer (I). In this embodiment, after adding the inorganic agglomerating agent to the discharge water and before adding the polymeric agglomerating agent, a pH adjuster may be added to the discharge water to adjust the pH. As for the pH, the range described above can be adopted. For example, it is also preferable to adjust the pH to 5.0 to 9.0

(preferably 6.0 to 8.0).

The step of collecting the polymer (I) is preferably a step of reducing the concentration of the polymer (I) in the discharge water to 50% or less relative to the concentration before the step of collecting the polymer (I). It is more preferably 40% or less, still more preferably 30% or less, still further preferably 20% or less, and particularly preferably 10% or less.

By the step of collecting the polymer (I), the dimer and trimer of the monomer forming the structural unit constituting the polymer (I) can also be removed from the water containing the polymer (I).

The dimer and trimer may be the dimer and trimer of the monomer represented by the general formula (I). The dimer and trimer may be formed from, among monomers (I) represented by the general formula (I), one type of monomer (I), or may be formed from two or more types of monomers (I) with different structures.

When the step of collecting the polymer (I) is a step of carrying out filtration using a filtration aid, adsorption using an adsorbent, or agglomeration using an agglomerating agent on the discharge water, the polymer (I) is collected as a composition containing the polymer (I) and the filtration aid, adsorbent, or agglomerating agent. In these cases, although it is possible to use the collected composition as is for the polymerization for the fluoropolymer, it is preferable to further collect the polymer (I) from the collected composition and use this polymer (I) for the polymerization for the fluoropolymer. The method of collecting the polymer (I) from the collected composition is not limited, and examples thereof include a method in which the collected composition is brought into contact with a solvent such as water to elute or disperse the polymer (I) in the solvent, and then the polymer (I) eluted or dispersed in the solvent is collected.

## EXAMPLE

Hereinafter, the production method of the present disclosure will be described with reference to Example, but the production method of the present disclosure is not limited solely to such Example.

The parameters in Examples were determined by the following methods.

### Average primary particle size

The average primary particle size is measured by dynamic light scattering. A fluoropolymer aqueous dispersion with the fluoropolymer solid concentration being adjusted to about 1.0% by mass was prepared. The average primary particle size was measured from 70 measurement processes using ELSZ-1000S (manufactured by Otsuka Electronics Co., Ltd.) at 25°C. The refractive index of the solvent (water) was 1.3328 and the viscosity of the solvent (water) was 0.8878 mPa·s.

### Solid concentration

In an air dryer, 1 g of the pretreatment aqueous dispersion or white aqueous dispersion was dried at a condition of 150°C for 60 minutes, and the ratio of the mass of the non-volatile matter to the mass of the pretreatment aqueous dispersion or white aqueous dispersion (1 g) was expressed by percentage and taken as the solid concentration thereof.

In Examples, a homopolymer of a monomer (modifying monomer a) represented by the following formula:

$$CH_2{=}CF(CF_2OCFCF_3COONH_4)$$

was used. The homopolymer had a number average molecular weight of 90,000 and a weight average molecular weight of 190,000, and is hereinafter referred to as polymer A.

The number average molecular weight and the weight average molecular weight were calculated by performing measurement by gel permeation chromatography (GPC) by using a GPC HLC-8020 manufactured by Tosoh Corporation and columns (one GPC KF-801, one GPC KF-802, and two GPC KF-806M were connected in series) manufactured by Shodex Corporation, and flowing tetrahydrofuran (THF) as a solvent at a flow rate of 1 ml/min, with reference to monodispersed polystyrene as a standard.

### Example 1

A fluoropolymer aqueous dispersion of PTFE (pretreatment aqueous dispersion) having an average primary particle size of about 220 nm and a solid concentration of 23.3% by mass was obtained by emulsion polymerization of TFE using 3,000 ppm (ppm by mass) of the polymer A based on an aqueous medium.

To 156.4 g of gray aqueous dispersion (pretreatment aqueous dispersion), 1.82 g of a nonionic surfactant (T-Det A138, manufactured by Hacros Chemicals) was added. 0.72 g of a nonionic surfactant (T-Det A138, manufactured by Hacros Chemicals) was added to every 156.4 g of pure water to prepare additional water. The aqueous dispersion was brought into contact with a microfiltration membrane (made of polyethylene, inner diameter: 0.7 mm, length: 130 mm,

average pore size: 0.1 μm, effective membrane area: 150 $cm^2$) under the conditions with a water pressure of 0.1 MPa and a temperature of 25°C to perform microfiltration. Using the additional water, the microfiltration was continued until 782 g of filtrate was finally eluted. As a result, 205.1 g of white aqueous dispersion (fluoropolymer aqueous dispersion) with a solid concentration of 16.9% by weight was obtained. NMR analysis was carried out on the obtained fluoropolymer aqueous dispersion, and it was found that the extractable amount of polymer A in the fluoropolymer aqueous dispersion was 753 ppm by mass.

The quartz cells was filled with gray aqueous dispersion (pretreatment aqueous dispersion), the cells having 1 cm each in length and width, and the lightness L* was measured using an X-rite colorimeter. The lightness L* at this time was 83.42.

In the same way as the fluoropolymer aqueous dispersion before performing the microfiltration (pretreatment aqueous dispersion), the quartz cells was filled with the fluoropolymer aqueous dispersion after performing the microfiltration the cells having 1 cm each in length and width, and the lightness L* was measured using an X-rite colorimeter. The lightness L* at this time was 99.02.

## Claims

1. A method for producing a fluoropolymer aqueous dispersion, comprising a step (A) of performing ultrafiltration, microfiltration, or dialysis membrane treatment, or a combination thereof on a pretreatment aqueous dispersion containing a fluoropolymer obtained by polymerization in the presence of a polymer (I) comprising a polymerized unit derived from a monomer of formula (I) and having a number average molecular weight of $\geq 0.3 \times 10^4$ as measured by GPC in accordance with the method disclosed in the description :

   $$CX^1X^3{=}CX^2R(\text{-}CZ^1Z^2\text{-}A^0)_m \qquad (I)$$

   wherein $X^1$ and $X^3$ each independently are F, Cl, H or $CF_3$; $X^2$ is H, F or optionally fluorinated alkyl; $A^0$ is an anionic group; R is a linking group; $Z^1$ and $Z^2$ each independently are H, F or optionally fluorinated alkyl; and m is an integer of ≥ 1;
   with the fluoropolymer being different from polymer (I),
   wherein at least microfiltration is performed in the step (A).

2. The method of claim 1, wherein step (A) is performed at a temperature of ≥ 3°C.

3. The method of claim 1, wherein the microfiltration is carried out using a microfiltration membrane having an average pore size of ≥ 0.05 μm, preferably ≥ 0.075 μm, more preferably ≥ 0.10 μm, and even more preferably ≥ 0.15 μm.

4. The method of claim 1, wherein the microfiltration is carried out at a pressure of ≥ 0.01 MPa.

5. The method of any of claims 1-4, wherein step (A) comprises ultrafiltration carried out at a pressure of ≥ 0.01 MPa.

6. The method of any of claims 1-5, comprising a step (B) of adding a hydrocarbon surfactant to the pretreatment aqueous dispersion before step (A).

7. The method of claim 6, wherein the hydrocarbon surfactant is a nonionic surfactant.

8. The method of claim 6 or 7, wherein the hydrocarbon surfactant is at least one nonionic surfactant selected from the compounds of formula (i) or (ii):

   $$R^3\text{-}O\text{-}A^1\text{-}H \qquad (i)$$

   wherein $R^3$ is linear or branched, primary or secondary $C_{8\text{-}18}$-alkyl, and $A^1$ is polyoxyalkylene; and

   $$R^4\text{-}C_6H_4\text{-}O\text{-}A^2\text{-}H \qquad (ii)$$

   wherein $R^4$ is linear or branched, primary or secondary $C_{4\text{-}12}$-alkyl, and $A^2$ is polyoxyalkylene.

9. The method of any of claims 1-8, wherein the fluoropolymer is a polytetrafluoroethylene, a tetrafluoroethylene/hexafluoropropylene copolymer, or a tetrafluoroethylene/perfluoro(alkyl vinyl ether) copolymer.

10. The method of any of claims 1-9, wherein the fluoropolymer is a polytetrafluoroethylene.

**Patentansprüche**

1. Verfahren zur Herstellung einer wässrigen Fluorpolymer-Dispersion, umfassend einen Schritt (A) der Durchführung von Ultrafiltration, Mikrofiltration oder einer Dialysemembran-Behandlung, oder einer Kombination davon, an einer wässrigen Vorbehandlungsdispersion, die ein Fluorpolymer enthält, das durch Polymerisation in Gegenwart eines Polymers (I) erhalten wird, welches eine polymerisierte Einheit umfasst, die von einem Monomer der Formel (I) abgeleitet ist und ein zahlenmittleres Molekulargewicht von $\geq 0{,}3 \times 10^4$ aufweist, gemessen durch GPC gemäß dem in der Beschreibung offenbarten Verfahren:

$$CX^1X^3=CX^2R(-CZ^1Z^2-A^0)_m \qquad (I)$$

worin $X^1$ und $X^3$ jeweils unabhängig F, Cl, H oder $CF_3$ sind; $X^2$ H, F oder optional fluoriertes Alkyl ist; $A^0$ eine anionische Gruppe ist; R eine Verbindungsgruppe ist; $Z^1$ und $Z^2$ jeweils unabhängig H, F oder optional fluoriertes Alkyl sind; und m eine ganze Zahl von $\geq 1$ ist;
wobei das Fluorpolymer sich von dem Polymer (I) unterscheidet, wobei in dem Schritt (A) mindestens eine Mikrofiltration durchgeführt wird.

2. Verfahren nach Anspruch 1, bei dem Schritt (A) bei einer Temperatur von $\geq 3$°C durchgeführt wird.

3. Verfahren nach Anspruch 1, bei dem die Mikrofiltration unter Verwendung einer Mikrofiltrationsmembran mit einer durchschnittlichen Porengröße von $\geq 0{,}05$ µm, vorzugsweise $\geq 0{,}075$ µm, noch bevorzugter $\geq 0{,}10$ µm, und noch bevorzugter $\geq 0{,}15$ µm durchgeführt wird.

4. Verfahren nach Anspruch 1, bei dem die Mikrofiltration bei einem Druck von $\geq 0{,}01$ MPa durchgeführt wird.

5. Verfahren nach mindestens einem der Ansprüche 1-4, bei dem Schritt (A) Ultrafiltration umfasst, die bei einem Druck von $\geq 0{,}01$ MPa durchgeführt wird.

6. Verfahren nach mindestens einem der Ansprüche 1-5, umfassend einen Schritt (B) der Zugabe eines Kohlenwasserstoff-Tensids zu der wässrigen Vorbehandlungsdispersion vor Schritt (A).

7. Verfahren nach Anspruch 6, bei dem das Kohlenwasserstoff-Tensid ein nichtionisches Tensid ist.

8. Verfahren nach Anspruch 6 oder 7, bei dem das Kohlenwasserstoff-Tensid mindestens ein nichtionisches Tensid ist, ausgewählt aus den Verbindungen der Formel (i) oder (ii)

$$R^3-O-A^1-H \qquad (i)$$

worin $R^3$ lineares oder verzweigtes, primäres oder sekundäres $C_{8-18}$-Alkyl ist, und $A_1$ Polyoxyalkylen ist; und

$$R^4-C_6H_4-O-A^2-H \qquad (ii)$$

worin $R^4$ lineares oder verzweigtes, primäres oder sekundäres $C_{4-12}$-Alkyl ist und $A^2$ Polyoxyalkylen ist.

9. Verfahren nach mindestens einem der Ansprüche 1-8, bei dem das Fluorpolymer ein Polytetrafluorethylen, ein Tetrafluorethylen/Hexafluorpropylen-Copolymer oder ein Tetrafluorethylen/Perfluor(alkylvinylether)-Copolymer ist.

10. Verfahren nach mindestens einem der Ansprüche 1-9, bei dem das Fluorpolymer ein Polytetrafluorethylen ist.

## Revendications

1. Procédé de production d'une dispersion aqueuse de fluoropolymère, comprenant une étape (A) de mise en oeuvre d'une ultrafiltration, d'une microfiltration ou d'un traitement par membrane de dialyse, ou une combinaison de ceux-ci, sur une dispersion aqueuse de prétraitement contenant un fluoropolymère obtenu par polymérisation en présence d'un polymère (I) comprenant un motif de polymérisation dérivé d'un monomère de formule (I) et ayant un poids moléculaire moyen en nombre $\geq 0,3 \times 10^4$ tel que mesuré par CPG conformément au procédé divulgué dans la description :

$$CX^1X^3=CX^2R(-CZ^1Z^2-A^0)_m \qquad (I)$$

dans lequel $X^1$ et $X^3$ sont chacun indépendamment F, Cl, H ou $CF_3$ ; $X^2$ est H, F ou facultativement un alkyle fluoré ; $A^0$ est un groupe anionique ; R est un groupe de liaison ; $Z^1$ et $Z^2$ sont chacun indépendamment H, F ou facultativement un alkyle fluoré ; et m est un nombre entier $\geq 1$ ;
le fluoropolymère étant différent du polymère (I),
dans lequel au moins une microfiltration est mise en oeuvre au cours de l'étape (A).

2. Procédé selon la revendication 1, dans lequel l'étape (A) est mise en oeuvre à une température $\geq 3$ °C.

3. Procédé selon la revendication 1, dans lequel la microfiltration est réalisée à l'aide d'une membrane de microfiltration ayant une taille de pore moyenne $\geq 0,05$ µm, préférablement $\geq 0,075$ µm, plus préférablement $\geq 0,10$ µm, et encore plus préférablement $\geq 0,15$ µm.

4. Procédé selon la revendication 1, dans lequel la microfiltration est réalisée à une pression $\geq 0,01$ MPa.

5. Procédé selon l'une quelconque des revendications 1 à 4, dans lequel l'étape (A) comprend une ultrafiltration réalisée à une pression $\geq 0,01$ MPa.

6. Procédé selon l'une quelconque des revendications 1 à 5, comprenant une étape (B) d'ajout d'un tensioactif hydrocarboné à la dispersion aqueuse de prétraitement avant l'étape (A).

7. Procédé selon la revendication 6, dans lequel le tensioactif hydrocarboné est un tensioactif non ionique.

8. Procédé selon la revendication 6 ou la revendication 7, dans lequel le tensioactif hydrocarboné est au moins un tensioactif non ionique sélectionné parmi les composés de formule (i) ou (ii) ;

$$R^3\text{-O-}A^1\text{-H} \qquad (i)$$

dans lequel $R^3$ est un alkyle en $C_{8-18}$ primaire ou secondaire linéaire ou ramifié, et $A^1$ est un polyoxyalkylène ; et

$$R^4\text{-}C_6H_4\text{-O-}A^2\text{-H} \qquad (ii)$$

dans lequel $R^4$ est un alkyle en $C_{4-12}$ primaire ou secondaire linéaire ou ramifié, et $A^2$ est un polyoxyalkylène.

9. Procédé selon l'une quelconque des revendications 1 à 8, dans lequel le fluoropolymère est un polytétrafluoroéthylène, un copolymère de tétrafluoroéthylène/hexafluoropropylène, ou un copolymère de tétrafluoroéthylène/perfluoro(éther vinylique d'alkyle).

10. Procédé selon l'une quelconque des revendications 1 à 9, dans lequel le fluoropolymère est un polytétrafluoroéthylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018167190 A1
- EP 0911357 A1
- JP 11181009 A
- WO 2006523758 A
- WO 2014099453 A
- WO 2010075497 A
- WO 2010075496 A
- WO 2011008381 A
- WO 2009055521 A
- WO 1987007619 A
- JP 61293476 A
- WO 2010075494 A
- WO 2010075359 A
- WO 2012082454 A
- WO 2006119224 A
- WO 2013085864 A
- WO 2012082707 A
- WO 2012082703 A
- WO 2012082451 A
- WO 2006135825 A
- WO 2004067588 A
- WO 2009068528 A
- JP 2004075978 A
- JP 2001226436 A
- WO 1992017635 A
- WO 2014069165 A
- US 7897682 B, Brothers
- US 7977438 B, Brothers
- WO 2011014715 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- WO 2007119526 A
- WO 2007046482 A
- WO 2007046345 A
- US 20140228531
- WO 2013189824 A
- WO 2013189826 A
- JP 61049327 A
- WO 2005527652 A
- WO 2012002038 A
- JP 11049912 A
- US 5804654 A
- JP 11029679 A
- JP 2003002980 A
- JP 2827152 B
- JP 2538783 B
- WO 2007004250 A
- WO 2007000812 A
- JP 10147617 A
- WO 0001741 A
- WO 9724381 A
- JP 61057324 A
- JP 4081608 A
- JP 5013961 A
- WO 2013146950 A
- WO 2013146947 A
- WO 2011520020 A
- US 200715937
- US 200725902
- US 200727251


### Non-patent literature cited in the description


- **KASAI**. *J. Appl. Polymer Sci.*, 1995, vol. 57, 797
- **ROMPP**. Lexikon Chemie. Georg Thieme Verlag, 1999